(19) Europäisches Patentamt
European Patent Office
Office européen des brevets

(11) **EP 1 991 728 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(51) Int Cl.:
*D04H 1/54* (2012.01)       *B32B 5/08* (2006.01)
*A43B 13/12* (2006.01)

(21) Anmeldenummer: 07723014.2

(22) Anmeldetag: **02.03.2007**

(86) Internationale Anmeldenummer:
**PCT/EP2007/001819**

(87) Internationale Veröffentlichungsnummer:
**WO 2007/101624 (13.09.2007 Gazette 2007/37)**

(54) **SCHUHSTABILISIERUNGSMATERIAL UND AUFGEBAUT DAMIT BARRIEREEINHEIT, SCHUHSOHLENVERBUND UND SCHUHWERK**

SHOE REINFORCING MATERIAL AND BARRIER UNIT, COMPOSITE SHOE SOLE AND FOOTWEAR CONSTITUTED THEREOF

MATIÈRE STABILISANTE POUR CHAUSSURES ET UNITÉ BARRIÈRE, SEMELLE COMPOSITE ET CHAUSSURE CONSTITUÉES DE CETTE MATIÈRE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.03.2006   DE 102006009974**
**29.11.2006   DE 202006018138 U**
**17.01.2007   DE 202007000668 U**

(43) Veröffentlichungstag der Anmeldung:
**19.11.2008   Patentblatt 2008/47**

(73) Patentinhaber: **W.L. Gore & Associates GmbH**
**85640 Putzbrunn (DE)**

(72) Erfinder:
• **PEIKERT, Marc**
  **82515 Wolfratshausen (DE)**
• **HÜBNER, Thorger**
  **83126 Flintsbach (DE)**

(74) Vertreter: **Klunker . Schmitt-Nilson . Hirsch**
**Patentanwälte**
**Destouchesstrasse 68**
**80796 München (DE)**

(56) Entgegenhaltungen:
EP-A- 1 300 511          DE-U1-202004 000 307
US-A1- 2004 071 947      US-A1- 2005 160 711

**Beschreibung**

Die Erfindung betrifft Schuhstabilisierungsmaterial zum Einsatz in Schuhwerk, eine mit solchem Schuhstabilisierungsmaterial aufgebaute Barriereeinheit, einen mit solchem Schuhstabilisierungsmaterial oder der Barriereeinheit aufgebauten Schuhsohlenverbund, mit einem solchen Schuhsohlenverbund aufgebautes Schuhwerk und ein Verfahren zur Herstellung von solchem Schuhwerk.

Die Notwendigkeit, sich alternativ entweder für einen wasserdichten, jedoch Schwitzfeuchtigkeit stauenden oder für einen für Schwitzfeuchtigkeit durchlässigen jedoch auch wasserdurchlässigen Schuhbodenaufbau entscheiden zu müssen, besteht nicht mehr, seit es Schuhbodenaufbauten gibt, die trotz Wasserdampfdurchlässigkeit wasserdicht sind, und zwar aufgrund der Verwendung einer perforierten oder mit Durchbrechungen versehenen Laufsohle und einer darüber angeordneten wasserdichten, wasserdampfdurchlässigen Funktionsschicht, beispielsweise in Form einer Membran. Beispiele zeigen die Dokumente EP 0 275 644 A2, EP 0 382 904 A2, EP 1 506 72369 A2, EP 0 858 270 B1, DE 100 36 100 C1, EP 959704 B1, WO 2004/028 284 A1, DE 20 2004 08539 U1 und WO 2005/065479 A1.

Da der menschliche Fuß eine starke Schwitzneigung hat, geht das Bestreben der vorliegenden Erfindung dahin, Schuhwerk verfügbar zu machen, das einen Schuhbodenaufbau mit einer besonders hohen Wasserdampfdurchlässigkeit aufweist, ohne dessen Stabilität zu stark zu beeinträchtigen.

Bei Schuhwerk mit einer Laufsohle mit klein bemessenen Durchbrechungen gemäß EP 0 382 904 A2 kann man zwar eine ausreichende Stabilität des Sohlenaufbaus mit normal steifem Laufsohlenmaterial erreichen, allerdings bei nur mäßiger Wasserdampfdurchlässigkeit des Schuhbodens.

Sohlenaufbauten gemäß EP 959 704 B1 und WO 2004/028 284 A1, die zugunsten einer höheren Wasserdampfdurchlässigkeit eine Laufsohle aufweisen, die neben einer Anzahl separater Laufsohlenstollen im wesentlichen nur aus einem Umfangsrahmen besteht für die Einfassung von wasserdampfdurchlässigem Material, welches eine darüber befindliche Membran vor dem Hindurchtreten von Fremdkörpern wie kleinen Steinchen schützen soll, jedoch selbst nicht sonderlich stabil ist, erbringen nicht einen Grad an Stabilisierung des Sohlenaufbaus, wie er für viele Schuhwerkarten erwünscht ist.

Ähnlich verhält es sich bei Sohlenaufbauten gemäß DE 20 2004 08539 U1 und WO 2005/065479 A1, bei welchen in großflächige Durchbrechungen der Laufsohle wasserdichte, wasserdampfdurchlässige Einsätze eingesetzt sind, die eine die jeweilige Durchbrechung wasserdicht abdeckende Membran und darunter ein als Schutz der Membran gegen das Hineindrücken von Fremdkörpern dienendes Lamellengitter aufweisen. Da sowohl die Membran als auch das Lamellengitter aus relativ weichem Material bestehen, sodass sie zur Stabilisierung des Sohlenaufbaus kaum einen Beitrag leisten können, ist an den Stellen der großflächigen Durchbrechungen die Stabilität des Sohlenaufbaus geschwächt.

Eine bessere Stabilisierung des Schuhbodenaufbaus ist bei einem Sportschuh gemäß DE 100 36 100 C1, dessen Laufsohle aus Laufsohlenteilen mit großflächigen Durchbrechungen gebildet ist, dadurch erreicht worden, dass die Laufsohlenteile an der Unterseite einer aus druckfestem Kunststoff bestehenden Trägerschicht angeordnet sind, die an den Stellen, die über den großflächigen Durchbrechungen der Laufsohlenteile liegen, mit gitterartigen Öffnungen versehen ist und somit wie die Laufsohlenteile wasserdampfdurchlässig ist. Zwischen der Trägerschicht und einer darüber befindlichen, zum Zweck von Wasserdampfdurchlässigkeit mit Durchgangslöchern versehenen Innensohle ist eine Membran angeordnet, mit der nicht nur Wasserdichtigkeit bei Wasserdampfdurchlässigkeit ereicht werden soll sondern die auch verhindern soll, dass kleine Steinchen, welche die Gitteröffnungen der Trägerschicht nicht abhalten können, in den Schuhinnenraum eindringen. Die durch mechanische Einwirkungen leicht verletzliche Membran soll also einen Schutz bieten, den sie eigentlich selbst benötigt.

Andere Lösungen, beispielsweise gemäß EP 1 506 723 A2 und EP 0 858 270 B1, sehen unterhalb der Membran eine Schutzschicht als Schutz gegen das Vordringen von durch eine perforierte Laufsohle gelangten Fremdkörpern wie Steinchen zu der Membran vor.

Bei Ausführungsformen der EP 1 506 723 A2 sind die Membran und die Schutzschicht mittels einer Punktklebung, d.h. mittels eines als Punktmatrix aufgebrachten Klebstoffmusters, miteinander verbunden. Nur der nicht von Klebstoff bedeckte Flächenanteil der Membran steht für einen Wasserdampftransport noch zur Verfügung. Dabei bilden die Membran und die Schutzschicht einen Klebeverbund, der entweder mit einer Laufsohle einen Sohlenverbund bildet, der als solcher an dem Schaftboden des Schuhwerks befestigt wird, oder einen Teil des Schaftbodens bildet, an dem dann nur noch eine Laufsohle zu befestigen ist.

Bei einer anderen Ausführungsform der EP 1 506 723 A2 ist die Laufsohle dickenmäßig zweigeteilt, sind beide Laufsohlenlagen mit miteinander fluchtenden Perforationen relativ kleinen Durchmessers versehen und ist die Schutzschicht zwischen den beiden Laufsohlenlagen angeordnet. Die Membran befindet sich beim fertigen Schuhwerk auf der Oberseite dieser Laufsohle. Da nur der Perforationsflächenanteil dieser Laufsohle für einen Wasserdampfdurchgang zur Verfügung steht, kann sich nur ein entsprechend kleiner Anteil der Membranfläche für den Wasserdampfdurchgang auswirken. Außerdem hat sich erwiesen, dass stehende Luftvolumina den Wasserdampftransport behindern. Solche stehenden Luftvolumina bilden sich in den Perforationen dieser Laufsohle und deren Beseitigung durch Luftzirkulation durch die Laufsohle hindurch wird durch die Schutzschicht beeinträchtigt. Zu dem Effekt, dass diejenigen Flächenanteile der Membran, die außerhalb der Perforationen der Laufsohle liegen und einen beträchtlichen Anteil der Membrangesamtfläche ausmachen, sich hinsichtlich des Wasserdampftransports nicht auswirken können, kommt somit noch hinzu, dass sich auch die den Perforationen gegenüberliegenden Flächenanteile der Membran hinsichtlich des Wasserdampftransports nur eingeschränkt auswirken können.

Aus WO 2005/063069 A2 ist ein Schuhsohlenverbund bekannt, dessen Laufsohle mit Durchbrechungen versehen und damit wasserdampfdurchlässig gemacht ist. Wasserdichtigkeit trotz dieser Durchbrechungen wird erreicht mittels einer durch Plasmaniederschlag aufgebrachten wasserdichten und atmungsaktiven Beschichtung auf der Oberseite einer über der Laufsohle angeordneten. Lage aus einem Filz, Vlies, Textil oder Netz oder mittels einer oberhalb dieser Lage angeordneten wasserdichten, wasserdampfdurchlässige Membran.

Aus DE 2 279 138 sind Versteifungskappen, wie sie bei Schuhen im Fersenbereich und auch im Schuhspitzenbereich von Schuhschäften Verwendung finden, aus einem Schmelzfaserverbund bekannt.

Aus EP 0 754 414 A2 ist eine Einlegesohle, die eine stützende Funktion im Sinne eines Fußbettes haben soll, aus einem Schmelzfaserverbund bekannt, die eine bakterizide Ausrüstung aufweist.

US 6 723 428 offenbart eine Variante einer Einlegesohle gemäß EP 0 754 414 A2 aus einem Schmelzfaserverbund, wobei eine anti-mikrobielle Eigenschaft dadurch erreicht wird, dass eine thermisch aktivierbare Faserkomponente des Schmelzfaserverbundes als Träger für ein antimikrobielles Mittel benutzt wird.

Es ist heutzutage bei der Herstellung von Schuhwerk gängige Arbeitsteilung, dass ein Hersteller den Schuhschaft herstellt und ein anderer Hersteller für die Herstellung der zugehörigen Schuhsohle oder des zugehörigen Schuhsohlenverbundes oder für deren Anspritzen an den Schuhschaft zuständig ist. Da die Hersteller für Schuhsohlen üblicherweise weniger für den Umgang mit wasserdichten, wasserdampfdurchlässigen Membranen ausgerüstet und erfahren sind, sind Schuhbodenkonzepte erstrebenswert, bei welchen der Schuhsohlenverbund als solcher frei von einer Membran ist und die Membran einen Teil des Schaftbodens bildet, an dem der Schuhsohlenverbund angeordnet wird.

Es ist daher eine Aufgabe der vorliegenden Erfindung, für Schuhwerk, das einen Schuhbodenaufbau mit dauerhafter Wasserdichtigkeit und mit einer besonders hohen Wasserdampfdurchlässigkeit unter Erlangung einer möglichst hohen Stabilität des Schuhbodenaufbaus aufweist, geeignete Schuhbodenkomponenten sowie damit aufgebautes Schuhwerk verfügbar zu machen.

Zur Lösung dieser Aufgabe macht die Erfindung verfügbar eine wasserdampfdurchlässige Barriereneinheit gemäß Anspruch 1, einen wasserdampfdurchlässigen Schuhsohlenverbund gemäß Anspruch 9, ein Schuhwerk gemäß Anspruch 12 und ein Verfahren zur Herstellung von Schuhwerk gemäß Anspruch 14. Weiterbildungen dieser Gegenstände und Verfahren sind in den je zugehörigen abhängigen Ansprüchen angegeben.

Gemäß einem ersten Aspekt der Erfindung wird für die erfindungsgemäße Barriereneinheit ein Schuhstabilisierungsmaterial verfügbar gemacht, aufweisend einen Faserverbund mit einer ersten Faserkomponente und einer zwei Faseranteile aufweisenden zweiten Faserkomponente, wobei die erste Faserkomponente eine erste Schmelztemperatur und einen darunter liegenden ersten Erweichungstemperaturbereich aufweist und ein zweiter Faseranteil der zweiten Faserkomponente eine zweite Schmelztemperatur und einen darunter liegenden zweiten Erweichungstemperaturbereich aufweist, die erste Schmelztemperatur und der erste Erweichungstemperaturbereich höher sind als die zweite Schmelztemperatur und der zweite Erweichungstemperaturbereich, der erste Faseranteil der zweiten Faserkomponente eine höhere Schmelztemperatur und eine höhere darunter liegende Erweichungstemperatur als der zweite Faseranteil aufweist, und der Faserverbund infolge thermischer Aktivierung des zweiten Faseranteils der zweiten Faserkomponente mit einer im zweiten Erweichungstemperaturbereich liegenden Klebeerweichungstemperatur thermisch verfestigt ist unter Aufrechterhaltung von Wasserdampfdurchlässigkeit im thermisch verfestigten Bereich.

Unter der Schmelztemperatur versteht man auf dem Gebiet der Polymer- bzw. Faserstrukturen einen schmalen Temperaturbereich, in dem die kristallinen Bereiche der Polymer- bzw. Faserstruktur aufschmelzen und das Polymer in den flüssigen Zustand übergeht. Er liegt über dem Erweichungstemperaturbereich und ist eine wesentliche Kenngröße für teilkristalline Polymere. Unter dem Erweichungstemperaturbereich versteht man auf dem Gebiet der Synthesefasern einen vor dem Erreichen des Schmelzpunktes auftretenden Temperaturbereich von unterschiedlicher Bandbreite, bei welchem eine Erweichung, jedoch noch kein Schmelzen auftritt.

Diese Eigenschaft wird bei dem erfindungsgemäßen Schuhstabilisierungsmaterial dahin gehend ausgenutzt, dass für die beiden Faserkomponenten des Faserverbundes eine solche Materialauswahl erfolgt, dass die erfindungsgemäßen Verhältnisse hinsichtlich der Schmelztemperaturen und Erweichungstemperaturbereiche für die beiden Faserkomponenten und Faseranteile erfüllt sind, und für die thermische Verfestigung eine Temperatur gewählt wird, welche für den zweiten Faseranteil der zweiten Faserkomponente eine Klebeerweichungstemperatur darstellt, bei welcher es zu einer Erweichung dieses Faseranteils der zweiten Faserkomponente kommt, bei welcher dessen Material Klebewirkung entfaltet, derart, dass mindestens ein Teil der Fasern der zweiten Faserkomponente miteinander soweit durch Verklebung thermisch verfestigt wird, dass es zu einer Verfestigungsstabilisierung des Faserverbundes kommt, die über derjenigen Verfestigung liegt, die man bei einem Faserverbund mit den gleichen Materialien für die beiden Faserkomponenten durch eine rein mechanische Verfestigung, beispielsweise durch Vernadelungsverfestigung des Faserverbundes, erhält. Die Klebeerweichungstemperatur kann auch so gewählt werden, dass eine Erweichung des zweiten Faseranteils der zweiten Faserkomponente in solchem Maße erfolgt, dass eine Verklebung nicht nur von zweiten Faseranteilen der zweiten Faserkomponente miteinander sondern zusätzlich ein teilweises oder gänzliches Ummanteln von einzelnen Stellen der Fasern der ersten Faserkomponente mit erweichtem Material des zweiten Faseranteils der zweiten Faserkomponente entsteht, also eine teilweise oder gänzliche Einbettung solcher Stellen von Fasern der ersten Faserkomponente in Material des zweiten Faseranteils der zweiten Faserkomponente, wodurch eine entsprechend erhöhte Stabilisierungsverfestigung des Faserverbundes entsteht. Dies gilt auch für den Fall, dass es sich bei der zweiten Faserkomponente um eine Faserstruktur mit zwei axial verlaufenden, Seite-an-Seite angeordneten Faseranteilen handelt, von denen einer eine höhere Schmelztemperatur und einen höheren Erweichungstemperaturbereich und der andere eine niedrigere Schmelztemperatur und einen niedrigeren Erweichungstemperaturbereich aufweist. Dann kann es bei einer Klebeerweichung des zweiten Faseranteils der zweiten Faserkomponente in dem genannten Ausmaß zu einem teilweisen oder gänzlichen Ummanteln nicht nur von einzelnen Stellen der Fasern der ersten Faserkomponente sondern auch des ersten Faseranteils der zweiten Faserkomponente kommen.

Durch zusätzliche Verpressung des Faserverbundes während oder nach der Klebeerweichung des zweiten Faseranteils der zweiten Faserkomponente kann eine zusätzliche Stabilisierungserhöhung erreicht werden, bei welcher die teilweise oder gänzliche Einbettung von Faserstellen in erweichtes Material des zweiten Faseranteils der zweiten Faserkomponente noch intensiviert wird. Die durch Einsatz der Klebeerweichungstemperatur erreichte thermische Verklebung des Faserverbundes ist andererseits so zu wählen, dass sich ausreichende Wasserdampfdurchlässigkeit des Faserverbundes ergibt, d.h. die Faserverklebungen immer nur auf Einzelverklebungsstellen beschränkt bleiben, sodass ausreichend unverklebte Stellen für den Wasserdampftransport verbleiben. Die Auswahl der Klebeerweichungstemperatur kann je nach erwünschten Anforderungen der jeweiligen praktischen Ausführungsform, insbesondere hinsichtlich der Stabilitätseigenschaften und der Wasserdampfdurchlässigkeit, erfolgen.

Die Wahl - anders als bei der vorliegenden Erfindung - von zwei Faserkomponenten, von denen eine die höhere erste Schmelztemperatur und den höheren ersten Erweichungstemperaturbereich aufweist und die andere insgesamt die niedrigere zweite Schmelztemperatur und den niedrigeren zweiten Erweichungstemperaturbereich, ergibt einen Faserverbund mit geringerer Stabilität. Denn einerseits sind Fasern mit geringerer Schmelztemperatur und niedrigerem Erweichungstemperaturbereich im Allgemeinen mechanisch weniger fest und stabil als Fasern mit höherer Schmelztemperatur und höherem Erweichungstemperaturbereich. Andererseits kann es während der Klebeerweichung zu einer zusätzlichen mechanischen Schwächung der Faserkomponente mit der niedrigeren Schmelztemperatur kommen, beispielsweise durch Verringerung des Faserquerschnitts infolge von Zugkräften, die während des Klebeerweichungsvorgangs auftreten können.

Da erfindungsgemäß beide Faserkomponenten mit Fasermaterial mit einer höheren ersten Schmelztemperatur und einem höheren ersten Erweichungstemperaturbereich aufgebaut sind, die erste Faserkomponente insgesamt und bei der zweiten Faserkomponente der eine Faseranteil, und nur der andere Faseranteil der zweiten Faserkomponente die niedrigere zweite Schmelztemperatur und den niedrigeren zweiten Erweichungstemperaturbereich aufweist, bewahren beide Faserkomponenten eine durch das Fasermaterial mit der höheren Schmelztemperatur und dem höheren Erweichungstemperaturbereich geprägte mechanische Stabilität, mit dem Ergebnis eines mechanisch besonders stabilen Faserverbundes. Somit bilden die erste Faserkomponente und der erste Faseranteil der zweiten Faserkomponente je eine stabilisierende Trägerkomponente, wobei nur der zweite Faseranteil der zweiten Faserkomponente die Verfestigungskomponente des Barrierematerials bildet.

Durch Auswahl bestimmter Materialien für die beiden Faserkomponenten und durch Auswahl des thermischen Verfestigungsgrades des Faserverbundes kann eine gewünschte Stabilisierung des Faserverbundes gegenüber seinem Zustand vor der thermischen Verfestigung erreicht werden, bei Aufrechterhaltung von Wasserdampfdurchlässigkeit. Durch diese thermische Verfestigung erreicht der Faserverbund eine Festigkeit, aufgrund welcher er besonders als Schuhstabilisierungsmaterial geeignet ist, das insbesondere an Stellen im Schuhboden von Schuhwerk Einsatz findet, an welchen es auf Wasserdampfdurchlässigkeit ankommt. Beispiele für den Einsatz des erfindungsgemäßen Schuhstabilisierungsmaterials im Bereich des Schuhbodens sind Einlegesohlen, Brand- oder Schaftmontagesohlen und Schutzschichtlagen.

Aufgrund seiner thermischen Verfestigung und der damit erreichten Stabilität eignet sich das erfindungsgemäße Schuhstabilisierungsmaterial insbesondere als Zwischenlage in einem Schuhsohlenverbund mit großflächigen Durchbrechungen zum Erhalt einer hohen Wasserdampfdurchlässigkeit, insbesondere als Barrierematerial zum Schutz einer darüber befindlichen Membran gegen das Hindurchdrücken von Fremdkörpern wie Steinchen durch eine solche Durchbrechung bis zu der Membran.

Anders als bei einem herkömmlichen im Schuhbodenbereich verwendeten vliesartigen Faserverbund, der mit einer einzigen Faserkomponente aufgebaut ist, die komplett angeschmolzen und thermisch verpresst wird beim Versuch der thermischen Verfestigung, kann man bei dem erfindungsgemäßen Schuhstabilisierungsmaterial durch Auswahl der Materialien für die zwei Faserkomponenten und durch die für die thermische Verfestigung gewählten Parameter Freiheitsgrade nutzen, mittels welchen der Grad der gewünschten Stabilität sowie der Grad der Wasserdampfdurchlässigkeit eingestellt werden kann. Durch das Erweichen des Faseranteils mit der niedrigeren Schmelztemperatur werden nicht nur die Fasern dieses Faseranteils gegeneinander fixiert, sondern bei dem thermischen Verfestigungsvorgang kommt es auch zu einer Fixierung der Fasern der ersten Faserkomponente sowie des ersten Faseranteils der zweiten Faserkomponente mit der höheren Schmelztemperatur, was zu einer besonders guten mechanischen Verfestigung und Stabilität des Faserverbundes führt. Durch Wahl des Verhältnisses zwischen den Fasern mit der höheren Schmelztemperatur und dem Faseranteil mit der niedrigeren Schmelztemperatur sowie durch Wahl der Klebeerweichungstemperatur und damit des Erweichungsgrades können Eigenschaften des Schuhstabilisierungsmaterials eingestellt werden wie Luftdurchlässigkeit, Wasserdampfdurchlässigkeit und mechanische Stabilität des Schuhstabilisierungsmaterials.

Bei einer Ausführungsform des erfindungsgemäßen Schuhstabilisierungsmaterials ist dessen Faserverbund ein textiles Flächengebilde, das ein Gewebe, ein Gewirke, ein Gestricke, ein Vlies, ein Filz, ein Netz oder ein Gelege sein kann. Bei einer praktischen Ausführungsform handelt es sich bei dem Faserverbund um ein mechanisch gefestigtes Vlies, wobei die mechanische Verfestigung durch Vernadeln des Faserverbundes erreicht werden kann. Zur mechanischen Verfestigung des Faserverbundes kann auch eine Wasserstrahlverfestigung eingesetzt werden, bei welcher anstelle echter Nadeln Wasserstrahlen zur mechanisch verfestigenden Verwirrung der Fasern des Faserverbundes eingesetzt werden.

Bei dem erfindungsgemäßen Schuhstabilisierungsmaterial bilden die erste Faserkomponente und der erste Faseranteil der zweiten Faserkomponente je eine Trägerkomponente und bildet der zweite Faseranteil der zweiten Faserkomponente eine Verfestigungskomponente des Schuhstabilisierungsmaterials.

Die Auswahl der Materialien für die Faserkomponenten wird bei einer Ausführungsform derart gewählt, dass der die niedrigere Schmelztemperatur und den niedrigeren Erweichungstemperaturbereich aufweisende zweite Faseranteil der zweiten Faserkomponente bei einer Temperatur im Bereich zwischen 80°C und 230°C für eine Klebeerweichung aktivierbar ist.

Bei einer Ausführungsform der Erfindung liegt der zweite Erweichungstemperaturbereich zwischen 60°C und 220°C.

Insbesondere im Hinblick darauf, dass Schuhwerk und vorwiegend dessen Sohlenaufbau bei der Herstellung häufig relativ hohen Temperaturen ausgesetzt werden, beispielsweise beim Anspritzen einer Laufsohle, sind bei einer Ausführungsform der Erfindung die erste Faserkomponente und der erste Faseranteil der zweiten Faserkomponente bei einer Temperatur von mindestens 130°C schmelzbeständig, wobei bei praktischen Ausführungsformen eine Schmelzbeständigkeit bei einer Temperatur von mindestens 170°C oder gar von mindestens 250°C durch entsprechende Auswahl der Materialien für die erste Faserkomponente und für den ersten Faseranteil der zweiten Faserkomponente gewählt wird.

Für die erste Faserkomponente und den ersten Faseranteil der zweiten Faserkomponente sind Materialien wie Naturfasern, Kunststofffasern, Metallfasern, Glasfasern, Carbonfasern und Mischungen davon geeignet. Im Rahmen von Naturfasern stellen Lederfasern ein geeignetes Material dar.

Bei einer Ausführungsform der Erfindung ist der zweite Faseranteil der zweiten Faserkomponente mit mindestens einer Kunststofffaser aufgebaut, die sich für eine thermischen Verfestigung bei geeigneter Temperatur eignet.

Bei einer Ausführungsform der Erfindung sind mindestens eine der beiden Faserkomponenten und mindestens einer der beiden Faseranteile der zweiten Faserkomponente ausgewählt aus der Materialgruppe aufweisend Polyolefine, Polyamid, Co-Polyamid, Viskose, Polyurethan, Polyacryl, Polybutylenterephthalat und Mischungen davon. Dabei kann das Polyolefin aus Polyethylen und Polypropylen ausgewählt sein.

Bei einer Ausführungsform der Erfindung sind die erste Faserkomponente und der erste Faseranteil der zweiten Faserkomponente aus der Materialgruppe Polyester und Co-Polyester ausgewählt.

Bei einer Ausführungsform der Erfindung ist mindestens der zweite Faseranteil der zweiten Faserkomponente mit mindestens einem Thermoplasten aufgebaut. Der zweite Faseranteil der zweiten Faserkomponente kann aus der Materialgruppe Polyamid, Co-Polyamid, Polybutylentherephthalat und Polyolefine oder auch aus der Materialgruppe Polyester und Co-Polyester ausgewählt sein.

Beispiele geeigneter Thermoplaste sind Polyethylen, Polyamid (PA), Polyester (PET), Polyethylen (PE), Polypropylen (PP) und Polyvinylchlorid (PVC). Weitere geeignete Materialien sind Gummi, Thermoplastischer Gummi (TR, von Thermoplastic Rubber) und Polyurethan (PU). Geeignet ist auch Thermoplastisches Polyurethan (TPU), dessen Parameter (Härte, Farbe, Elastizität etc.) sehr variabel einstellbar sind.

Bei einer Ausführungsform der Erfindung bestehen beide Faseranteile der zweiten Faserkomponente aus Polyester, wobei das Polyester des zweiten Faseranteils eine niedrigere Schmelztemperatur aufweist als das Polyester des ersten Faseranteils.

Polyesterpolymere haben eine Schmelztemperatur im Bereich von 256°C bis 292°C (siehe Textilpraxis International, Denkendorfer Fasertafel 1986, ITV (Institut für Textil- und Verfahrenstechnik)). Bei einer praktischen Ausführungsform wird für die erste Faserkomponente ein Polyester mit einer Erweichungstemperatur von etwa 230°C und für den zweiten Faseranteil der zweiten Faserkomponente ein Polyester mit einer Klebeerweichungstemperatur von etwa 200°C gewählt.

Bei einer Ausführungsform der Erfindung weist die zweite Faserkomponente eine Kern-Mantel-Struktur auf, d.h. eine Struktur, bei welcher ein Kernmaterial der Faserkomponente koaxial von einer Mantelschicht umgeben ist. Dabei bildet der eine höhere Schmelztemperatur aufweisende erste Faseranteil den Kern und der eine niedrigere Schmelztemperatur aufweisende zweite Faseranteil den Mantel.

Bei einer anderen Ausführungsform der Erfindung weist die zweite Faserkomponente eine Seite-an-Seite-Struktur auf, d.h., es sind zwei je in Faserlängsrichtung verlaufende unterschiedliche Faseranteile, die je einen beispielsweise halbkreisförmigen Querschnitt aufweisen, derart aneinander gesetzt, dass die beiden Faserkomponenten Seite an Seite nebeneinander liegend miteinander verbunden sind. Dabei bildet eine Seite den eine höhere Schmelztemperatur aufweisenden ersten Faseranteil und die zweite Seite den eine niedrigere Schmelztemperatur aufweisenden zweiten Faseranteil.

Dabei bildet eine Seite den eine höhere Schmelztemperatur aufweisenden ersten Faseranteil und die zweite Seite den eine niedrigere Schmelztemperatur aufweisenden zweiten Faseranteil der zweiten Faserkomponente des Schuhstabilisierungsmaterials.

Bei einer Ausführungsform der Erfindung hat die zweite Faserkomponente einen Gewichtsprozentanteil bezogen auf das Flächengewicht des Faserverbundes im Bereich von 10% bis 90%. Bei einer Ausführungsform liegt der Gewichtsprozentanteil der zweiten Faserkomponente im Bereich von 10% bis 60%. Bei praktischen Ausführungsformen liegt der Gewichtsprozentanteil der zweiten Faserkomponente bei 50% oder 20%.

Bei einer Ausführungsform der Erfindung sind die Materialien für die erste Faserkomponente und für den zweiten Faseranteil der zweiten Faserkomponente derart ausgewählt, dass deren Schmelztemperaturen sich um mindestens 20°C unterscheiden.

Das Schuhstabilisierungsmaterial kann über seine gesamte Dicke thermisch verfestigt sein. Je nach den zu erreichenden Anforderungen, insbesondere hinsichtlich Luftdurchlässigkeit, Wasserdampfdurchlässigkeit und Stabilität kann man eine Ausführungsform wählen, bei welcher nur ein Teil der Dicke des Schuhstabilisierungsmaterials thermisch verfestigt ist. Bei einer Ausführungsform der Erfindung ist das über mindestens einen Teil seiner Dicke thermisch verfestigte Schuhstabilisierungsmaterial zusätzlich an mindestens einer Oberfläche mittels Drucks und Temperatur oberflächenglättend verpresst. Bei Verwendung des Schuhstabilisierungsmaterials als Innensohle führt dies zu dem Vorteil, dass der Fuß des Benutzers des Schuhwerks auf eine glatte Innensohlenoberfläche trifft. Bei Verwendung des Schuhstabilisierungsmaterials als Barrierematerial zum Schutz einer darüber liegenden Membran kann es vorteilhaft sein, die zur Lauffläche des Schuhsohlenverbundes weisende Unterseite des Schuhstabilisierungsmaterials durch Oberflächenverpressung zu glätten, weil dann Schmutz, der durch Durchbrechungen des Schuhsohlenverbundes bis zur Unterseite des Schuhstabilisierungsmaterials gelangt, an diesem weniger leicht haftet. Gleichzeitig erhöht sich die Abriebbeständigkeit des Schuhstabilisierungsmaterials.

Bei einer Ausführungsform ist das erfindungsgemäße Schuhstabilisierungsmaterial mit einem oder mehreren Mitteln aus der Materialgruppe wasserabweisende Mittel, schmutzabweisende Mittel, ölabweisende Mittel, antibakterielle Mittel, Anti-Geruchsmittel und Kombinationen davon ausgerüstet.

Bei einer weiteren Ausführungsform ist das Schuhstabilisierungsmaterial wasserabweisend, schmutzabweisend, ölabweisend, antibakteriell und/oder gegen Geruch behandelt.

Bei einer Ausführungsform der Erfindung hat das Schuhstabilisierungsmaterial eine Wasserdampfdurchlässigkeit von mindestens 4.000 g/m$^2$·24 h. Bei praktischen Ausführungsformen wird eine Wasserdampfdurchlässigkeit von mindestens 7.000 g/m$^2$·24 h oder gar von 10.000 g/m$^2$·24 h gewählt.

Bei Ausführungsformen der Erfindung weist das Schuhstabilisierungsmaterial eine Dicke im Bereich von mindestens 1 mm bis 5 mm auf, wobei praktische Ausführungsformen insbesondere im Bereich von 1 mm bis 2,5 mm oder gar im Bereich von 1 mm bis 1,5 mm liegen, wobei die speziell gewählte Dicke vom speziellen Einsatzzweck des Schuhstabilisierungsmaterials abhängt und auch davon, welche Oberflächenglätte, Luftdurchlässigkeit, Wasserdampfdurchlässigkeit und mechanische Festigkeit man bereitstellen möchte.

Bei einer praktischen Ausführungsform der Erfindung weist das Schuhstabilisierungsmaterial einen Faserverbund mit zwei Faserkomponenten auf, wobei eine erste Faserkomponente aus Polyester besteht und eine erste Schmelztemperatur und einen darunter liegenden ersten Erweichungstemperaturbereich aufweist, die zweite Faserkomponente eine Kern-Mantel-Struktur aufweist und einen den Kern bildenden ersten Faseranteil aus Polyester und einen den Mantel bildenden zweiten Faseranteil aus Polyester besitzt, der zweite Faseranteil eine zweite Schmelztemperatur und einen darunter liegenden zweiten Erweichungstemperaturbereich aufweist, wobei die erste Schmelztemperatur und der erste Erweichungstemperaturbereich höher sind als die zweite Schmelztemperatur und der zweite Erweichungstemperaturbereich, der erste Faseranteil eine höhere Schmelztemperatur und einen höheren Erweichungstemperaturbereich als der zweite Faseranteil aufweist, der Faserverbund infolge thermischer Aktivierung des zweiten Faseranteils der zweiten Faserkomponente mit einer im zweiten Erweichungstemperaturbereich liegenden Klebeerweichungstemperatur thermisch verfestigt ist unter Aufrechterhaltung von Wasserdampfdurchläsigkeit im thermisch verfestigten Bereich und der Faserverbund ein vernadeltes Vlies ist, das an mindestens einer seiner Oberflächen mittels Drucks und Temperatur verpresst ist.

Bei einer Ausführungsform der Erfindung ist ein derartiges Schuhstabilisierungsmaterial durch Oberflächenverpressung einer Oberfläche des Faserverbundes mit einem Flächendruck im Bereich von 1,5 N/cm$^2$ bis 4 N/cm$^2$ bei einer Temperatur einer Heizplatte von 230° C für 10 s erhältlich. Bei einer praktischen Ausführungsform erfolgt die Oberflächenverpressung einer Oberfläche des Faserverbundes mit einem Flächendruck von 3,3 N/cm$^2$ bei einer Temperatur der Heizplatte von 230°C bei 10 s.

Bei einer Ausführungsform der Erfindung ist das Schuhstabilisierungsmaterial mit einer Durchstichfestigkeit im Bereich von 290 N bis 320 N hergestellt, so dass es einen guten Schutz für eine darüber befindliche wasserdichte, wasserdampfdurchlässige Membran gegen das Hindurchdrücken von Fremdkörpern wie kleinen Steinchen bildet.

Erfindungsgemäßes Schuhstabilisierungsmaterial lässt sich in einem wasserdampfdurchlässigen Schuhsohlenverbund verwenden, beispielsweise als wasserdampfdurchlässige, den Schuhsohlenverbund stabilisierende und eine darüber befindliche Membran schützende Barrierelage.

Gemäß einem zweiten Aspekt macht die Erfindung eine wasserdampfdurchlässige Barriereneinheit verfügbar, die aufgebaut ist mit mindestens einem Stück eines Schuhstabilisierungsmaterials, das einen Faserverbund mit mindestens zwei Faserkomponenten, die sich hinsichtlich ihrer Schmelztemperatur unterscheiden, aufweist, wobei mindestens ein Teil einer ersten Faserkomponente eine erste Schmelztemperatur und einen darunter liegenden ersten Erweichungstemperaturbereicht aufweist und mindestens ein Teil einer zweiten Faserkomponente eine zweite Schmelztemperatur und einen darunter liegenden zweiten Erweichungstemperaturbereich aufweist und die erste Schmelztemperatur und der erste Erweichungstemperaturbereich höher als die zweite Schmelztemperatur und der zweite Erweichungstemperaturbereich sind, wobei der Faserverbund infolge thermischer Aktivierung der zweiten Faserkomponente mit einer im zweiten Erweichungstemperaturbereich liegenden Klebeerweichungstemperatur thermisch verfestigt ist unter Aufrechterhaltung von Wasserdampfdurchlässigkeit im thermisch verfestigten Bereich und wobei die Barriereneinheit ausgebildet ist mindestens als Teil eines wasserdampfdurchlässigen Schuhsohlenverbundes mit mindestens einer sich durch die Schuhsohlenverbunddicke hindurch erstreckenden Durchbrechung und die Barriereeinheit derart ausgebildet ist, dass deren Schuhstabilisierungsmaterial nach Erstellung des Schuhsohlenverbundes dessen mindestens eine Durchbrechung als Barriere gegen ein Hindurchdrücken von Fremdkörpern durch die mindestens eine Durchbrechung und somit durch den Schuhsohlenverbund verschließt.

Bei einer Ausführungsform der Erfindung ist dem mindestens einen Stück des Schuhstabilisierungsmaterials mindestens eine Stabilisierungseinrichtung zugeordnet. Damit wird erreicht, dass zur Eigenstabilität, welche das Schuhstabilisierungsmaterial aufgrund seiner thermischen Verfestigung und gegebenenfalls Oberflächenverpressung aufweist, eine zusätzliche Stabilisierung hinzu kommt, die gezielt an bestimmten Stellen der Barriereeinheit bewirkt werden kann, insbesondere im Bereich von Durchbrechungen des Schuhsohlenverbundes, die man großflächig macht, um eine hohe Wasserdampfdurchlässigkeit des Schuhsohlenverbundes bereitzustellen.

Nachfolgend ist von Vorderfußbereich und von Mittelfußbereich des Schuhsohlenverbundes die Rede. Beim menschlichen Fuß ist der Vorderfuß der sich über die Zehen und Ballen bis zum Beginn des medialen Gewölbes erstreckende Fußlängsbereich und ist der Mittelfuss der Fußlängsbereich zwischen den Ballen und der Ferse. Im Zusammenhang mit dem erfindungsgemäßen Schuhsohlenverbund ist unter Vorderfußbereich und Mittelfußbereich derjenige Längsbereich des Schuhsohlenverbundes gemeint, über welchen sich beim Tragen eines mit einem solchen Schuhsohlenverbund versehenen Schuhwerks der Vorderfuß bzw. der Mittelfuß des Trägers des Schuhwerks erstreckt.

Bei einer Ausführungsform der Erfindung ist die mindestens eine Stabilisierungseinrichtung so ausgebildet, dass wenigstens 15% der Fläche des Vorderfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 25% der Fläche des Vorderfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 40% der Fläche des Vorderfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 50% der Fläche des Vorderfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 60% der Fläche des Vorderfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 75% der Fläche des Vorderfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 30% der Fläche des Mittelfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 50% der Fläche des Mittelfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 60% der Fläche des Mittelfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 75% der Fläche des Mittelfußbereichs des Schuhsohlenverbundes wasserdampfdurchlässig sind.

Bei einer Ausführungsform der Erfindung ist die mindestens eine Stabilisierungseinrichtung so ausgebildet, dass wenigstens 15% der vorderen Hälfte der Längserstreckung des Schuhsohlenverbundes wasserdampfdurchlässig sind.

Bei einer Ausführungsform der Erfindung ist die mindestens eine Stabilisierungseinrichtung so ausgebildet, dass wenigstens 25% der vorderen Hälfte der Längserstreckung des Schuhsohlenverbundes wasserdampfdurchlässig sind.

Bei einer Ausführungsform der Erfindung ist die mindestens eine Stabilisierungseinrichtung so ausgebildet, dass wenigstens 40% der vorderen Hälfte der Längserstreckung des Schuhsohlenverbundes wasserdampfdurchlässig sind.

Bei einer Ausführungsform der Erfindung ist die mindestens eine Stabilisierungseinrichtung so ausgebildet, dass wenigstens 60% der vorderen Hälfte der Längserstreckung des Schuhsohlenverbundes wasserdampfdurchlässig sind.

Bei einer Ausführungsform der Erfindung ist die mindestens eine Stabilisierungseinrichtung so ausgebildet, dass wenigstens 75% der vorderen Hälfte der Längserstreckung des Schuhsohlenverbundes wasserdampfdurchlässig sind.

Bei einer Ausführungsform der Erfindung ist die mindestens eine Stabilisierungseinrichtung so ausgebildet, dass von der Längserstreckung des Schuhsohlenverbundes abzüglich des Absatzbereichs wenigstens 15% wasserdampfdurchlässig sind.

Bei einer Ausführungsform der Erfindung ist die mindestens eine Stabilisierungseinrichtung so ausgebildet, dass von der Längserstreckung des Schuhsohlenverbundes abzüglich des Absatzbereichs wenigstens 25% wasserdampfdurchlässig sind.

Bei einer Ausführungsform der Erfindung ist die mindestens eine Stabilisierungseinrichtung so ausgebildet, dass von der Längserstreckung des Schuhsohlenverbundes abzüglich des Absatzbereichs wenigstens 40% wasserdampfdurchlässig sind.

Bei einer Ausführungsform der Erfindung ist die mindestens eine Stabilisierungseinrichtung so ausgebildet, dass von der Längserstreckung des Schuhsohlenverbundes abzüglich des Absatzbereichs wenigstens 60% wasserdampfdurchlässig sind.

Bei einer Ausführungsform der Erfindung ist die mindestens eine Stabilisierungseinrichtung so ausgebildet, dass von der Längserstreckung des Schuhsohlenverbundes abzüglich des Absatzbereichs wenigstens 75% wasserdampfdurchlässig sind.

Die zuvor angegebenen Prozentzahlen im Zusammenhang mit der Wasserdampfdurchlässigkeit beziehen sich auf denjenigen Teil des gesamten Schuhsohlenverbundes, welcher der Fläche innerhalb der Außenkontur der Fußsohle des Trägers des Schuwerks entspricht, also im Wesentlichen auf denjenigen Flächenteil des Schuhsohlenverbundes, welcher bei dem fertigen Schuhwerk von dem Innenumfang des sohlenseitigen unteren Schaftendes (sohlenseitige Schaftkontur) umgeben wird. Ein Schuhsohlenrand, der radial nach außen über die sohlenseitige Schaftkontur übersteht, also über die Fußsohle des Trägers des Schuhwerks übersteht, braucht keine Wasserdampfdurchlässigkeit zu haben, weil sich dort kein schweißabsondernder Fußbereich befindet. Die genannten Prozentzahlen beziehen sich daher hinsichtlich des Vorderfußbereichs auf den auf die Vorderfußlänge begrenzten Teil der von der sohlenseitigen Schaftkontur eingeschlossene Fläche und hinsichtlich des Mittelfußbereichs auf den auf die Mittelfußlänge begrenzten Teil der von der sohlenseitigen Schaftkontur eingeschlossene Fläche.

Handelt es sich bei dem betrachteten Schuhwerk z.B. um Businessschuhe, deren Laufsohle einen relativ weit über die Außenseite der sohlenseitigen Schaftkontur vorstehenden Laufsohlenumfangsrand aufweist, der beispielsweise an einem Montagerahmen fest genäht ist, der ebenfalls um die Außenseite der sohlenseitige Schaftkontur umläuft, braucht im Bereich dieses Laufsohlenumfangsrandes keine Wasserdampfdurchlässigkeit zu bestehen, da sich dieser Bereich außerhalb des vom Fuß betretenen Teils des Schuhsohlenverbundes befindet und in diesem Bereich somit keine Schweißabsonderung statt findet. Die in den vorausgehenden Absätzen angegebenen Prozentzahlen beziehen sich auf Schuhwerk, welches nicht den oben erwähnten, für Businessschuhe typischen überstehenden Laufsohlenrand haben. Da dieser Laufsohlenbereich eines Businessschuhs etwa 20 % der Gesamtlaufsohlenfläche ausmachen kann, kann man bei Businessschuhen von der Gesamtlaufsohlenfläche etwa 20 % abziehen und die oben genannten Prozentzahlen für die Wasserdampfdurchlässigkeit des Schuhsohlenverbundes auf die restlichen etwa 80 % der Gesamtlaufsohlenfläche beziehen.

Die Stabilisierungseinrichtung kann aus einem oder mehreren Stabilisierungsstegen bestehen, welche beispielsweise auf der laufsohlenseitigen Unterseite des Schuhstabilisierungsmaterials angeordnet werden.

Bei einer Ausführungsform ist die Stabilisierungseinrichtung mit mindestens einer Öffnung versehen, die nach Erstellung des Schuhsohlenverbundes mindestens einen Teil der Durchbrechung bildet und mit Schuhstabilisierungsmaterial verschlossen ist.

Bei einer Ausführungsform der Erfindung werden die zuvor angegebenen prozentualen Wasserdampfdurchlässigkeiten im Vorderfußbereich und/oder im Mittelfußbereich vorwiegend oder gar ausschließlich im Bereich der mindestens einen Öffnung der Stabilisierungseinrichtung erbracht.

Bei einer Ausführungsform der Erfindung ist dem Schuhstabilisierungsmaterial in dem Durchbruch bzw. in mindestens einem der Durchbrüche wenigstens ein Abstützelement zugeordnet, das sich von der laufflächenzugewandten Seite des Schuhstabilisierungsmaterials aus bis zum Niveau der Lauffläche erstreckt, derart, dass sich das Schuhstabilisierungsmaterial beim Laufen über das Abstützelement auf dem begangenen Boden abstützt. Dabei kann mindestens einer der Stabilisierungsstege gleichzeitig als Abstützelement ausgebildet sein.

Hat man beispielsweise einen Schuhsohlenverbund, der die Barriereeinheit und eine darunter angeordnete einteilige oder mehrteilige Laufsohle aufweist, die je Durchgangsöffnungen für Wasserdampfdurchlässigkeit aufweisen, können die Durchgangsöffnungen der Laufsohle bzw. Laufsohlenteile und der Barriereeinheit gleiche oder unterschiedliche Flächenausdehnung haben. Wichtig ist, dass sich diese Durchgangsöffnungen wenigstens teilweise überlappen, wobei eine Schnittfläche der jeweiligen Durchgangsöffnung der Barriereeinheit und der jeweiligen Durchgangsöffnung der Laufsohle oder des jeweiligen Laufsohlenteils eine Durchbrechung durch den gesamten Schuhsohlenverbund bildet. Bei Vorgabe einer bestimmten Abmessung der jeweiligen Durchgangsöffnung der Laufsohle bzw. des jeweiligen Laufsohlenteils ist die Ausdehnung der Durchbrechung am größten, wenn die zugehörige Durchgangsöffnung der Barriereeinheit mindestens gleich groß ist und sich über die gesamte Ausdehnung der zugehörigen Durchgangsöffnung der Laufsohle bzw. des Laufsohlenteils erstreckt, oder umgekehrt.

Dadurch, dass die jeweilige Durchbrechung des Schuhsohlenverbundes mit wasserdampfdurchlässigem Schuhstabilisierungsmaterial verschlossen ist, wird Wasserdampfdurchlässigkeit in der mindestens einen Durchbrechung des Schuhsohlenverbundes bei gleichzeitigem Schutz einer darüber befindlichen Membran gegen das Hindurchdrücken von Fremdkörpern wie Steinchen erreicht.

Da das für die Barriereeinheit verwendete Schuhstabilisierungsmaterial in Folge der thermischen Verfestigung und gegebenenfalls zusätzlichen Oberflächenverpressung mit einer wesentlich höheren Eigenstabilität ausgestattet werden kann als sie Material ohne thermische Verfestigung und Oberflächenverfestigung bieten kann, kann das Schuhstabilisierungsmaterial der Barriereeinheit dem mit den Durchbrechungen versehenen Schuhsohlenverbund eine ausreichende Stabilisierung bieten, auch wenn die eine oder mehreren Durchbrechungen des Schuhsohlenverbundes zugunsten einer hohen Wasserdampfdurchlässigkeit sehr großflächig ausgelegt werden. Diese Eigenstabilität kann durch die Verwendung der zuvor erwähnten zusätzlichen Stabilisierungseinrichtung noch erhöht werden, und zwar selektiv in besonders stabilisierungsbedürftigen Bereichen des Schuhsohlenverbundes.

Ist die Stabilisierungseinrichtung mit mehreren Öffnungen versehen, können diese entweder insgesamt mit einem Stück des Schuhstabilisierungsmaterials oder je mit einem Stück des Schuhstabilisierungsmaterials verschlossen werden.

Die Stabilisierungseinrichtung kann sohlenförmig ausgebildet sein, wenn sie sich über die Gesamtfläche des Schuhsohlenverbundes erstrecken soll, oder teilsohlenförmig, wenn sie nur in einem Teil der Schuhsohlenverbundfläche vorgesehen werden soll.

Bei einer Ausführungsform weist die Stabilisierungseinrichtung der Barriereeinheit wenigstens einen mindestens den Schuhsohlenverbund stabilisierenden Stabilisierungsrahmen auf, so dass der Schuhsohlenverbund zusätzlich zu der stabilisierenden Wirkung des erfindungsgemäßen Schuhstabilisierungsmaterials noch eine weitere Stabilisierung erfährt. Eine besonders gute Stabilisierungswirkung erreicht man, wenn man den Stabilisierungsrahmen in die mindestens eine Durchbrechung oder in mindestens eine der Durchbrechungen des Schuhsohlenverbundes einpasst, so dass dort, wo der Schuhsohlenverbund zunächst durch die möglichst großflächigen Durchbrechuhgen in seiner Stabilität geschwächt worden ist, mit Hilfe des Stabilisierungsrahmens trotzdem eine gute Stabilisierung des Schuhsohlenverbundes sichergestellt wird.

Bei einer Ausführungsform der erfindungsgemäßen Barriereeinheit weist die mindestens eine Öffnung der Stabilisierungseinrichtung eine Fläche von mindestens 1 cm$^2$ auf. Bei praktischen Ausführungsformen wird eine Öffnungsfläche der mindestens einen Öffnung von mindestens 5 cm$^2$, z.B. im Bereich von 8 - 15 cm$^2$ oder gar mindestens 10 cm$^2$ oder sogar von mindestens 20 cm$^2$ oder auch mindestens 40 cm$^2$ gewählt.

Bei einer Ausführungsform der erfindungsgemäßen Barriereeinheit weist die Stabilisierungseinrichtung mindestens einen Stabilisierungssteg auf, der auf mindestens einer Oberfläche des Schuhstabilisierungsmaterials angeordnet ist und die Fläche der mindestens einen Öffnung wenigstens teilweise überquert. Falls die Stabilisierungseinrichtung mit einem Stabilisierungsrahmen versehen ist, kann der Stabilisierungssteg an dem Stabilisierungsrahmen angeordnet werden. Es können mehrere Stabilisierungsstege vorgesehen sein, die eine gitterförmige Struktur auf mindestens einer Oberfläche des Schuhstabilisierungsmaterials bilden. Eine derartige Gitterstruktur führt zu einer besonders guten Stabilisierung des Schuhsohlenverbundes einerseits und kann außerdem verhindern, dass größere Fremdkörper wie größere Steine oder Bodenerhebungen sich bis zum Schuhstabilisierungsmaterial hindurchdrücken und vom Benutzer des mit einer solchen Barriereeinheit ausgerüsteten Schuhwerks beim Auftreten spürbar sein könnten.

Bei einer Ausführungsform ist die Stabilisierungseinrichtung der erfindungsgemä-βen Barriereeinheit mit mindestens einem Thermoplasten aufgebaut. Hierfür können Thermoplastmaterialien der oben bereits angegebenen Art verwendet werden.

Bei einer Ausführungsform der Erfindung sind die Stabilisierungseinrichtung und das Schuhstabilisierungsmaterial mindestens teilweise miteinander verbunden, beispielsweise durch Kleben, Schweißen, Anspritzen, Umspritzen, Anvulkanisieren und Umvulkanisieren. Beim Anspritzen oder Anvulkanisieren findet vorwiegend eine Befestigung zwischen Stabilisierungseinrichtung und Schuhstabilisierungsmaterial an sich gegenüberliegenden Flächenbereichen von beiden statt. Beim Umspritzen und Umvulkanisieren erfolgt vorwiegend eine umfangsmäßige Einfassung des Schuhstabilisierungsmaterials mit der Stabilisierungseinrichtung.

Bei einer Ausführungsform der Erfindung ist die Stabilisierungseinrichtung des Schuhsohlenverbundes als Laufsohle ausgebildet.

Bei einer Ausführungsform der Erfindung bildet die Barriereeinheit den Schuhsohlenverbund. Die Stabilisierungseinrichtung der Barriereeinheit kann als Laufsohle ausgebildet sein. Es besteht aber auch die Möglichkeit, dass die Barriereeinheit und eine Laufsohle den Schuhsohlenverbund bilden.

Bei einer Ausführungsform ist die Barriereeinheit wasserdurchlässig.

Gemäß einem dritten Aspekt der Erfindung wird ein für Schuhwerk ausgebildeter wasserdampfdurchlässiger Schuhsohlenverbund verfügbar gemacht, der mindestens eine sich durch die Schuhsohlenverbunddicke hindurch erstreckende Durchbrechung besitzt, die mittels Schuhstabilisierungsmaterials verschlossen ist, das einen Faserverbund mit mindestens zwei Faserkomponenten, die sich hinsichtlich ihrer Schmelztemperatur unterscheiden,aufweist, wobei mindestens ein Teil einer ersten Faserkomponente eine erste Schmelztemperatur und einen darunter liegenden ersten Erweichungstemperaturbereicht aufweist und mindestens ein Teil einer zweiten Faserkomponente eine zweite Schmelztemperatur und einen darunter liegenden zweiten Erweichungstemperaturbereich aufweist und die erste Schmelztemperatur und der erste Erweichungstemperaturbereich höher als die zweite Schmelztemperatur und der zweite Erweichungstemperaturbereich sind, und wobei der Faserverbund infolge thermischer Aktivierung der zweiten Faserkomponente mit einer im zweiten Erweichungstemperaturbereich liegenden Klebeerweichungstemperatur thermisch verfestigt ist unter Aufrechterhaltung von Wasserdampfdurchlässigkeit im thermisch verfestigten Bereich.

Bei einer Ausführungsform ist der erfindungsgemäße Schuhsohlenverbund mit einer erfindungsgemäßen Barriereeinheit, beispielsweise entsprechend einer oder mehrerer der oben für die Barriereeinheit angegebenen Ausführungsformen, aufgebaut.

Weiterhin ist der Schuhsohlenverbund wasserdurchlässig ausgebildet.

In einer Modifikation der Erfindung bildet eine Oberseite der Barriereeinheit mindestens teilweise eine Oberseite des Schuhsohlenverbundes.

Gemäß einem vierten Aspekt macht die Erfindung Schuhwerk mit einem erfindungsgemäßen Schuhsohlenverbund verfügbar, der beispielsweise entsprechend einer oder mehrerer der zuvor im Zusammenhang mit dem Schuhsohlenverbund erwähnter Ausführungsformen aufgebaut sein kann. Dabei weist das Schuhwerk einen Schaft auf, der an einem sohlenseitigen Schaftendbereich mit einer wasserdichten und wasserdampfdurchlässigen Schaftbodenfunktionsschicht versehen ist, wobei der Schuhsohlenverbund mit dem mit der Schaftbodenfunktonsschicht versehenen Schaftendbereich derart verbunden ist, dass die Schaftbodenfunktionsschicht wenigstens im Bereich der mindestens einen Durchbrechung des Schuhsohlenverbundes mit dem Schuhstabilisierungsmaterial unverbunden ist.

Bei diesem erfindungsgemäßen Schuhwerk die Schaftbodenfunktionsschicht am sohlenseitigen Schaftendbereich und das Schuhstabilisierungsmaterial in dem erfindungsgemäßen Schuhsohlenverbund anzuordnen führt zu mehreren Vorteilen. Einerseits ist der Umgang mit der Schaftbodenfunktionsschicht bei der Herstellung in den Bereich der Schaftherstellung gebracht und aus dem Bereich der Herstellung des Schuhsohlenverbundes herausgehalten. Dies trägt der Praxis Rechnung, dass häufig Schafthersteller und Sohlenverbundhersteller unterschiedliche Hersteller oder mindestens unterschiedliche Herstellbereiche sind und die Schafthersteller üblicherweise besser auf den Umgang mit Funktionsschichtmaterial und mit den Problemen dabei eingestellt sind als Schuhsohlenhersteller oder Schuhsohlenverbundhersteller. Andererseits können die Schaftbodenfunktionsschicht und das Schuhstabilisierungsmaterial dann, wenn sie nicht im selben Verbund untergebracht werden sondern auf den Schaftbodenverbund und den Schuhsohlenverbund aufgeteilt werden, auch nach der Befestigung des Schuhsohlenverbundes am unteren Schaftendbereich im Wesentlichen unverbunden miteinander gehalten werden, da deren Positionierung relativ zueinander im fertigen Schuhwerk durch die Befestigung (durch Ankleben oder Anspritzen) des Schuhsohlenverbundes am unteren Schaftende bewerkstelligt wird. Die Schaftbodenfunktionsschicht und das Schuhstabilisierungsmaterial gänzlich oder weitgehend miteinander unverbunden zu halten bedeutet, dass zwischen beiden keine Verklebung stattfinden muss, die auch bei Verklebung mit einem punktrasterförmigen Klebstoff zur Blockierung eines Teils der Wirkoberfläche der Funktionsschicht bei der Wasserdampfdurchlässigkeit führen würde.

Bei einer Ausführungsform des erfindungsgemäßen Schuhwerks ist der Schaft mit mindestens einem Schaftmaterial aufgebaut, das wenigstens im Bereich des sohlenseitigen Schaftendbereichs eine wasserdichte Schaftfunktionsschicht aufweist, wobei zwischen der Schaftfunktionsschicht und der Schaftbodenfunktionsschicht eine wasserdichte Abdichtung besteht. Damit kommt man zu Schuhwerk, bei welchem der Fuß sowohl im Schaftbereich als auch im Schaftbodenbereich als auch an den Übergangsstellen zwischen beiden wasserdicht ist, bei Aufrechterhaltung von Wasserdampfdurchlässigkeit sowohl im Schaft- als auch im Schaftbodenbereich.

Bei einer Ausführungsform des erfindungsgemäßen Schuhwerks ist die Schaftbodenfunktionsschicht einer wasserdampfdurchlässigen Schaftmontagesohle zugeordnet, wobei die Schaftbodenfunktionsschicht Teil eines mehrlagigen Laminates sein kann. Die Schaftmontagesohle selbst kann auch durch die mit dem Laminat aufgebaute Schaftbodenfunktionsschicht gebildet sein. Die Schaftbodenfunktionsschicht und gegebenenfalls die Schaftfunktionsschicht können durch eine wasserdichte, wasserdampfdurchlässige Beschichtung oder durch eine wasserdichte, wasserdampfdurchlässige Membran gebildet sein, bei der es sich entweder um eine mikroporöse Membran oder um eine keine Poren aufweisende Membran handeln kann. Bei einer Ausführungsform der Erfindung weist die Membran gerecktes Polytetrafluorethylen (ePTFE) auf.

Geeignete Materialien für die wasserdichte, wasserdampfdurchlässige Funktionsschicht sind insbesondere Polyurethan, Polypropylen und Polyester, einschließlich Polyetherester und deren Laminate, wie sie in den Druckschriften US-A-4,725,418 und US-A-4,493,870 beschrieben sind. Besonders bevorzugt wird jedoch gerecktes mikroporöses Polytetrafluorethylen (ePTFE), wie es beispielsweise in den Druckschriften US-A-3,953,566 sowie US-A-4,187,390 beschrieben ist, und gerecktes Polytetrafluorethylen, welches mit hydrophilen Imprägniermitteln und/oder hydrophilen Schichten versehen ist; siehe beispielsweise die Druckschrift US-A-4,194,041. Unter einer mikroporösen Funktionsschicht wird eine Funktionsschicht verstanden, deren durchschnittliche Porengröße zwischen etwa 0,2 μm und etwa 0,3 μm liegt. Die Porengröße kann mit dem Coulter Porometer (Markenname) gemessen werden, das von der Coulter Electronics, Inc., Hialeath, Florida, USA, hergestellt wird.

Gemäß einem fünften Aspekt macht die Erfindung ein Verfahren zur Herstellung von Schuhwerk verfügbar, das neben einem erfindungsgemäßen wasserdampfdurchlässigen Schuhsohlenverbund, beispielsweise gemäß einer oder mehrerer der oben für den Schuhsohlenverbund angegebener Ausführungsformen, einen Schaft aufweist, der an einem sohlenseitigen Schaftendbereich mit einer wasserdichten und wasserdampfdurchlässigen Schaftbodenfunktionsschicht versehen ist. Bei diesem Verfahren werden zunächst der Schuhsohlenverbund und der Schaft bereit gestellt. Der Schaft ist an dem sohlenseitigen Schaftendbereich mit einer wasserdichten und wasserdampfdurchlässigen Schaftbodenfunktionsschicht versehen. Der Schuhsohlenverbund und der mit der Schaftbodenfunktionsschicht versehene sohlenseitige Schaftendbereich werden miteinander derart verbunden, dass die Schaftbodenfunktionsschicht wenigstens im Bereich der mindestens einen Durchbrechung mit dem Schuhstabilisierungsmaterial unverbunden bleibt. Dies führt zu den zuvor bereits dargelegten Vorteilen.

Bei einer Ausführungsform dieses Verfahrens wird der sohlenseitige Schaftendbereich mit der Schaftbodenfunktionsschicht verschlossen. Für den Fall, dass der Schaft mit einer Schaftfunktionsschicht versehen wird, wird zwischen der Schaftfunktionsschicht und der Schaftbodenfunktionsschicht eine wasserdichte Verbindung hergestellt. Dies führt zu einem rundum wasserdichten und wasserdampfdurchlässigen Schuhwerk.

Die Erfindung, Aufgabenaspekte der Erfindung und Vorteile der Erfindung werden nun noch anhand von Ausführungsformen weiter erläutert. In den zugehörigen Zeichnungen zeigen:

Figur 1:

Eine skizzenhafte Darstellung eines durch Vernadelung mechanisch verfestigten Vlieses.

Figur 2:

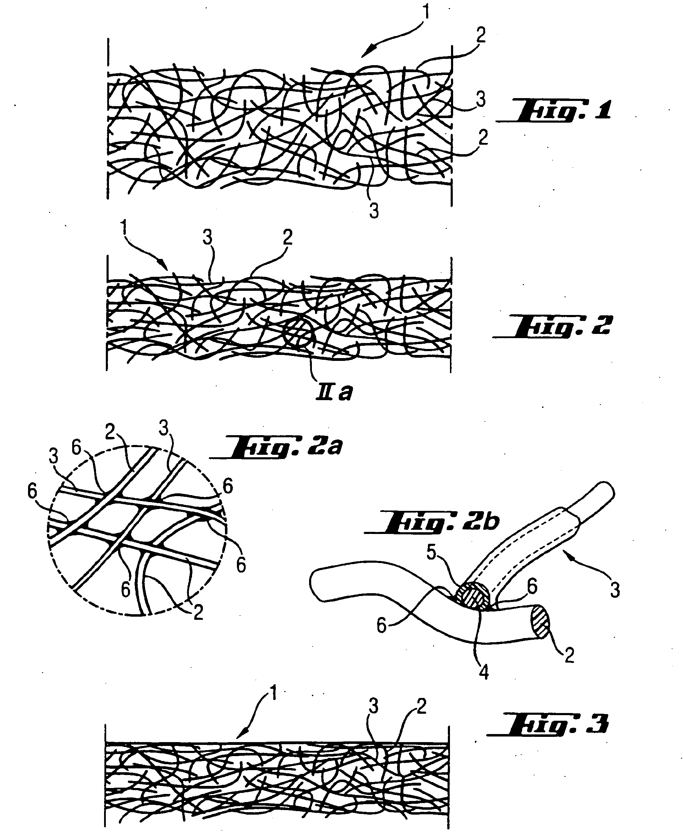

Ebenfalls in skizzenhafter Darstellung das Vlies gemäß Figur 1 nach thermischer Verfestigung.

Figur 2a:

Einen Ausschnitt, ebenfalls skizzenhaft und mit stark vergrößertem Maßstab dargestellt, eines Bereichs IIa des thermisch verfestigten Vlieses der Figur 2.

Figur 2b:

Einen Ausschnitt, ebenfalls skizzenhaft und mit noch stärker vergrößertem Maßstab dargestellt, aus dem in Figur 2a gezeigten Bereich IIa des thermisch verfestigten Vlieses der Figur 2.

Figur 3:

In skizzenhafter Darstellung das in Figur 2 gezeigte schmelzverfestigte Vlies nach zusätzlicher thermischer Oberflächenverpressung.

Figur 4:

Eine schematische Darstellung eines Schuhsohlenverbundes noch ohne Schuhstabilisierungsmaterial mit Darstellung einer sich durch die Schuhsohlenverbunddicke hindurch erstreckenden Durchbrechung.

Figur 5:

Eine schematische Darstellung eines ersten Beispiels einer Barriereeinheit mit einer Stabilisierungseinrichtung und einem darin aufgenommenen Schuhstabilisierungsmaterial.

Figur 6:

Eine schematische Darstellung eines weiteren Beispiels einer Barriereeinheit mit einer Stabilisierungseinrichtung und einem Schuhstabilisierungsmaterial.

Figur 7:

Eine schematische Darstellung eines weiteren Beispiels einer Barriereeinheit mit einer Stege aufweisenden Stabilisierungseinrichtung und einem Schuhstabilisierungsmaterial.

Figur 8:

Eine schematische Darstellung eines weiteren Beispiels einer Barriereeinheit mit einer Stabilisierungseinrichtung in Form mindestens eines Steges.

Figur 9:

Eine schematische Darstellung eines weiteren Beispieles einer Barriereeinheit mit einer Stabilisierungseinrichtung und einem Schuhstabilisierungsmaterial.

Figur 10:

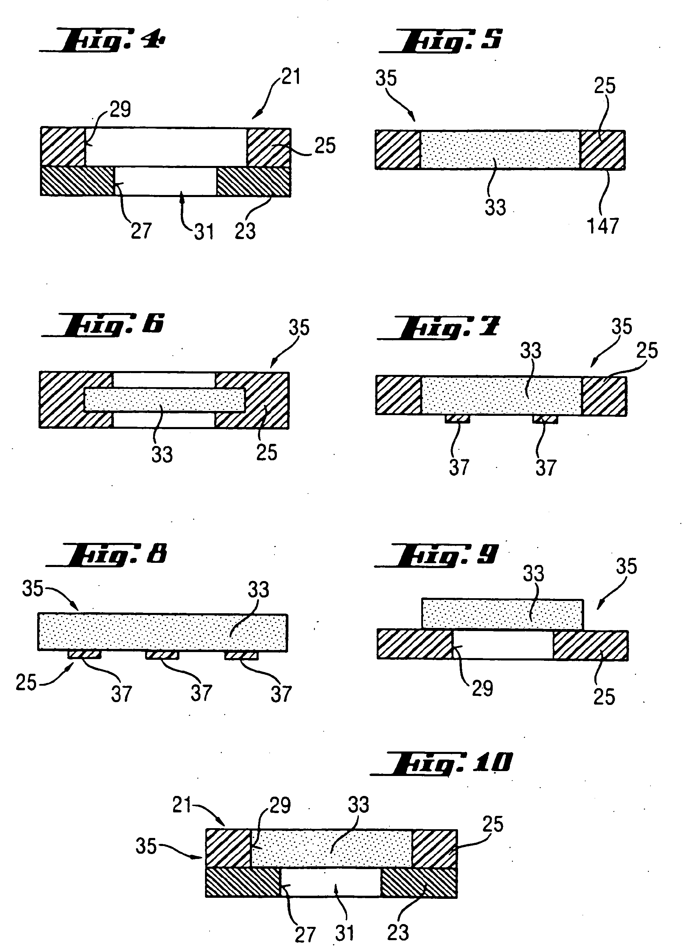

Eine schematische Darstellung des in Figur 4 gezeigten Schuhsohlenverbundes mit Schuhstabilisierungsmaterial.

Figur 11:

Eine schematische Darstellung von Stabilisierungsstegen, die an einer Unterseite eines Schuhstabilisierungsmaterials angeordnet sind.

Figur 12:

Eine schematische Darstellung eines Stabilisierungsgitters, das an einer Unterseite eines Schuhstabilisierungsmaterials angeordnet ist.

Figur 13:

Eine perspektivische Schrägansicht von unten eines Schuhs, der mit einem erfindungsgemäßen Sohlenverbund versehen ist.

Figur 14a:

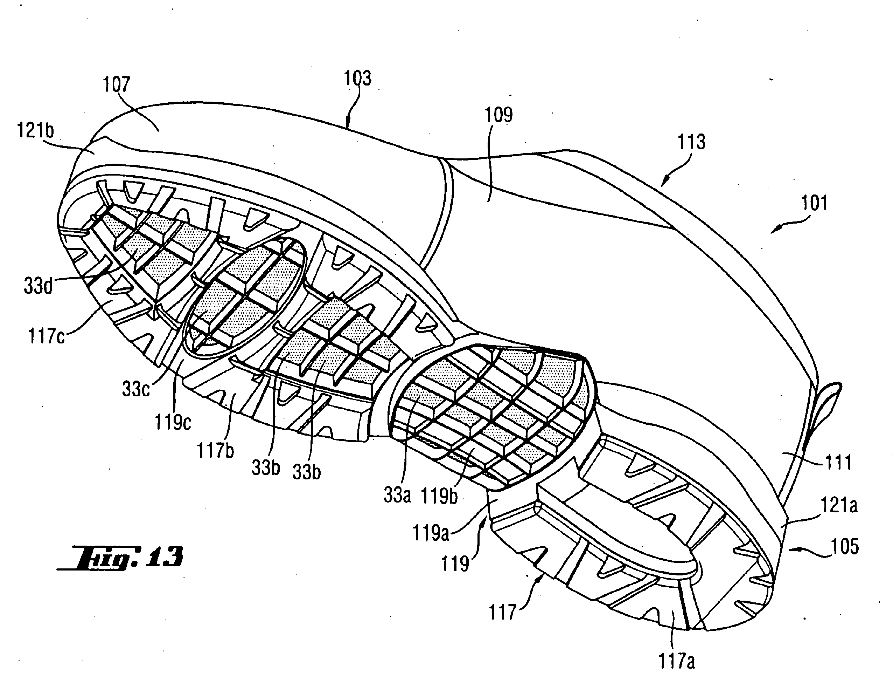

Den in Figur 13 gezeigten Schuh, jedoch bevor ein erfindungsgemäßer Schuhsohlenverbund an einen Schaftboden des Schuhs angesetzt ist.

Figur 14b:

Den in Figur 13 gezeigten Schuh, der mit einem weiteren Beispiel eines erfindungsgemäßen Sohlenverbundes versehen ist.

Figur 14c:

Den in Figur 13 gezeigten Schuh, der mit einem weiteren Beispiel eines erfindungsgemäßen Sohlenverbundes versehen ist.

Figur 15:

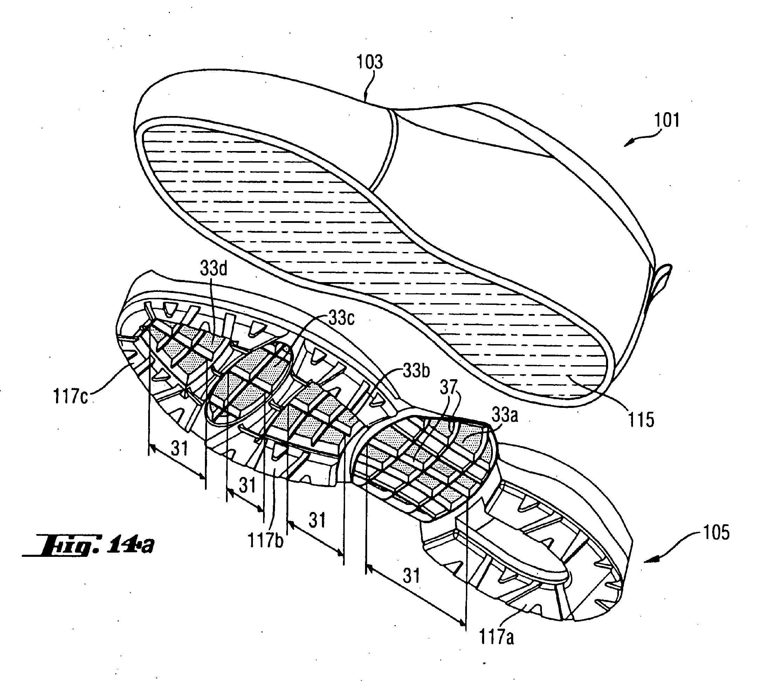

Den in Figur 14a gezeigten Schuhsohlenverbund in perspektivischer Draufsicht.

Figur 16:

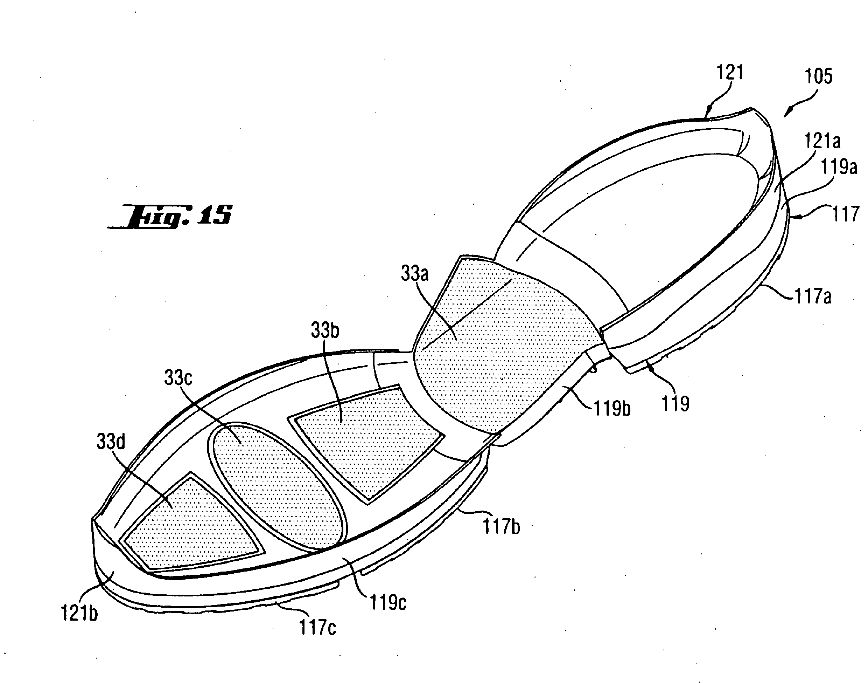

Den in Figur 15 gezeigten Schuhsohlenverbund in Explosionsdarstellung seiner einzelnen Komponenten in schräger Perspektivansicht von oben.

Figur 17:

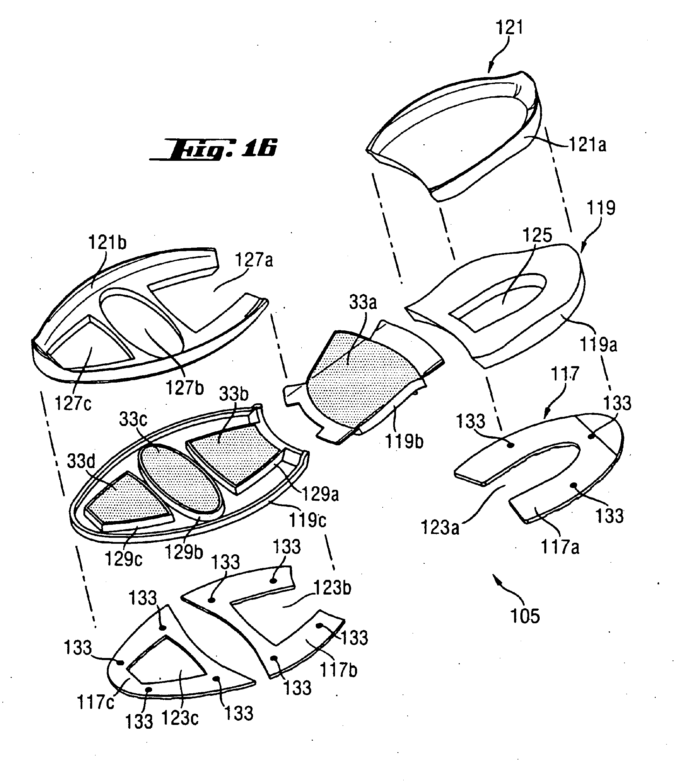

Die in Figur 16 gezeigten Teile des Schuhsohlenverbundes in perspektivischer Schrägansicht von unten.

Figur 18:

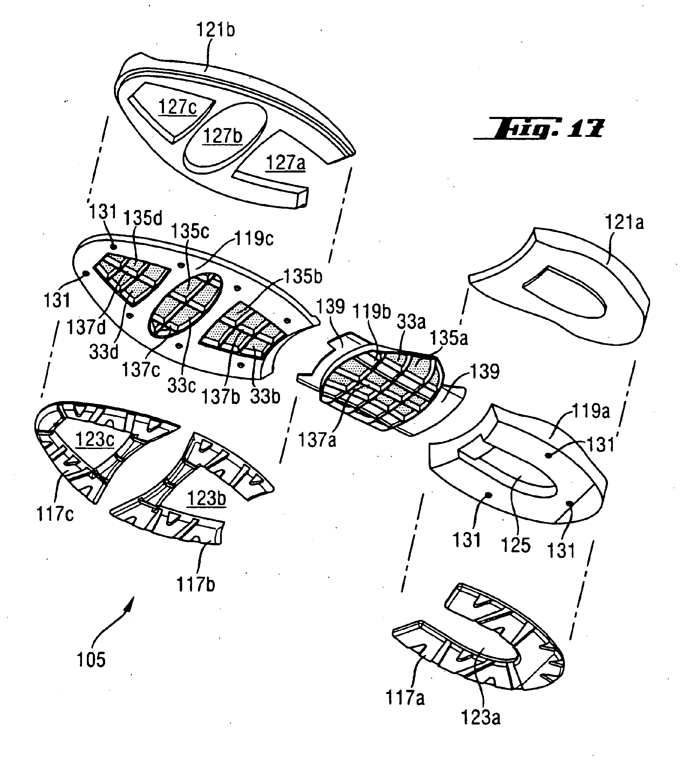

Einen Vorderfußbereich und einen Mittelfußteil der in Figur 17 gezeigten Barriereeinheit in perspektivischer Schrägansicht von oben, wobei die Stabilisierungseinrichtungsteile und die Schuhstabilisierungsmaterialteile voneinander getrennt dargestellt sind.

Figur 19:

Einen Vorderfußbereich und einen Mittelfußbereich der in Figur 17 gezeigten Barriereeinheit in einer weiteren Ausführungsform.

Figur 20:

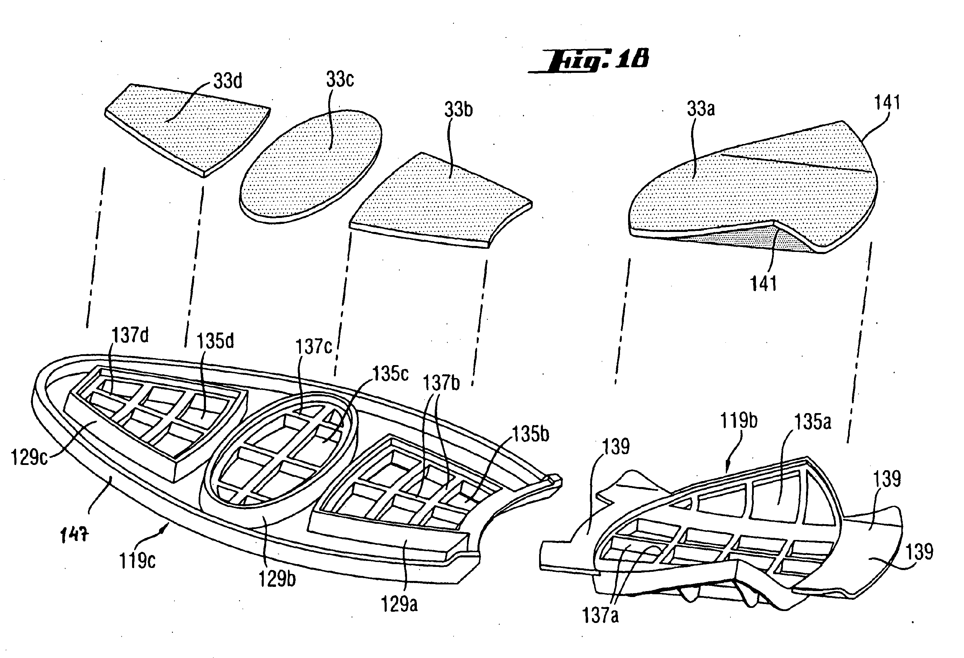

In perspektivischer Schrägansicht von unten einer Modifikation des in Figur 18 dargestellten Fußmittelbereiches der Barriereeinheit, wobei nur ein Mittenbereich dieses Barriereeinheitsteils mit Schuhstabilisierungsmaterial belegt ist und zwei Seitenteile ohne Durchgangsöffnungen ausgebildet sind.

Figur 21:

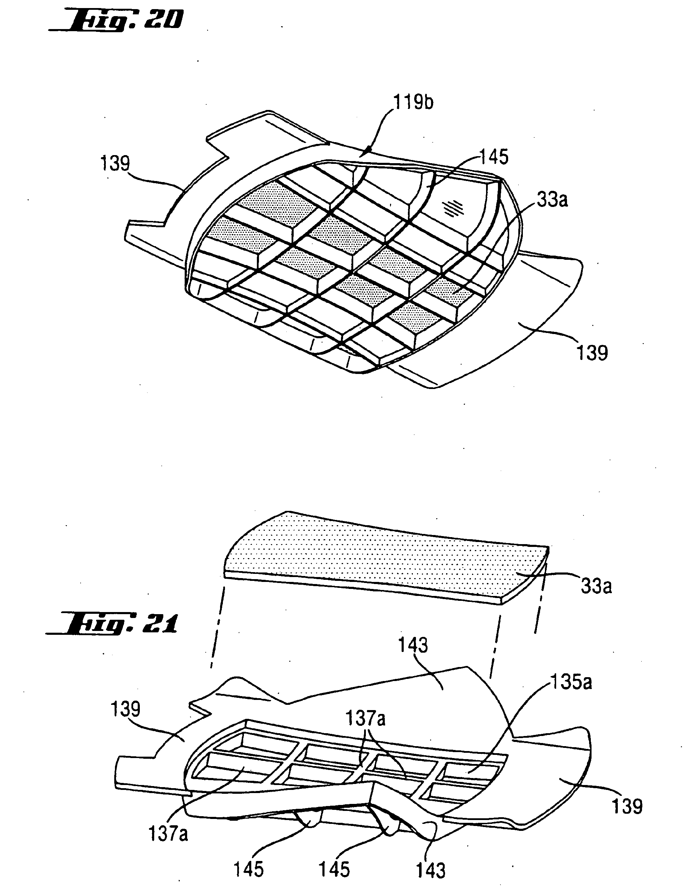

Das in Figur 20 gezeigte Barriereeinheitteil in einer Darstellung, in welcher das zugehörige Stabilisierungseinrichtungsteil und das zugehörige Schuhstabilisierungsmaterialteil getrennt voneinander dargestellt sind.

Figur 22:

Eine schematische Schnittansicht im Vorderfußbereich durch einen schaftbodenseitig geschlossenen Schaft einer ersten Ausführungsform mit einem an den Schaftboden noch nicht angesetztem Schuhsohlenverbund.

Figur 23:

Eine schematische Darstellung eines weiteren Beispiels der Barriereeinheit mit einem Schuhstabilisierungsmaterial und einem Stabilisierungssteg, bei selektiver Verbindung mit einem darüber befindlichem Schaftboden.

Figur 24:

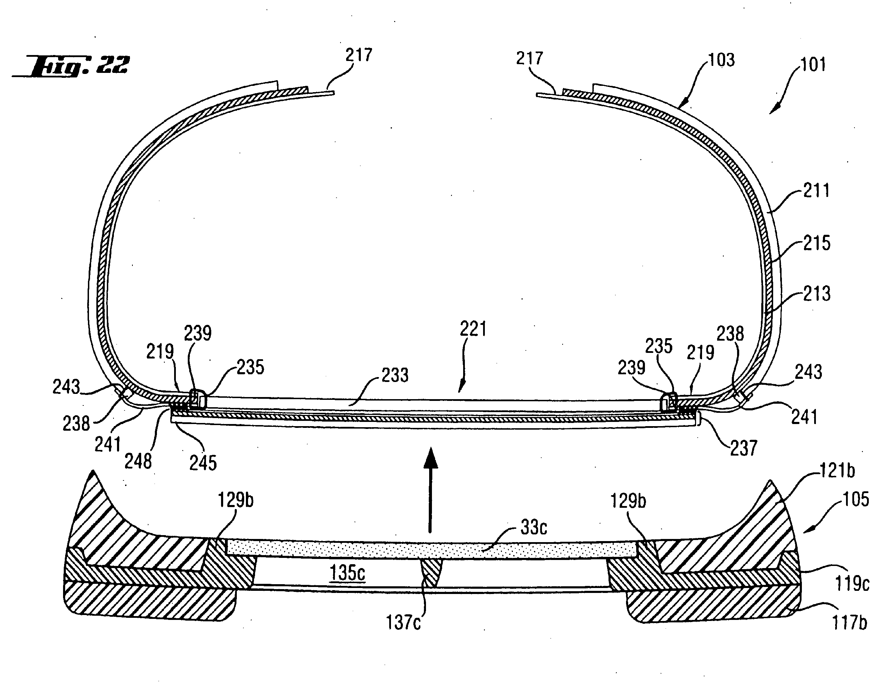

Eine Detailansicht des in Figur 22 gezeigten Schuhaufbaus mit einem angeklebten Sohlenverbund.

Figur 25:

Eine Detailansicht des in Figur 22 gezeigten Sohlenaufbaus mit einem angespritzten Sohlenverbund.

Figur 26:

Einen Schuhaufbau ähnlich dem in Figur 22 gezeigten, jedoch mit einem andersartig aufgebauten Schaftboden, mit einem vom Schaft getrennten Schuhsohlenverbund.

Figur 27:

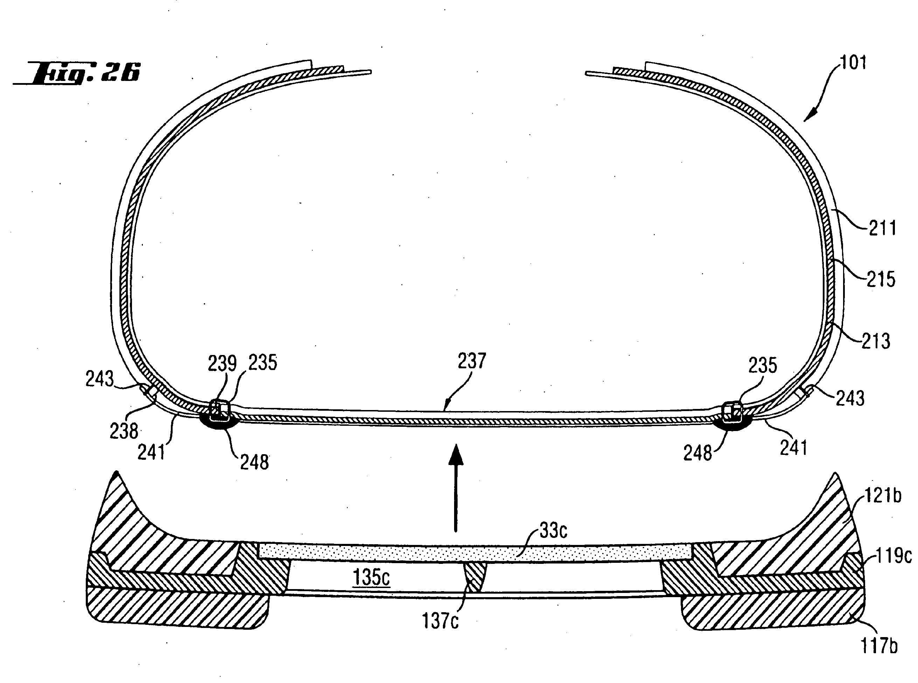

Eine Detailansicht des in Figur 26 gezeigten Schuhaufbaus.

Figur 28:

Einen Sohlenverbund in einer weiteren Ausführungsform.

Figur 29:

Einen Schuhsohlenverbund in einer weiteren Ausführungsform.

Anhand der Figuren 1 bis 3 wird zunächst eine Ausführungsform des erfindungsgemäßen Schuhstabilisierungsmaterials erläutert. Darauf folgen unter Bezugnahme auf die Figuren 4 bis 12 Erläuterungen zu Ausführungsformen einer erfindungsgemäßen Barriereeinheit. Anhand der Figuren 13 bis 29 werden dann Ausführungsformen des erfindungsgemäßen Schuhwerks und erfindungsgemäßer Schuhsohlenverbünde erläutert.

Die in den Figuren 1 bis 3 dargestellte Ausführungsform erfindungsgemäßen Schuhstabilisierungsmaterials besteht aus einem Faserverbund 1 in Form eines thermisch verfestigten und zusätzlich thermisch oberflächenverfestigten Vlieses. Dieser Faserverbund 1 besteht aus zwei Faserkomponenten 2, 3, die beispielsweise je mit Polyesterfasern aufgebaut sind. Dabei weist eine erste Faserkomponente 2, die als Trägerkomponente des Faserverbundes 1 dient, eine höhere Schmelztemperatur auf als die zweite Faserkomponente 3, welche als Verfestigungskomponente dient. Um eine Temperaturstabilität des gesamten Faserverbundes 1 von mindestens 180°C zu gewährleisten, und zwar angesichts dessen, dass Schuhwerk bei seiner Herstellung relativ hohen Temperaturen ausgesetzt werden kann, beispielsweise beim Anspritzen einer Laufsohle, werden bei der betrachteten Ausführungsform für beide Faserkomponenten Polyesterfasern mit einer über 180°C liegenden Schmelztemperatur eingesetzt. Es gibt verschiedene Variationen von Polyesterpolymeren, die verschiedene Schmelztemperaturen und entsprechend darunter liegende Erweichungstemperaturen haben. Bei der betrachteten Ausführungsform erfindungsgemäßen Schuhstabilisierungsmaterials wird für die erste Komponente ein Polyesterpolymer mit einer Schmelztemperatur von etwa 230°C gewählt, während für mindestens einen Faseranteil der zweiten Faserkomponente 3 ein Polyesterpolymer mit einer Schmelztemperatur von etwa 200°C gewählt wird. Bei einer Ausführungsform, bei welcher die zweite Faserkomponente zwei Faseranteile in Form einer Kern-Mantel-Faserstruktur aufweist, besteht der Kern 4 dieser Faserkomponente aus einem Polyester mit einer Erweichungstemperatur von etwa 230°C und besteht der Mantel dieser Faserkomponente aus Polyester mit einer Klebeerweichungstemperatur von etwa 200°C (Figur 2b). Eine derartige Faserkomponente mit zwei Faseranteilen unterschiedlicher Schmelztemperatur wird auch kurz als "Bico" bezeichnet. Im Folgenden wird auch dieser Kurzbegriff verwendet werden.

Bei der betrachteten Ausführungsform handelt es sich bei den Fasern der beiden Faserkomponenten je um Stapelfasern mit den oben genannten speziellen Beschaffenheiten. Bezogen auf das gesamte Flächengewicht des Faserverbundes 1 von etwa 400 g/m$^2$ beträgt der Gewichtsanteil der ersten Faserkomponente etwa 50%. Dementsprechend beträgt der Gewichtsanteil der zweiten Faserkomponente ebenfalls etwa 50% bezogen auf das Flächengewicht des Faserverbundes 1. Die Feinheit der ersten Faserkomponente liegt bei 6,7 dtex, wohingegen die als Bico ausgebildete zweite Faserkomponente 3 eine höhere Feinheit von 4,4 dtex aufweist.

Zur Herstellung erfindungsgemäßen Schuhstabilisierungsmaterials werden zunächst die als Stapelfasern vorliegenden Faserkomponenten gemischt. Danach werden mehrere Einzellagen dieses Stapelfasergemisches in Form mehrerer Einzelvlieslagen aufeinander gelegt, bis das für den Faserverbund 1 angestrebte Flächengewicht erreicht ist, wodurch man zu einem Vliespaket gelangt. Dieses Vliespaket hat nur sehr geringe mechanische Stabilität und muss deshalb einige Verfestigungsprozesse durchlaufen.

Zunächst erfolgt eine mechanische Verfestigung des Vliespaketes durch Vernadelung mittels Nadeltechnik, wobei in einer Nadelmatrix angeordnete Nadelbalken das Vliespaket senkrecht zur Erstreckungsebene des Vliespaketes durchdringen. Dadurch werden Fasern des Vliespaketes aus ihrer ursprünglichen Lage im Vliespaket heraus umorientiert, wodurch es zu einer Verknäuelung von Fasern und zu einem stabileren mechanischen Aufbau des Vliespaketes kommt. Ein durch derartige Vernadelung mechanisch verfestigtes Vliesmaterial ist in schematisierter Weise in Figur 1 gezeigt.

Durch den Vernadelungsprozeß wird bereits die Dicke des Vliespaketes gegenüber der Ausgangsdicke des unvernadelten Vliespaketes reduziert. Allerdings ist dieser durch Vernadelung erhaltene Aufbau noch nicht dauerhaft haltbar, da es sich um eine rein mechanische dreidimensionale "Verhakung" der Stapelfasern handelt, die unter Belastung wieder "enthakt" werden können.

Um eine bleibende Stabilisierung zu erreichen, nämlich eine stabilisierende Eigenschaft für die Verwendung in Schuhwerk, wird der erfindungsgemäße Faserverbund 1 weiter behandelt. Dabei werden thermische Energie und Druck eingesetzt.

Bei diesem Prozess wird die vorteilhafte Zusammensetzung des Fasergemisches ausgenutzt, wobei für die thermische Verfestigung des Fasergemisches eine solche Temperatur gewählt wird, dass sie mindestens im Bereich der Klebeerweichungstemperatur des bei niedrigerer Temperatur schmelzenden Mantels 5 des Kern-Mantel-Bicos liegt, um diese soweit in einen viskosen Zustand zu erweichen, dass die Faseranteile der ersten Faserkomponente, die sich in der Nähe der erweichten Masse des Mantels 5 des jeweiligen Bicos befinden, in dieser viskosen Masse teilweise eingeschlossen werden können. Dadurch werden die beiden Faserkomponenten dauerhaft miteinander verbunden, ohne den grundsätzlichen Aufbau und die Struktur des Vlieses zu verändern. Somit können weiterhin die vorteilhaften Eigenschaften dieses Vlieses genutzt werden, insbesondere deren gute Wasserdampfdurchlässigkeit, kombiniert mit einer dauerhaften mechanischen Stabilisierungseigenschaft.

Ein derartig thermisch verfestigtes Vlies ist in schematisierter Darstellung in Figur 2 gezeigt, wobei in Figur 2a eine detaillierte Ansicht eines Ausschnittes mit stark vergrößertem Maßstab gezeigt ist, in welchem Kleberverbindungspunkte zwischen einzelnen Fasern durch flächige schwarze Flecken dargestellt sind, und Figur 2b einen Bereich dieses Ausschnitts in noch größerem Maßstab zeigt.

Zusätzlich zu der thermischen Verfestigung des Vliesmaterials kann noch eine thermische Oberflächenverpressung an mindestens einer Oberfläche des Vliesmaterials durchgeführt werden, indem diese Vliesmaterialoberfläche gleichzeitig Druck- und Temperatureinwirkung ausgesetzt wird, beispielsweise mittels geheizter Pressplatten oder Presswalzen. Die Folge ist eine noch stärkere Verfestigung als im restlichen Volumen des Vliesmaterials und eine Glättung der thermisch verpressten Oberfläche.

Ein zunächst durch Vernadelung mechanisch verfestigtes, dann thermisch verfestigtes und schließlich an einer seiner Oberflächen thermisch oberflächenverpresstes Vlies ist in Figur 3 schematisiert dargestellt.

In einer beiliegenden Vergleichstabelle sind verschiedene Materialarten einschließlich erfindungsgemäßen Schuhstabilisierungsmaterials hinsichtlich einiger Parameter gegenübergestellt. Dabei werden Sohlensplitleder, zwei nur nadelverfestigte Vliesmaterialien, ein nadelverfestigtes und thermisch verfestigtes Vlies und schließlich ein nadelverfestigtes, thermisch verfestigtes und thermisch oberflächenverpresstes Vlies betrachtet, wobei diesen Materialien in der Vergleichstabelle zur Vereinfachung der nachfolgenden Betrachtung der Vergleichstabelle Materialnummern 1 bis 5 zugeordnet sind.

Die Längsdehnungswerte und die Querdehnungswerte zeigen, um welchen Prozentwert sich das jeweilige Material dehnt, wenn es mit einer Dehnkraft von 50 N, 100 N bzw. 150 N beaufschlagt wird. Je geringer diese Längs- bzw. Querdehnung ausfällt, umso stabiler ist das Material und desto besser eignet es sich als Schuhstabilisierungsmaterial. Wird das jeweilige Material als Barrierematerial zum Schutz einer Membran gegen das Hindurchdrücken von Fremdkörpern wie Steinchen verwendet, ist die Durchstichfestigkeit von Wichtigkeit. Bedeutsam ist für den Einsatz des jeweiligen Materials in einem Schuhsohlenverbund auch die Abriebfestigkeit, in der Vergleichstabelle Abrasion genannt.

Aus der Vergleichstabelle lässt sich entnehmen, dass Sohlensplitleder zwar eine hohe Reißfestigkeit, eine relativ gute Beständigkeit gegen Dehnkräfte und eine hohe Durchstichfestigkeit aufweist, dass es aber nur eine mittelmäßige Abriebfestigkeit bei nassen Proben und insbesondere eine recht mäßige Wasserdampfdurchlässigkeit hat.

Die nur nadelverfestigten Vliesmaterialien (Material 2 und Material 3) sind zwar relativ leicht und besitzen einen im Vergleich zu Leder hohen Wasserdampfdurchlässigkeitswert, haben jedoch gegenüber Dehnkräften einen relativ geringen Dehnwiderstand, besitzen eine nur geringe Durchstichfestigkeit und haben lediglich eine mittelmäßige Abriebfestigkeit.

Das nadelverfestigte und thermisch verfestigte Vlies (Material 4) hat bei geringerer Dicke ein höheres Flächengewicht als die Materialien 2 und 3, ist somit kompakter. Die Wasserdampfdurchlässigkeit des Materials 4 ist höher als die des Materials 2 und etwa gleich hoch wie die des Materials 3, jedoch nahezu dreimal so groß wie die des Leders gemäß Material 1. Die Längs- und Querdehnungswiderstände des Materials 4 sind deutlich höher als die der nur nadelverfestigten Vliesmaterialien 2 und 3, und die Längs- und Querbelastung bis zum Reißen ist auch deutlich höher als bei den Materialien 2 und 3. Wesentlich höher als bei den Materialien 2 und 3 sind bei Material 4 auch die Durchstichfestigkeit und die Abriebfestigkeit.

Das Material 5, also nadelverfestigtes, thermisch verfestigtes und an einer Oberfläche thermisch verpresstes Vlies-Material hat aufgrund der thermischen Oberflächenverpressung bei gleichem Flächengewicht eine geringere Dicke als das Material 4, trägt somit in einem Schuhsohlenverbund weniger auf. Die Wasserdampfdurchlässigkeit des Materials 5 liegt noch über der des Materials 4. Hinsichtlich des Dehnungswiderstandes ist das Material 5 dem Material 4 auch überlegen, da es bei den angewendeten Längs- und Querdehnungskräften von 50 N bis 150 N keine Dehnung zeigt. Die Reißfestigkeit ist bezüglich Längsbelastung höher und bezüglich Querbelastung geringer als die des Materials 4.

Die Durchstichfestigkeit liegt etwas unter der des Materials 4, was durch die geringere Dicke des Materials 5 verursacht wird. Eine besondere Überlegenheit gegenüber allen Materialien 1 bis 4 hat das Material 5 hinsichtlich der Abriebfestigkeit.

Die Vergleichstabelle zeigt somit, dass dann, wenn es bei Schuhstabilisierungsmaterial auf eine hohe Wasserdampfdurchlässigkeit, hohe Formbeständigkeit und damit Stabilisierungswirkung und hohe Abriebfestigkeit ankommt, das Material 4, insbesondere das Material 5 ganz besonders gut geeignet ist.

Im Fall des Materials 5 wird das nadelverfestigte und thermisch verfestigte Vlies, das bereits eine sehr gute Stabilisierung aufweist, bei einer Ausführungsform der Erfindung anschließend noch einer Hydrophobierungsausrüstung unterzogen, beispielsweise durch einen Tauchvorgang in einer eine Hydrophobierung bewirkenden Flüssigkeit, um Saugeffekte des Vliesmaterials zu minimieren. Nach dem Hydrophobierungsbad wird das Vlies unter Hitzeeinwirkung getrocknet, wobei auch die hydrophobe Eigenschaft der aufgebrachten Ausrüstung nochmals verbessert wird. Nach dem Trocknungsprozess durchläuft das Vlies ein Kalibrierwerk, wobei auch die endgültige Dicke von beispielsweise 1,5 mm eingestellt wird.

Um eine besonders glatte Oberfläche zu erzielen, wird das Vlies anschließend nochmals mit Temperatur und Druck beaufschlagt, um die schmelzfähigen Faseranteile, nämlich im Mantel 5 des Bicos der zweiten Faserkomponente, an der Oberfläche des Vlieses nochmals anzuschmelzen und mit Hilfe von gleichzeitig aufgebrachtem Druck gegen eine sehr glatte Oberfläche zu pressen. Dies geschieht entweder mit geeigneten Kalandereinrichtungen oder mittels eines beheizten Presswerks, wobei zwischen Vlies und beheizter Pressplatte eine Trennmateriallage eingebracht werden kann, bei der es sich beispielsweise um Silikonpapier oder Teflon handelt.

Die Oberflächenglättung durch thermische Oberflächenverpressung wird je nach den gewünschten Eigenschaften des Schuhstabilisierungsmaterials nur auf einer Oberfläche oder beiden Oberflächen des Vliesmaterials durchgeführt.

Wie bereits die Vergleichstabelle zeigt, weist das so hergestellte Vlies eine hohe Stabilität gegen Reißbelastung auf und besitzt eine gute Durchstichfestigkeit, was bei der Verwendung des Schuhstabilisierungsmaterials als Barrierematerial zum Schutz einer Membran wichtig ist.

Das zuvor beschriebene Material 5 stellt ein erstes Ausführungsbeispiel erfindungsgemäßen Schuhstabilisierungsmaterials dar, bei welchem beide Faserkomponenten aus Polyester bestehen, beide Faserkomponenten an dem Gesamtfaserverbund einen Gewichtsprozentanteil von je 50% haben und es sich bei der zweiten Faserkomponente um eine Polyester-Kern-Mantel-Faser vom Bico-Typ handelt.

Es werden nun noch kurz weitere Ausführungsbeispiele des erfindungsgemäßen Schuhstabilisierungsmaterials betrachtet.

Ausführungsbeispiel 2:

Schuhstabilisierungsmaterial, bei welchem beide Faserkomponenten aus Polyester bestehen und an dem gesamten Faserverbund einen Gewichtsprozentanteil von je 50% haben und die zweite Faserkomponente 3 ein Bico aus Polyester vom Seite-an-Seite-Typ ist.

Mit Ausnahme der speziellen Bico-Struktur wird das Schuhstabilisierungsmaterial gemäß Ausführungsbeispiel 2 auf die gleiche Weise hergestellt und weist die gleichen Eigenschaften auf wie das Schuhstabilisierungsmaterial gemäß Ausführungsbeispiel 1 mit einer Bico vom Kern-Mantel-Typ.

Ausführungsbeispiel 3:

Schuhstabilisierungsmaterial, bei welchem beide Faserkomponenten einen Gewichtsprozentanteil von je 50% haben und die erste Faserkomponente 2 aus Polyester und die zweite Faserkomponente 3 aus Polypropylen besteht.

Bei diesem Ausführungsbeispiel wird als zweite Faserkomponente 3 kein Bico sondern eine Einkomponentenfaser verwendet. Zur Herstellung des Faserverbundes 1 werden lediglich zwei Faserkomponenten mit unterschiedlichen Schmelztemperaturen gewählt. In diesem Fall stellt die Polyesterfaser (mit einer Schmelztemperatur von etwa 230°C) mit einem Gewichtsanteil von 50% die Trägerkomponente dar, während die Polypropylenfaser mit einem Gewichtsanteil von ebenfalls 50% eine niedrigere Schmelztemperatur von etwa 130°C aufweist und somit die klebefähige Verfestigungskomponente darstellt. Der Herstellungsprozess verläuft ansonsten wie beim Ausführungsbeispiel 1. Im Vergleich zum Ausführungsbeispiel 2 weist das Vlies gemäß Ausführungsbeispiel 3 eine niedrigere thermische Stabilität auf, kann dafür aber auch unter Verwendung niedrigerer Temperaturen hergestellt werden.

Ausführungsbeispiel 4:

Schuhstabilisierungsmaterial mit einem Anteil von 80% Polyester als erste Faserkomponente 2 und einem Polyester-Kern-Mantel-Bico als zweite Faserkomponente 3.

Bei diesem Ausführungsbeispiel geschieht die Herstellung wieder wie beim Ausführungsbeispiel 1, allerdings mit dem Unterschied, dass der Anteil der die Verfestigungskomponente bildenden zweiten Faserkomponente verändert ist. Deren Gewichtsanteil beträgt nur noch 20% gegenüber 80% des Gewichtes, das durch die höher schmelzende erste Faserkomponente 2 gebildet ist. Durch die anteilsmäßige Reduzierung der Verfestigungskomponente wird die stabilisierende Wirkung des erhaltenen Schuhstabilisierungsmaterials reduziert. Dies kann vorteilhaft sein, wenn ein Vlies mit hoher mechanischer Haltbarkeit kombiniert mit erhöhter Flexibilität gefordert wird. Die Temperaturbeständigkeit dieses Vlieses entspricht der des ersten Ausführungsbeispiels.

Anhand der Figuren 4 bis 12 werden nun einige Ausführungsbeispiele für einen Schuhsohlenverbund bzw. eine Barriereeinheit oder Details davon betrachtet.

Figur 4 zeigt einen Teilquerschnitt durch einen Schuhsohlenverbund 21 mit einer unten liegenden Laufsohle 23 und einer darüber befindlichen Stabilisierungseinrichtung 25, bevor dieser Schuhsohlenverbund 21 mit einem Schuhstabilisierungsmaterial versehen wird. Die Laufsohle 23 und die Stabilisierungseinrichtung 25 weisen je Durchgangsöffnungen 27 bzw. 29 auf, die insgesamt eine Durchbrechung 31 durch die Gesamtdicke des Schuhsohlenverbundes 21 bilden. Die Durchbrechung 31 wird somit durch die Schnittfläche der beiden Durchgangsöffnungen 27 und 29 gebildet. Zur Vervollständigung dieses Schuhsohlenverbundes 21 wird dann noch (in Figur 4 nicht gezeigtes) Schuhstabilisierungsmaterial 33 in die Durchgangsöffnung 29 gelegt oder über dieser angeordnet.

Figur 5 zeigt ein Beispiel einer Barriereeinheit 35 mit einem Stück Schuhstabilisierungsmaterial 33, das von einer Stabilisierungseinrichtung 25 eingefasst ist.

In einer Ausführungsform ist die Stabilisierungseinrichtung um das Stück Schuhstabilisierungsmaterial 33 herumspritzt oder daran angespritzt derart, dass das Material der Stabilisierungseinrichtung 25 in die Faserstruktur des Schuhstabilisierungsmaterials 33 eindringt und dort aushärtet und einen festen Verbund bildet.

Als Material für das Umspritzen der Stabilisierungseinrichtung bzw. das Anspritzen an die Stabilisierungseinrichtung eignet sich beispielsweise Thermoplastisches Polyurethan (TPU), das zu einer sehr guten Einfassung des Barrierematerials führt und sich mit diesem gut verbindet.

In einer weiteren Ausführungsform ist das Schuhstabilisierungsmaterial 33 an die Stabilisierungseinrichtung 25 angeklebt. Vorzugsweise weist die Stabilisierungseinrichtung 25 einen mindestens den Schuhsohlenverbund 21 stabilisierenden Stabilisierungsrahmen 147 auf.

Figur 6 zeigt eine Barriereeinheit 35, bei welcher ein Stück Schuhstabilisierungsmaterial 33 von einer Stabilisierungseinrichtung 25 eingefasst wird in dem Sinn, dass der Randbereich des Schuhstabilisierungsmaterials 33 von der Stabilisierungseinrichtung 25 nicht nur umgeben, sondern auch auf beiden Oberflächen übergriffen wird.

Figur 7 zeigt eine Barriereeinheit 35, bei welcher ein Stück Stabilisierungsmaterial 33 von einer Stabilisierungseinrichtung 25 eingefasst ist. Mindestens eine Oberfläche des Schuhstabilisierungsmaterials 33 ist mit mindestens einem Stabilisierungssteg 37 versehen, welcher die Fläche der Öffnung mindestens teilweise überquert. Vorzugsweise ist der mindestens ein Stabilisierungssteg 37 auf einer Unterseite, welche zur Laufsohle gerichtet ist, angeordnet.

Figur 8 zeigt eine Barriereeinheit 35, bei welcher ein Stück Schuhstabilisierungsmaterial 33 mit einer Stabilisierungseinrichtung 25 in Form mindestens eines Stabilisierungsstegs 37 versehen ist. Der Stabilisierungssteg 37 ist mindestens auf einer Oberfläche des Schuhstabilisierungsmaterials 33 angeordnet, vorzugsweise auf der nach unten, zur Laufsohle 23 gerichteten Oberfläche.

Figur 9 zeigt eine Barriereeinheit 35, bei welcher ein Stück Schuhstabilisierungsmaterial 33 mit einer Stabilisierungseinrichtung 25 derart versehen ist, dass das Schuhstabilisierungsmaterial 33 auf mindestens einer Oberfläche der Stabilisierungseinrichtung 25 angebracht ist. Dabei überdeckt das Schuhstabilisierungsmaterial 33 die Durchgangsöffnung 29.

Figur 10 zeigt einen Schuhsohlenverbund 21 gemäß Figur 4, der oberhalb der Laufsohle 23 eine Barriereeinheit 35 gemäß Figur 5 aufweist.

Für alle oben beschriebenen Ausführungsformen gemäß Fig. 4-10 gilt, dass das Verbindungsmaterial beim Anspritzen, Umspritzen oder Kleben zwischen Stabilisierungsmaterial 33 und Stabilisierungseinrichtung 25 nicht nur an den zu verbindenden Flächen haftet, sondern in die Faserstruktur eindringt und dort aushärtet. Somit wird die Faserstruktur in ihrem Verbindungsbereich zusätzlich verstärkt.

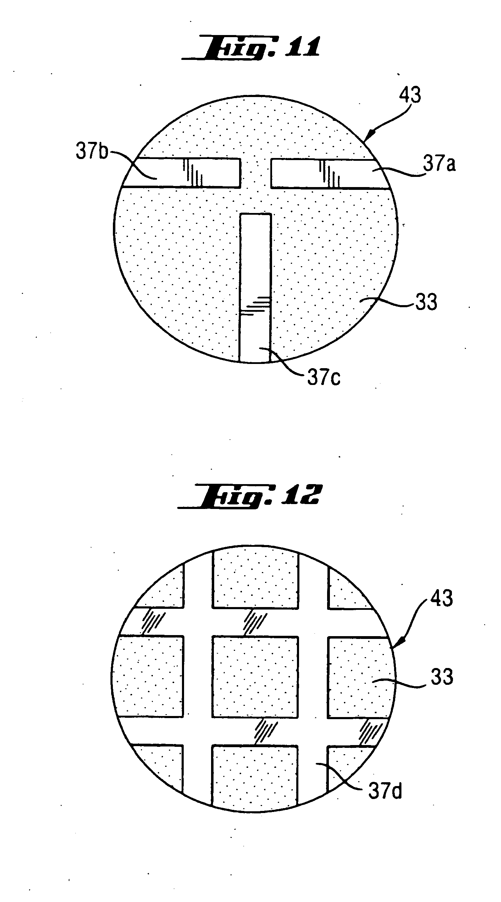

In den Figuren 11 und 12 sind noch zwei Ausführungsformen von Stabilisierungsstegmustern 37 von auf einer Oberfläche des Schuhstabilisierungsmaterials 33 aufgebrachten Stabilisierungsstegen 37 gezeigt. Während im Fall der Figur 11 auf einer Kreisfläche 43 der beispielsweise Unterseite des Schuhstabilisierungsmaterials 33, die beispielsweise einer Durchbrechung des Schuhsohlenverbundes 21 entspricht, drei Einzelstege 37a, 37b und 37c in T-förmiger gegenseitiger Anordnung angeordnet sind, beispielsweise durch Aufkleben auf die Unterseite des Schuhstabilisierungsmaterials 33, ist im Fall der Figur 12 eine Stabilisierungsstegeinrichtung 37 in Form eines Stabilisierungsgitters 37d vorgesehen.

Unter Bezugnahme auf die Figuren 13 bis 29 werden nun Ausführungsformen von erfindungsgemäß ausgebildeten Schuhen erläutert, wobei auch deren Einzelkomponenten, insbesondere in Verbindung mit dem jeweiligen Schuhsohlenverbund 21 betrachtet werden.

Figur 13 zeigt in perspektivischer Schrägansicht von unten ein Ausführungsbeispiel eines erfindungsgemäßen Schuhs 101 mit einem Schaft 103 und einem erfindungsgemäßen Schuhsohlenverbund 105. Der Schuh 101 weist einen Vorderfußbereich 107, einen Mittelfußbereich 109, einen Fersenbereich 111 und eine Fußeinschlüpföffnung 113 auf. Der Schuhsohlenverbund 105 weist an seiner Unterseite eine mehrteilige Laufsohle 117 auf, die ein Laufsohlenteil 117a im Fersenbereich, ein Laufsohlenteil 117b im Fußballenbereich und ein Laufsohlenteil 117c im Zehenbereich des Schuhsohlenverbundes 105 aufweist. Diese Laufsohlenteile 117 sind an der Unterseite einer Stabilisierungseinrichtung 119 befestigt, die einen Fersenbereich 119a, einen Mittelfußbereich 119b und einen Vorderfußbereich 119c aufweist. Der Schuhsohlenverbund 105 wird unter Bezugnahme auf nachfolgende Figuren noch detaillierter erläutert werden.

Weitere Bestandteile des Schuhsohlenverbundes 105 können Dämpfungssohlenteile 121 a und 121 b sein, welche im Fersenbereich 111 und im Vorderfußbereich 107 auf der Oberseite der Stabilisierungseinrichtung 119 aufgebracht sind. Die Laufsohle 117 und die Stabilisierungseinrichtung 119 weisen je Durchgangsöffnungen auf, die Durchbrechungen durch den Schuhsohlenverbund bilden. Diese Durchbrechungen sind durch Schuhstabilisierungsmaterialteile 33a-33d in wasserdampfdurchlässiger Weise abgedeckt.

Figur 14a zeigt den Schuh 101 gemäß Figur 13 in einem Herstellungsstadium, in welchem der Schaft 103 und der Schuhsohlenverbund 105 noch voneinander getrennt sind. Der Schaft 103 ist an seinem sohlenseitigen unteren Endbereich mit einem Schaftboden 115 versehen, der eine wasserdichte, wasserdampfdurchlässige Schaftbodenfunktionsschicht aufweist, bei der es sich um eine wasserdichte, wasserdampfdurchlässige Membran handeln kann. Die Funktionsschicht ist vorzugsweise Bestandteil eines mehrlagigen Funktionsschichtlaminates, das neben der Funktionsschicht mindestens eine Stützschicht, beispielsweise eine textile Abseite als Verarbeitungsschutz, aufweist. Zusätzlich kann der Schaftboden 115 mit einer Schaftmontagesohle versehen sein. Es besteht aber auch die Möglichkeit, dem Funktionsschichtlaminat die Funktion einer Schaftmontagesohle zuzuordnen. Der Schuhsohlenverbund weist weiter die bereits in Figur 8 erwähnten Durchbrechungen 31 auf, die mit Schuhstabilisierungsmaterialteilen 33a-33d abgedeckt sind. Die Stege 37 sind innerhalb des Umfangsrandes der jeweiligen Durchbrechungen dargestellt. In weiteren Ausführungsformen können drei Durchbrechungen oder zwei Durchbrechungen oder eine Durchbrechung vorgesehen sein. In einer anderen Ausführungsform sind mehr als vier Durchbrechungen vorgesehen. Der Schuhsohlenverbund 105 kann an dem sohlenseitigen Schaftende entweder durch Anspritzen oder durch Ankleben befestigt werden, um den Zustand gemäß Figur 13 herzustellen. Zur detaillierten Erläuterung der Funktionsschicht sowie deren Laminat, und der Verbindung mit der Montagesohle wird auf die Beschreibung und die Figuren 22 bis 27 verwiesen.

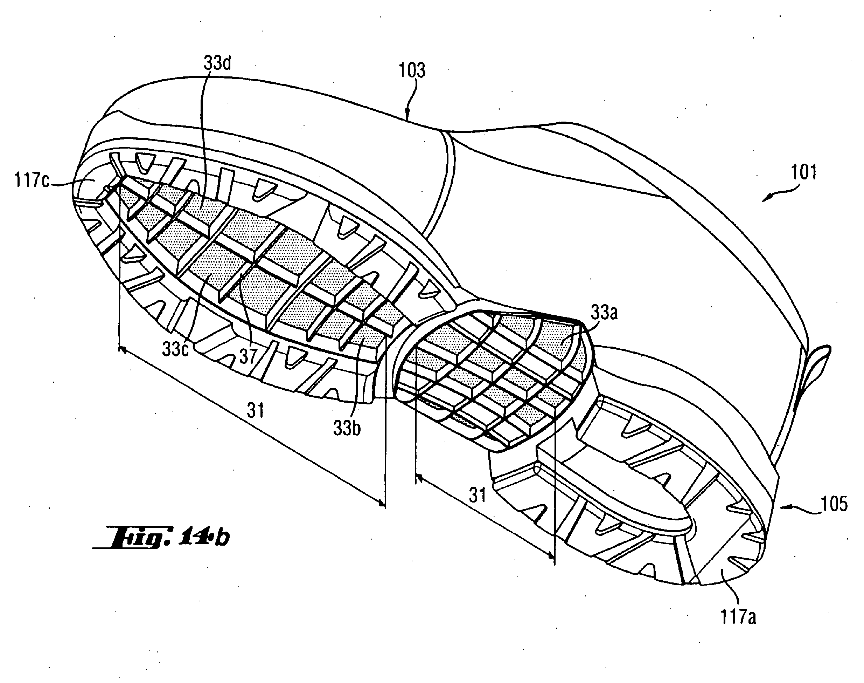

Figur 14b zeigt denselben Schuhaufbau wie in Figur 14a, mit dem Unterschied, dass der Schuh in Figur 14a vier Durchbrechungen 31 aufweist, während der Schuh nach Figur 14b mit zwei Durchbrechungen 31 ausgestattet ist. Hier ist ersichtlich, dass die Stege 37 innerhalb des Umfangsrandes der jeweiligen Durchbrechung 31 angeordnet sind und keine Begrenzung der Durchbrechung 31 bilden. Die Fläche einer Durchbrechung wird abzüglich der Gesamtfläche der sie überquerenden Stege ermittelt, da diese Stegfläche den Wasserdampftransport blockiert.

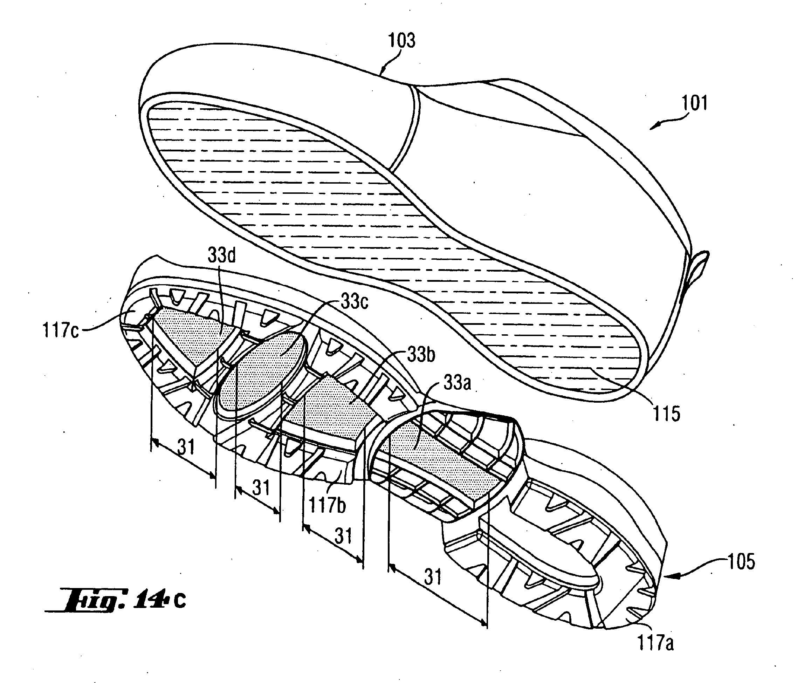

Figur 14c zeigt ebenfalls denselben Schuhaufbau wie in Figur 14a, wobei die vier Durchbrechungen 31 in dieser Ausführungsform frei von Stabilisierungsstegen 37 sind. Dabei können die Durchbrechungen 31 wie auch in Fig. 14a und 14b mit einem oder mehreren Stücken Stabilisierungsmaterial 33 verschlossen sein.

Figur 15 zeigt einen Schuhsohlenverbund 105 mit einer von der Laufsohle 117 abliegenden Oberseite. Die Stabilisierungseinrichtung 119 ist in ihrem Mittelbereich 119b und in ihrem Vorderfußbereich 119c mit mehreren Stücken 33a, 33b, 33c und 33d eines Schuhstabilisierungsmaterials 33 belegt, mit welchen in Figur 15 nicht sichtbare Durchbrechungen des Schuhsohlenverbundes 105 abgedeckt sind. Im Fersenbereich und im Vorderfußbereich des Schuhsohlenverbundes 105 sind auf der Oberseite der Stabilisierungseinrichtung 119 je ein Dämpfungssohlenteil 121 a bzw. 121 b aufgebracht, im Fersenbereich im Wesentlichen vollflächig und im Vorderfußbereich mit Aussparungen dort, wo sich die Schuhstabilisierungsmaterialteile 33b, 33c und 33d befinden.

Da die Laufsohlenteile der Laufsohle 117, die Stabilisierungseinrichtung 119 und die Dämpfungssohlenteile 121 a und 121 b unterschiedliche Funktionen innerhalb des Schuhsohlenverbundes haben, werden sie zweckmäßigerweise auch mit unterschiedlichen Materialien aufgebaut. Die Laufsohlenteile, die eine gute Abriebfestigkeit aufweisen sollen, bestehen beispielsweise aus einem als Laufsohlenmaterial geeigneten thermoplastischen Polyurethan (TPU) oder Gummi. Die Dämpfungssohlenteile 121 a und 121 b, welche für den Benutzer des Schuhs eine Stoßdämpfung bei den Gehbewegungen bewirken sollen, bestehen aus entsprechend elastisch nachgiebigem Material, beispielsweise Ethylen-Vinyl-Acetat (EVA) oder Polyurethan (PU). Die Stabilisierungseinrichtung 119, welche für die nicht zusammenhängenden Laufsohlenteile 117a, 117b, 117c und für die ebenfalls nicht zusammenhängenden Dämpfungssohlenteile 121 a, 121 b als Halter und für den gesamten Schuhsohlenverband 105 als Stabilisierungselement dient und eine entsprechende elastische Steifigkeit haben soll, besteht beispielsweise aus mindestens einem Thermoplasten. Beispiele geeigneter Thermoplaste sind Polyethylen, Polyamid, Polyamid (PA), Polyester (PET), Polyethylen (PE), Polypropylen (PP) und Polyvinylchlorid (PVC). Weitere geeignete Materialien sind Gummi, Thermoplastischer Gummi (TR, von Thermoplastic Rubber) und Polyurethan (PU). Geeignet ist auch Thermoplastisches Polyurethan (TPU).

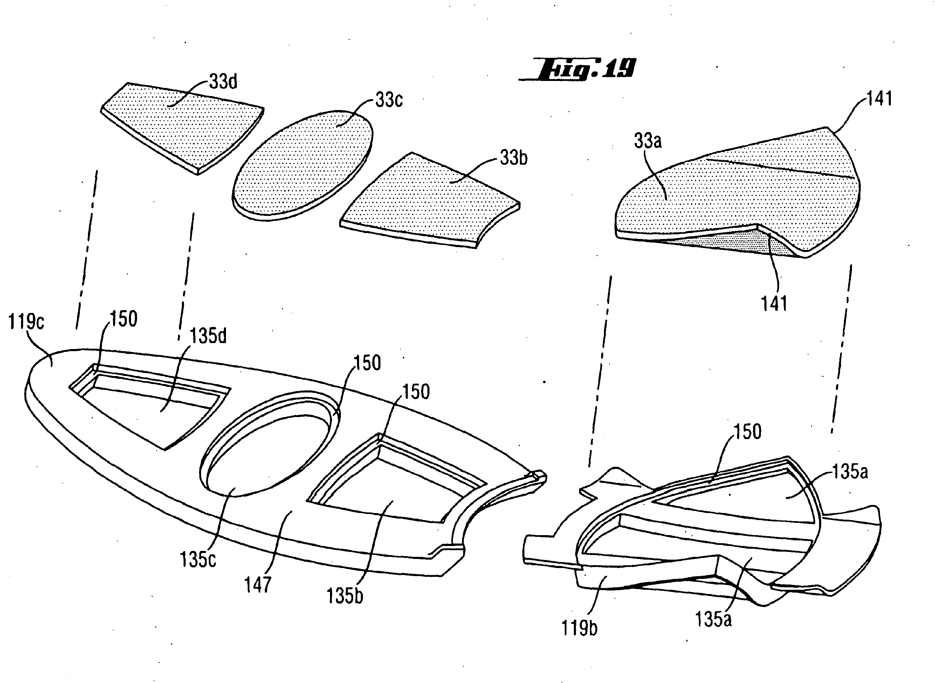

Der in Figur 15 gezeigte Schuhsohlenverbund ist in Figur 16 in Explosionsdarstellung gezeigt, d.h. in einer Darstellung, in welcher die einzelnen Teile des Schuhsohlenverbundes 105 getrennt voneinander dargestellt sind, mit Ausnahme der Schuhstabilisierungsmaterialteile 33a, 33b, 33c und 33d, die als bereits an den Stabilisierungseinrichtungsteilen 119b und 119c angeordnet gezeigt sind. Bei der in Figur 16 gezeigten Ausführungsform weist die Stabilisierungseinrichtung 119 ihre Teile 119a, 119b und 119c als zunächst separate Teile auf, die im Laufe der Montage des Schuhsohlenverbundes 105 miteinander zu der Stabilisierungseinrichtung 119 verbunden werden, was durch Verschweißen oder Verkleben der drei Stabilisierungseinrichtungteile miteinander geschehen kann. Wie noch im Zusammenhang mit Figur 19 erläutert werden wird, befinden sich unterhalb der Schuhstabilisierungsmaterialteile Öffnungen, welche zusammen mit Öffnungen 123a, 123b und 123c in den Laufsohlenteilen 117a, 117b bzw. 117c Durchbrechungen 31 der im Zusammenhang mit Figur 4 bereits erläuterten Art bilden und mit den Schuhstabilisierungsmaterialteilen 33a-33d in wasserdampfdurchlässiger Weise abgedeckt sind. Eine Durchgangsöffnung 125 im Fersenteil 119a der Stabilisierungseinrichtung 119 ist nicht mit Schuhstabilisierungsmaterial 33, sondern mit dem vollflächigen Dämpfungssohlenteil 121 a verschlossen. Damit wird eine bessere Dämpfungswirkung des Schuhsohlenverbundes 105 im Fersenbereich des Schuhs erreicht, wo eine Schwitzfeuchtigkeitabführung unter Umständen weniger erforderlich sein kann, da sich Fußschweiß vorwiegend im Vorderfuß- und Mittelfußbereich bildet, nicht jedoch im Fersenbereich.

Das Dämpfungssohlenteil 121b ist mit Durchgangsöffnungen 127a, 127b und 127c versehen, die so dimensioniert sind, dass die Schuhstabilisierungsmaterialteile 33b, 33c, 33d einfassende Begrenzungsränder 129a, 129b bzw. 129c des Stabilisierungseinrichtungsteils 119c in den Durchgangsöffnungen 127a, 127b bzw. 127c aufgenommen werden können.

In einer weiteren Ausführungsform ist vorgesehen kein Dämpfungssohlenteil 121 zu verwenden. In diesem Fall weisen die Teile der Stabilisierungseinrichtung 119a, 119b und 119c eine plane Oberfläche ohne Begrenzungsrand 129a, 129b, 129c auf, sodass das Stabilisierungsmaterial 33 mit der Oberfläche der Stabilisierungseinrichtung bündig in deren Öffnungen plaziert ist. Der Sohlenverbund wird lediglich durch die Barriereeinheit, aufgebaut aus Schuhstabilisierungsmaterial 33 und der Stabilisierungseinrichtung 119, und die Laufsohle gebildet.

Die in Figur 16 von schräg oben gezeigten Schuhsohlenverbundteile 105 sind in Figur 17 ebenfalls in voneinander getrennter Anordnung gezeigt, allerdings in Schrägansicht von unten. Dabei ist ersichtlich, dass die Laufsohlenteile 117a bis 117c in üblicher Weise mit einem Laufsohlenprofil versehen sind, um die Rutschgefahr zu verringern. Außerdem weisen die Unterseiten der Stabilisierungseinrichtungsteile 119a und 119c an ihrer Unterseite mehrere noppenartige Vorsprünge 131 auf, welche zur Aufnahme von in Figur 16 zu sehenden komplementären Vertiefungen 133 in den Oberseiten der Laufsohlenteile 117a, 117b und 117c zur positionsrichtigen Verbindung der Laufsohlenteile 117a bis 117c mit den zugehörigen Stabilisierungseinrichtungsteilen 119a und 119c dienen. In Figur 17 sind außerdem Öffnungen 135a, 135b, 135c und 135d in den Stabilisierungseinrichtungsteilen 119b und 119c zu sehen, die mit dem je zugehörigen Schuhstabilisierungsmaterialteil 33a, 33b, 33c bzw. 33d in wasserdampfdurchlässiger Weise abgedeckt sind, womit die Durchbrechungen 31 (Figur 4) des Schuhsohlenverbundes 105 in wasserdampfdurchlässiger Weise verschlossen sind. In einer Ausführungsform sind die Schuhstabilisierungsmaterialteile so angeordnet, dass ihre glatte Oberfläche zur Laufsohle hin gerichtet ist. Die Öffnungen 135a bis 135d sind je mit einem Stabilisierungsgitter 137a, 137b, 137c bzw. 137d überbrückt, welche je eine Stabilisierungsstruktur im Bereich der je zugehörigen Öffnung der Stabilisierungseinrichtung 119 bilden. Außerdem wirken diese Stabilisierungsgitter 137a-137d gegen das Eindringen größerer Fremdgegenstände bis zu dem Schuhstabilisierungsmaterial 33 oder noch weitergehend, was vom Benutzer des Schuhs unangenehm gespürt werden könnte.

In einer weiteren Ausführungsform ist die Barriereeinheit zusätzlich als Laufsohle mit einem Laufsohlenprofil ausgebildet.

Zu erwähnen sind noch an den axialen Enden des mittelfußseitigen Stabilisierungseinrichtungsteils 119b vorgesehene Verbindungselemente 139, die beim Zusammensetzen der Stabilisierungseinrichtung 119 aus den drei Stabilisierungseinrichtungsteilen 119a bis 119c auf den von der Laufsohlenanbringseite abgewandten oberen Seiten der Stabilisierungseinrichtungsteile 119a und 119c überlappend zu liegen kommen, um dort befestigt zu werden, beispielsweise durch Verschwei-βen oder Verkleben.

Figur 18 zeigt in gegenüber Figur 17 vergrößerter Darstellung die beiden Stabilisierungseinrichtungsteile 119c und 119b vor ihrer Befestigung aneinander, wobei die Öffnungen 135b bis 135d des vorderfußseitigen Stabilisierungseinrichtungsteils 119c und die darin befindlichen Stabilisierungsgitterstrukturen besonders gut zu sehen sind. Deutlich wird auch, dass das mittlere Stabilisierungseinrichtungsteil 119b an den Längsseiten hochgebogene Rahmen- und Gitterteile zeigt. Das auf das Stabilisierungseinrichtungsteil 119b aufzulegende Schuhstabilisierungsmaterialstück 33a ist an seinen Längsseiten mit entsprechend hochgebogenen Seitenflügeln 141 versehen. Durch diese hochgebogenen Teile sowohl des Schuhstabilisierungsteils 119b als auch des Schuhstabilisierungsmaterialstücks 33a wird eine Anpassung an die Form der seitlichen Mittelfußflanken erreicht. Die restlichen Schuhstabilisierungsmaterialteile 33b bis 33d sind im Wesentlichen flach, entsprechend der im Wesentlichen flachen Ausbildung des vorderfußseitigen Stabilisierungseinrichtungsteils 119c.

Figur 19 zeigt eine weitere Ausführungsform des Vorderfußbereiches 107 und des Mittelfußbereiches 109 gemäß Figur 17. Hierbei ist die Stabilisierungseinrichtung 119 ohne Stabilisierungsstege 37 gebildet. Dabei schließt die Oberfläche des Stabilisierungsmaterials 33 plan mit der Oberfläche der Stabilisierungseinrichtung 119 ab. Die Öffnungen 135 a-d sind jeweils mit umlaufenden Auflagevorsprüngen 150 ausgestattet zur Aufnahme des Stabilisierungsmaterials 33, sodaß dieses in die Öffnungen 135 a-d eingepasst werden kann.

Allgemein ist hier hinzuzufügen, dass die mindestens eine Öffnung 135 a-135d der Stabilisierungseinrichtung 119b und 119c durch den Rahmen 147 der Stabilisierungseinrichtung 119 begrenzt ist und nicht durch möglicherweise vorhandene Stege 37 in den Öffnungen 135 a-135d. Die in Figur 18 gezeigten Begrenzungsränder 129 a-129c stellen in dieser Ausführungsform einen Teil des jeweiligen Rahmens 147 dar.

Es ist weiterhin möglich, anstelle mehrerer Schuhstabilisierungsmaterialteile 33b, 33c, 33d ein einstückiges Schuhstabilisierungsmaterialteil zu verwenden. Die Auflagevorsprünge 150 und/oder Begrenzungsränder 129 a-c müssen entsprechend gestaltet werden.

Eine weitere Modifikation des für den Mittelfußbereich vorgesehenen Barriereeinheitteils mit dem Stabilisierungseinrichtungsteil 119b und dem Schuhstabilisierungsmaterialteil 33a ist in den Figuren 20 und 21 gezeigt, in Figur 20 im fertig montierten Zustand und in Figur 21, während diese beiden Teile noch voneinander getrennt sind. Im Unterschied zu den Varianten in den Figuren 18 bis 19 ist bei der Modifikation der Figuren 21 und 20 das für den Mittelfußbereich vorgesehene Stabilisierungseinrichtungsteil 119b nur im Mittenbereich mit einer Öffnung und einem darin befindlichen Stabilisierungsgitter 137a versehen, während die beiden Flügelteile 143 an den Längsseiten des Stabilisierungseinrichtungsteils 119b durchgehend ausgebildet sind, d.h., keine Öffnung aufweisen, sondern lediglich an ihrer Unterseite mit Stabilisierungsrippen 145 versehen sind. Dementsprechend ist das für dieses Barriereeinheitteil vorgesehene Schuhstabilisierungsmaterialstück 33a schmaler als bei den Varianten der Figuren 18 und 19, weil es nicht die Seitenflügel 141 gemäß den Figuren 18 und 19 benötigt.

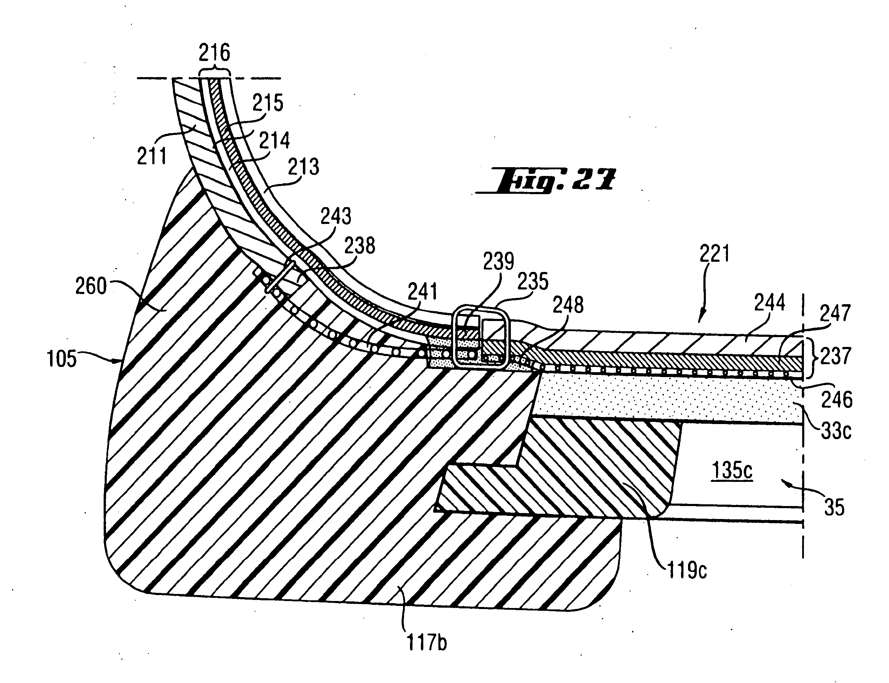

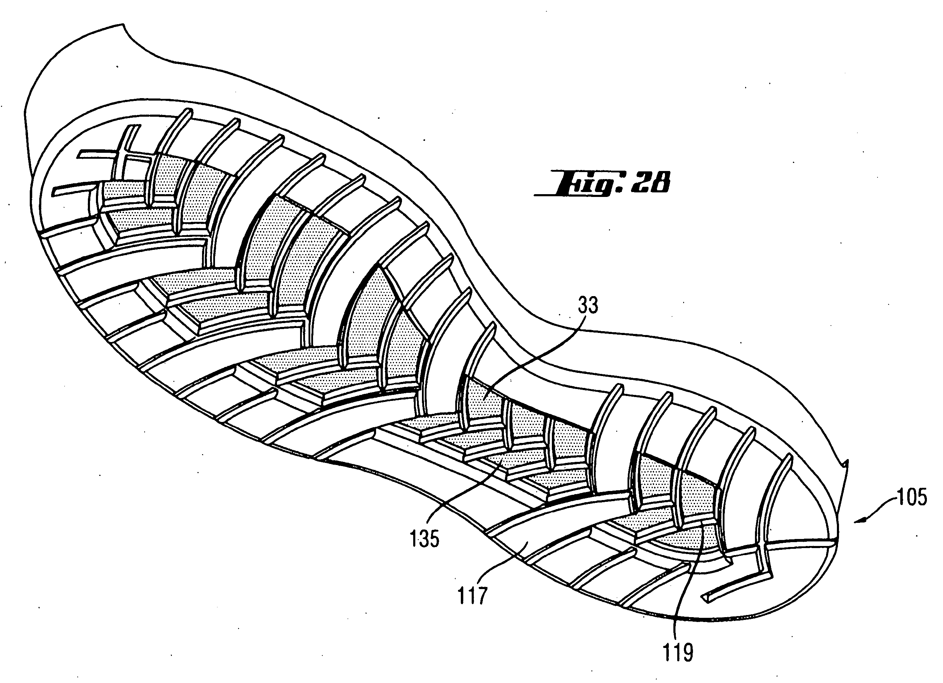

Während anhand der Figuren 15 bis 21 Ausführungsformen des erfindungsgemä-βen Schuhsohlenverbundes 105 erläutert worden sind, werden nun anhand der Figuren 22 bis 29 Ausführungsformen und Einzelheiten von erfindungsgemäßem Schuhwerk erläutert, das mit einem erfindungsgemäßen Schuhsohlenverbund aufgebaut ist. Dabei zeigen die Figuren 22, 24 und 25 eine Ausführungsform des erfindungsgemäßen Schuhwerks, bei welchem der Schaftboden 221 eine Schaftmontagesohle 233 und zusätzlich ein Funktionsschichtlaminat 237 aufweist, während die Figuren 26 und 27 eine Ausführungsform erfindungsgemäßen Schuhwerks zeigen, bei welchem ein Schaftbodenfunktionsschichtlaminat 237 gleichzeitig die Funktion einer Schaftmontagesohle 233 übernimmt. Die Figur 28 zeigt eine weitere Ausführungsform des Schuhsohlenverbundes 105.

Bei den in den Figuren 22 bis 27 gezeigten beiden Ausführungsformen weist der Schuh 101 in Übereinstimmung mit den Figuren 13 und 14 a - c einen Schaft 103 auf, der eine außen befindliche Obermateriallage 211, eine innen befindliche Futterlage 213 und eine dazwischen befindliche wasserdichte, wasserdampfdurchlässige Schaftfunktionsschichtlage 215, beispielsweise in Form einer Membran, aufweist. Die Schaftfunktionsschichtlage 215 kann im Verbund mit der Futterlage 213 als 2-Lagen Laminat vorliegen oder als 3-Lagen Laminat, wobei die Schaftfunktionsschichtlage 215 eingebettet ist zwischen der Futterlage 213 und einer textilen Abseite 214. Das obere Schaftende 217 ist je nachdem, ob die Schnittebene der in den Figuren 22 und 26 dargestellten Querschnittsansicht im Vorderfußbereich oder im Mittelfußbereich liegt, geschlossen bzw. zur Fußeinschlüpföffnung 113 (Figur 13) offen. Am sohlenseitigen Schaftendbereich 219 ist der Schaft 103 mit einem Schaftboden 221 versehen, mit dem das sohlenseitige untere Ende des Schaftes 103 geschlossen ist. Der Schaftboden 221 weist eine Schaftmontagesohle 233 auf, die mit dem sohlenseitigen Schaftendbereich 219 verbunden ist, was bei den Ausführungsformen gemäß den Figuren 22 bis 27 mittels einer Strobelnaht 235 geschieht.

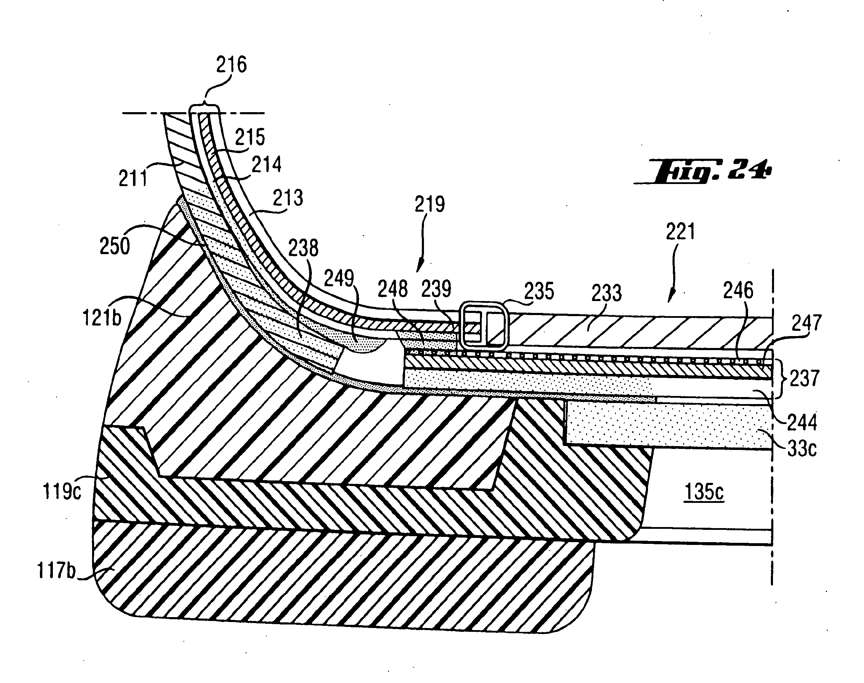

Im Fall der Ausführungsform der Figuren 22, 24 und 25 ist zusätzlich zu der Schaftmontagesohle 233 ein Schaftbodenfunktionsschichtlaminat 237 vorgesehen, das unterhalb der Schaftmontagesohle 233 angeordnet ist und sich über den Umfang der Schaftmontagesohle 233 hinaus erstreckt bis in den sohlenseitigen Schaftendbereich 219. Das Schaftbodenfunktionsschichtlaminat 237 kann ein 3-Lagen Laminat sein, wobei die Schaftbodenfunktionsschicht 247 eingebettet ist zwischen einer textilen Abseite und einer weiteren textilen Lage. Es ist ebenso möglich, die Schaftbodenfuntionsschicht 247 nur mit der textilen Abseite zu versehen. Im sohlenseitigen Schaftendbereich 219 ist die Obermateriallage 211 kürzer als die Schaftfunktionsschichtlage 215, so dass dort ein Überstand der Schaftfunktionsschichtlage 215 gegenüber der Obermateriallage 211 geschaffen ist und dort die außenseitige Oberfläche der Schaftfunktionsschichtlage 215 freiliegt. Hauptsächlich zur mechanischen Zugentlastung des Überstandes der Schaftfunktionsschichtlage 215 ist zwischen dem sohlenseitigen Ende 238 der Obermateriallage 211 und dem sohlenseitigen Ende 239 der Schaftfunktionsschichtlage 215 ein Netzband 241 oder anderes für Dichtmaterial durchdringbares Material angeordnet, dessen von der Strobelnaht 235 abliegende Längsseite mittels einer ersten Naht 243 mit dem sohlenseitigen Ende 238 der Obermateriallage 211, nicht jedoch mit der Schaftfunktionsschichtlage 215 verbunden ist, und dessen zur Strobelnaht 235 weisende Längsseite mittels der Strobelnaht 235 mit dem sohlenseitigen Ende 239 der Schaftfunktionsschichtlage 215 und mit der Schaftmontagesohle 233 verbunden ist. Das Netzband 241 besteht vorzugsweise aus einem monofilen Material, so dass es keine Wasserleitfähigkeit aufweist. Das Netzband wird vorzugsweise für angspritzte Sohlen verwendet. Wird der Sohlenverbund mittels Kleber an dem Schaft befestigt, kann anstelle des Netzbandes das sohlenseitige Ende 238 der Obermateriallage 211 mittels Klebers 249 am Zwickschaftfunktionsschichtlaminat befestigt werden (Figur 24). In dem Umfangsbereich 245, in welchem das Schaftbodenfunktionsschichtlaminat 237 über den Umfang der Schaftmontagesohle 233 hinüberragt, ist zwischen dem Schaftbodenfunktionsschichtlaminat 237 und dem sohlenseitigen Ende 239 der Schaftfunktionsschichtlage 215 ein Dichtungsmaterial 248 angeordnet, mittels welchem eine wasserdichte Verbindung zwischen dem sohlenseitigen Ende 239 der Schaftfunktionsschichtlage 215 und dem Umfangsbereich 245 des Schaftbodenfunktionsschichtlaminates 237 hergestellt wird, wobei diese Dichtung durch das Netzband 241 hindurch wirkt.

Die in den Figuren 22, 25 bis 27 gezeigte Netzbandlösung dient dazu, zu verhindern, dass Wasser, welches an der Obermateriallage 211 herabläuft oder herabkriecht, bis zur Strobelnaht 235 gelangt und von dort in den Schuhinnenraum vordringt. Dies wird verhindert dadurch, dass das sohlenseitige Ende 238 der Obermateriallage 211 in einem Abstand vom sohlenseitigen Ende 239 der Schaftfunktionsschichtlage 215 endet, der mit dem nicht wasserleitendenden Netzband 241 überbrückt ist, und im Bereich des Überstandes der Schaftfunktionsschichtlage 215 das Dichtungsmaterial 248 vorgesehen ist. Die Netzbandlösung ist an sich bekannt aus dem Dokument EP 0298360 B1.

Anstelle der Netzbandlösung können alle in der Schuhindustrie verwendeten Verbindungstechnologien zum vorzugsweise wasserdichten Verbinden des Schaftes mit dem Schaftboden verwendet werden. Die dargestellte Netzbandlösung in den Figuren 22, 25-27 und die gezwickte Lösung in Figur 24 sind beispielhafte Ausführungsformen.

Der in Figur 26 gezeigte Schaftaufbau stimmt mit dem in Figur 22 gezeigten Schaftaufbau überein, mit der Ausnahme, dass dort keine separate Schaftmontagesohle 233 vorgesehen ist, sondern dass das Schaftbodenfunktionsschichtlaminat 237 gleichzeitig die Funktion einer Schaftmontagesohle 233 mit übernimmt. Dem gemäß ist der Umfang des Schaftbodenfunktionsschichtlaminates 237 der in Figur 26 gezeigten Ausführungsform über die Strobelnaht 235 mit dem sohlenseitigen Ende 239 der Schaftfunktionsschichtlage 215 verbunden und ist das Dichtungsmaterial 248 im Bereich dieser Strobelnaht 235 so aufgebracht, dass der Übergang zwischen dem sohlenseitigen Ende 239 der Schaftfunktionsschichtlage 215 und dem Umfangsbereich des Schaftbodenfunktionsschichtlaminates 237 insgesamt abgedichtet ist, einschließlich der Strobelnaht 235.

Bei beiden Ausführungsformen der Figuren 22 und 26 kann ein gleich aufgebauter Schuhsohlenverbund 105 verwendet werden, wie er in diesen beiden Figuren gezeigt ist. Da in den Figuren 22 und 26 Schnittansichten des Schuhs 101 im Vorderfußbereich gezeigt sind, handelt es sich in diesen Figuren um eine Schnittdarstellung des Vorderfußbereichs des Schuhsohlenverbundes 105, also um eine Schnittdarstellung entlang einer quer verlaufenden Schnittlinie durch das für den Vorderfußbereich bestimmte Stabilisierungseinrichtungteil 119c mit dem in dessen Öffnung 135c eingelegten Schuhstabilisierungsmaterialstücks 33c.

Dem gemäß zeigt die Schnittdarstellung des Schuhsohlenverbundes 105 das Stabilisierungseinrichtungteil 119c mit seiner Öffnung 135c, einen diese Öffnung überbrückenden Steg des zugehörigen Stabilisierungsgitters 137c, den nach oben hochstehenden Begrenzungsrand 129b, das in diesen Begrenzungsrand 129b eingelegte Schuhstabilisierungsmaterialstück 33c, das Dämpfungssohlenteil 121 b auf der oberen Seite des Stabilisierungseinrichtungteil 119c und das Laufsohlenteil 117b auf der Unterseite des Stabilisierungseinrichtungsteils 119c. Insofern stimmen beide Ausführungsformen der Figuren 22 und 26 überein.

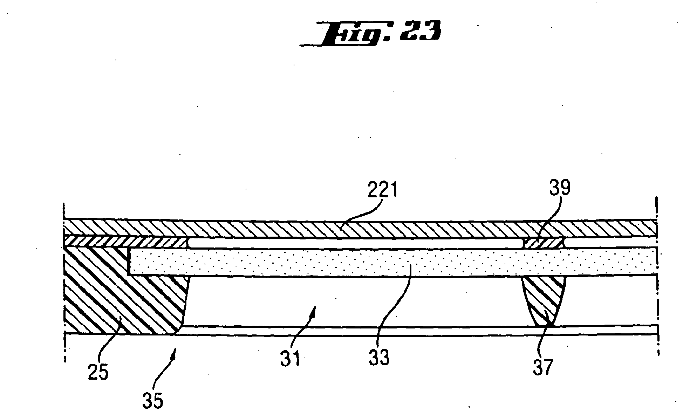

Figur 23 zeigt ein Beispiel einer Barriereeinheit 35, bei welcher ein Stück Schuhstabilisierungsmaterial 33 an seiner Unterseite mit mindestens einem Stabilisierungssteg 37 versehen ist. Dabei ist auf dem dem Stabilisierungssteg 37 entgegengesetzten Oberflächenbereich des Schuhstabilisierungsmaterials 33 ein Klebstoff 39 aufgebracht, über welchen das Schuhstabilisierungsmaterial 33 mit dem wasserdichten, wasserdampfdurchlässigen Schaftboden 221 verbunden ist, der sich außerhalb des Schuhsohlenverbundes oberhalb der Barriereeinheit 35 befindet. Dabei ist der Klebstoff 39 derart aufgebracht, dass der Schaftboden 221 mit dem Schuhstabilisierungsmaterial 33 überall dort unverbunden bleibt, wo sich an der Unterseite des Schuhstabilisierungsmaterials 33 kein Material des Stabilisierungssteges 37 befindet. Auf diese Weise wird sichergestellt, dass die Wasserdampfdurchlässigkeitsfunktion des Schaftbodens 115 durch Klebstoff 39 nur dort gestört wird, wo das Schuhstabilisierungsmaterial 33 aufgrund der Anordnung des Stabilisierungssteges 37 ohnehin keinen Wasserdampftransport zulassen kann.

Während in den Figuren 22 und 26 der jeweilige Schuhsohlenverbund 105 noch getrennt von dem je zugehörigen Schaft 103 dargestellt ist, zeigen die Figuren 24, 25 und 27 in vergrößerter Darstellung und ausschnittsweise diese beiden Ausführungsformen mit an die Schaftunterseite angesetztem Schuhsohlenverbund 105. In diesen vergrößerten Ansichten ist die Schaftbodenfunktionsschicht 247 des Schaftbodenfunktionsschichtlaminates 237 in allen Ausführungsformen vorzugsweise eine mikroporöse Funktionsschicht, beispielsweise aus gerecktem Polytetrafluorethylen (ePTFE). Wie bereits weiter oben bemerkt worden ist, können aber auch andersartige Funktionsschichtmaterialien eingesetzt werden.

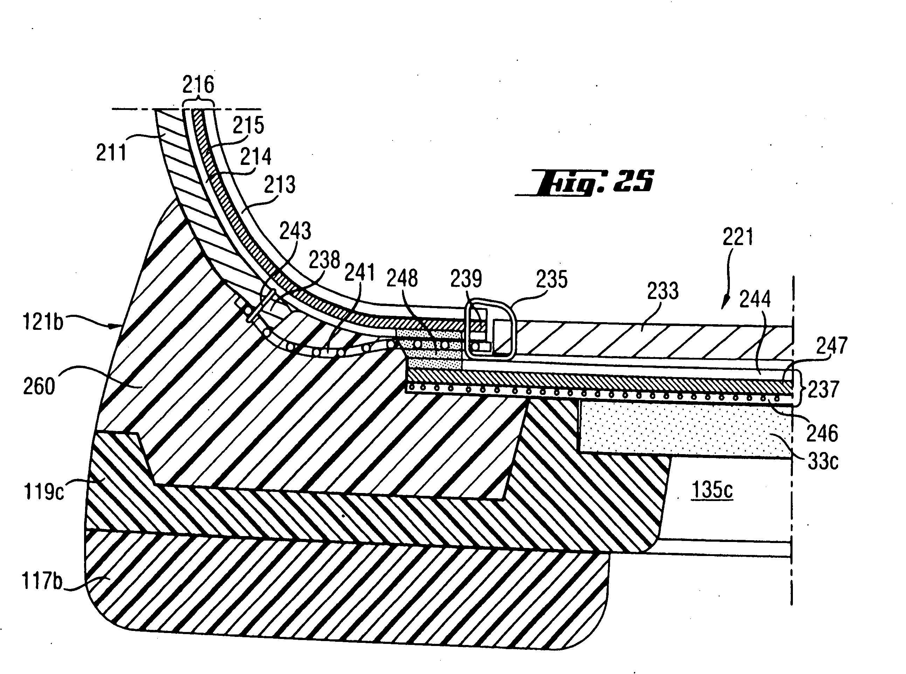

In diesen vergrößerten ausschnittsweisen Ansichten der Figuren 24, 25 und 27 ist besonders gut die mit dem Dichtungsmaterial 248 geschaffene wasserdichte Verbindung zwischen den sich überlappend gegenüberliegenden Enden der Schaftfunktionsschichtlage 215 und der Schaftbodenfunktionsschicht 247 zu sehen. Außerdem ist deutlicher in den Figuren 25 und 27 als in den Figuren 22 und 26 die Einbeziehung der einen Netzbandlängsseite in die Strobelnaht 235 zu sehen.

Figur 24 zeigt eine Ausführungsform, bei welcher der erfindungsgemäße Sohlenverbund 105 mittels Befestigungsklebstoff 250 an dem Schaftboden 221 befestigt ist. Das Schaftfunktionsschichtlaminat 216 ist ein dreilagiger Verbund mit einer textilen Lage 214, einer Schaftfunktionsschicht 215 und einer Futterlage 213. Das sohlenseitige Ende 238 der Obermateriallage 211 ist mit Zwickklebstoff 249 am Schaftfunktionsschichtlaminat 216 befestigt.

Der Befestigungsklebstoff 250 ist flächig auf der Oberfläche des Sohlenverbundes aufgebracht mit Ausnahme der Durchbrechungen 135c und des im Bereich der Durchbrechungen 135c angeordneten Schuhstabilisierungsmaterials 33c. Beim Befestigen des Sohlenverbundes an dem Schaftboden 221 dringt der Befestigungsklebstoff 250 bis an und teilweise in das Schaftfunktionsschichtlaminat 216 sowie an und teilweise in Randbereiche des Schaftbodenfunktionsschichtlaminats 237.

Figur 25 ist eine Darstellung des Schaftaufbaus gemäß Figur 22 mit einem angespritzten Schuhsohlenverbund. Dabei ist das dreilagige Schaftbodenfunktionsschichtlaminat 237 so an der Schaftmontagesohle 233 befestigt, dass die textile Abseite 246 zum Sohlenverbund zeigt. Das ist vorteilhaft, weil das Sohlenspritzmaterial 260 leichter in die dünne textile Abseite eindringen und sich dort verankern kann und so eine feste Verbindung zur Schaftbodenfunktionsschicht 237 hin geschaffen ist.

Die Barriereeinheit mit der mindestens einen Öffnung 135c und dem mindestens einem Stück Schuhstabilisierungsmaterial 33c liegt als vorgefertigte Einheit vor und wird vor dem Spritzvorgang in die Spritzform eingelegt. Das Sohlenspritzmaterial 260 wird entsprechend an den Schaftboden angespritzt, wobei es durch das Netzband 241 hindurch bis zum Schaftfunktionsschichtlaminat 216 vordringt.

Figur 27 zeigt eine vergrößerte und ausschnittsweise Ansicht der Figur 26. Der Sohlenverbund 105 zeigt eine weitere Ausführungsform der erfindungsgemäßen Barriereeinheit 35. Die Schuhstabilisierungseinrichtung 119c bildet einen Teil des Sohlenverbundes 105 und erstreckt sich hier nicht bis zum äußeren Umfang des Sohlenverbundes 105. Über der Öffnung 135c ist ein Stück Schuhstabilisierungsmaterial 33c so angebracht, dass das Material 33c auf dem umlaufenden durchgehend plan ausgebildeten Begrenzungsrand 129 der Öffnung 135c aufliegt. Der Sohlenverbund 105 kann mit Befestigungsklebstoff 250 am Schaftboden 221 befestigt werden oder mit Sohlenspritzmaterial 260 angespritzt werden.

Figur 27 zeigt auch deutlich, dass bei der Ausführungsform, bei welcher das Schaftbodenfunktionsschichtlaminat 237 die Funktion der Schaftmontagesohle mit übernimmt, Laminat unmittelbar über der gegenüberliegenden Oberseite des Schuhstabilisierungsmaterialstücks 33c zu liegen kommt, was besonders vorteilhaft ist. Denn in diesem Fall kann sich zwischen dem Schaftbodenfunktionsschichtlaminat 237 und dem Schuhstabilisierungsmaterialstück 33c kein Luftpolster bilden, welches den Wasserdampfabtransport beeinträchtigen könnte, und befindet sich das Schuhstabilisierungsmaterialstück 33c und speziell die Schaftbodenfunktionsschicht 247 besonders dicht an der Fußsohle des Benutzers eines solchen Schuhs, was den Wasserdampfabtransport erleichtert, der vom bestehenden Temperaturgefälle zwischen Schuhinnenraum und Schuhaußenraum mitbestimmt wird.

Zur Herstellung von erfindungsgemäßem Schuhwerk werden zunächst der Schuhsohlenverbund 105 und der Schaft 103 bereitgestellt, wobei der sohlenseitige untere Bereich des Schaftes noch offen sein kann. Dann wird der Schaft 103 an seinem sohlenseitigen Schaftendbereich 219 mit einem Schaftboden 221 versehen, der entweder nur durch das Schaftbodenfunktionsschichtlaminat 237 oder durch solches Schaftbodenfunktionsschichtlaminat 237 und eine separate Schaftmontagesohle 233 gebildet wird. Alternativ kann ein Schaft bereitgestellt werden, der von Anfang an im sohlenseitigen Schaftendbereich 219 mit einem Schaftbodenfunktionsschichtlaminat 237 versehen ist. Danach wird der Schuhsohlenverbund 105 am sohlenseitigen Schaftende 219 befestigt, was entweder durch Verkleben des Schuhsohlenverbundes 105 mit dem unteren Schaftende mittels eines Klebstoffs 250 geschehen kann oder dadurch, dass ein Schuhsohlenverbund 105 an die Unterseite des Schaftes angespritzt wird. Die Verbindung zwischen unterem Schaftende und Schuhsohlenverbund 105 geschieht so, dass die Schaftbodenfunktionsschicht 239 mit dem Schuhstabilisierungsmaterial 33c des Schaftbodenverbundes 221 mindestens im Bereich der Durchbrechungen des Schuhsohlenverbundes 105 unverbunden bleiben. Dadurch bleibt die Fähigkeit der Schaftbodenfunktionsschicht 239 hinsichtlich Wasserdampfdurchlässigkeit im Bereich der Durchbrechungen 31 voll erhalten, ohne durch Klebstoffpunkte oder andere Hindernisse für den Abtransport von Wasserdampf beeinträchtigt zu werden.

Figur 28 ist eine Darstellung einer weiteren Ausführungsform des erfindungsgemäßen Sohlenverbundes. Die perspektivische Darstellung zeigt mehrere Öffnungen 135 in der Schuhstabilisierungseinrichtung 119, die von dem Zehenbereich bis zum Fersenbereich des Sohlenverbundes angeordnet sind. Somit ist das Stabilisierungsmaterial 33 ebenfalls im Fersenbereich vorhanden.

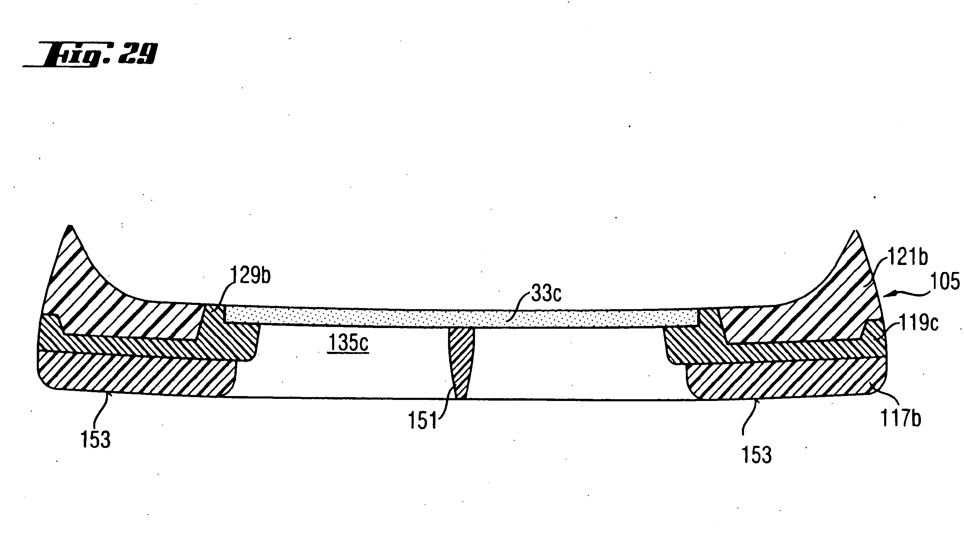

Figur 29 ist eine Darstellung einer weiteren Ausführungsform des erfindungsgemäßen Sohlenverbundes in Querschnittdarstellung. Der Sohlenverbund 105 dieser Ausführungsform ist dem in Figur 26 dargestellten Sohlenverbund recht ähnlich. Der Sohlenverbund 105 gemäß Figur 29 weist eine Laufsohle auf, wobei in dieser Figur ein Querschnitt durch den Fußballenbereich des Sohlenverbundes 105 gezeigt ist und daher ein Querschnitt durch den entsprechenden Laufsohlenteil 117b. Die Lehre gemäß Figur 29 gilt aber auch für die anderen Bereiche des Sohlenverbundes 105, also auch für dessen Fußmittelteil und dessen Fersenteil. Der Laufsohlenteil 117b weist eine Lauffläche 153 auf, welche beim Laufen den begangenen Boden berührt. Die Schnittdarstellung des Sohlenverbundes 105 von Figur 29 zeigt das Stabilisierungseinrichtungsteil 119c mit seiner Öffnung 135c, dessen nach oben hochstehenden Begrenzungsrand 129b, das in den Begrenzungsrand 129b eingelegte Schuhstabilisierungsmaterialstück 33c, das Dämpfungssohlenteil 121 b auf der oberen Seite des Stabilisierungseinrichtungsteils 119c und das Laufsohlenteil 117b auf der Unterseite des Stabilisierungseinrichtungsteils 119c. An der Unterseite des Schuhstabilisierungsmaterialstücks 33c ist ein Abstützelement 151 angebracht. Dieses erstreckt sich von der laufflächenzugewandten Seite des Schuhstabilisierungsmaterials 33 aus bis zum Niveau der Lauffläche 153, derart, dass sich das Schuhstabilisierungsmaterial 33 beim Laufen über das Abstützelement 151 auf dem begangenen Boden abstützt. Das heißt, dass ein in Figur 29 unteres freies Ende des Abstützelementes 151 dann, wenn der mit diesem Sohlenverbund versehene Schuh auf einer Oberfläche steht, diese Oberfläche berührt. Durch diese Abstützung durch das Abstützelement 151 wird beim Laufen auf einer solchen Oberfläche das Schuhstabilisierungsmaterialstück 33c im Wesentlichen in seiner in Figur 29 gezeigten Lage gehalten, sodass dessen Durchbiegen unter der Last eines Benutzers des Schuhs vermieden wird. In der Öffnung 135c können mehrere Abstützelemente 151 angeordnet werden, um die Abstützwirkung für das Schuhstabilisierungsmaterialstücks 33c zu erhöhen und über dessen Flächenerstreckung gleichmäßiger zu machen.

Die Abstützfunktion kann auch dadurch erhalten werden, dass man den in Figur 26 gezeigten Stabilisierungssteg 137c gleichzeitig als Abstützelement 151 ausbildet, indem man den Stabilisierungssteg 137c nicht in einem Abstand von der als Lauffläche dienenden Unterseite des Laufsohlenteils 117b enden lässt sondern bis zum Niveau dieser Unterseite hin verlängert. Damit verleiht man dem Stabilisierungssteg 137c die Doppelfunktion einer Stabilisierung und einer Abstützung des Schuhstabilisierungsmaterialstücks 33c. Beispielsweise können die in Figur 11 dargestellten Stabilisierungsstege 37c oder das in 12 dargestellte Stabilisierungsgitter 37d gänzlich oder teilweise als Abstützelemente 151 ausgebildet werden.

Mit dem erfindungsgemäßen Sohlenaufbau wird ein hoher Wasserdampfdurchlässigkeitswert erreicht, weil einerseits großflächige Durchbrechungen in dem Schuhsohlenverbund 105 vorgesehen sind und diese mit Material von hoher Wasserdampfdurchlässigkeit geschlossen sind und weil außerdem mindestens im Bereich der Durchbrechungen keine den Wasserdampfaustausch behindernde Verbindung zwischen dem wasserdampfdurchlässigen Schuhstabilisierungsmaterial 33 und der Schaftbodenfunktionsschicht besteht und eine solche Verbindung höchstens in den Bereichen außerhalb der Durchbrechungen des Schuhsohlenverbundes 105 vorhanden ist, die nicht aktiv am Wasserdampfaustausch beteiligt sind, wie beispielsweise die Randbereiche des Schuhsohlenverbundes 105. Außerdem ist bei dem erfindungsgemäßen Aufbau die Schaftbodenfunktionsschicht dicht am Fuß angeordnet, was zu einer beschleunigten Wasserdampfabfuhr führt.

Bei dem Schaftbodenfunktionsschichtlaminat 237 kann es sich um ein Mehrlagenlaminat mit zwei, drei oder noch mehr Lagen handeln. Enthalten ist mindestens eine Funktionsschicht mit mindestens einem textilen Träger für die Funktionsschicht, wobei die Funktionsschicht durch eine wasserdichte, wasserdampfdurchlässige Membran 247 gebildet sein kann, die vorzugsweise mikroporös ist.

Testmethoden

Dicke

Die Dicke des erfindungsgemäßen Schuhstabilisierungsmaterials wird nach DIN ISO 5084 (10/1996) getestet.

Durchstichfestigkeit

Die Durchstichfestigkeit eines textilen Flächengebildes kann gemessen werden mit einer von der EMPA (Eidgenössischen Materialprüfungs- und Forschungsanstalt) verwendeten Messmethode unter Verwendung eines Prüfgerätes der Instron-Zug-prüfmaschine (Modell 4465). Mittels eines Stanzeisens wird ein rundes Textilstück mit 13 cm Durchmesser ausgestanzt und auf einer Stützplatte befestigt, in der sich 17 Bohrungen befinden. Ein Stempel, an dem 17 dornenähnliche Nadeln (Nähnadel Typ 110/18) befestigt sind, wird mit einer Geschwindigkeit von 1000mm/min so weit heruntergefahren, dass die Nadeln duch das Textilstück hindurch in die Bohrungen der Stützplatte eintauchen. Die Kraft zum Durchstechen des Textilstückes wird mittels einer Messdose (eines Kraftaufnehmers) gemessen. Das Ergebnis wird aus einer Probenanzahl von drei Proben ermittelt.

Wasserdichte Funktionsschicht

Als "wasserdicht" wird eine Funktionsschicht angesehen, gegebenenfalls einschließlich an der Funktionsschicht vorgesehener Nähte, wenn sie einen Wassereingangsdruck von mindestens $1x10^4$ Pa gewährleistet. Vorzugsweise gewährleistet das Funktionsschichtmaterial einen Wassereingangsdruck von über $1x10^5$ Pa. Dabei ist der Wassereingangsdruck nach einem Testverfahren zu messen, bei dem destilliertes Wasser bei $20\pm2°C$ auf eine Probe von 100 $cm^2$ der Funktionsschicht mit ansteigendem Druck aufgebracht wird. Der Druckanstieg des Wassers beträgt $60\pm3$ cm Ws je Minute. Der Wassereingangsdruck entspricht dann dem Druck, bei dem erstmals Wasser auf der anderen Seite der Probe erscheint. Details der Vorgehensweise sind in der ISO-Norm 0811 aus dem Jahre 1981 vorgegeben.

Wasserdichter Schuh

Ob ein Schuh wasserdicht ist, kann z.B. mit einer Zentrifugenanordnung der in der US-A-5 329 807 beschriebenen Art getestet werden.

Wasserdampfdurchlässigkeit des Schuhstabilisierungsmaterial

Die Wasserdampfdurchlässigkeitswerte erfindungsgemäßen Schuhstabilisierungsmaterials werden mit Hilfe der sogenannten Bechermethode nach DIN EN ISO 15496 (09/2004) gestestet.

Wasserdampfdurchlässigkeit der Funktionsschicht

Als "wasserdampfdurchlässig" wird eine Funktionsschicht dann angesehen, wenn sie eine Wasserdampfdurchlässigkeitszahl Ret von unter 150 $m2 \times Pa \times W^{-1}$ aufweist. Die Wasserdampfdurchlässigkeit wird nach dem Hohenstein-Hautmodell getestet. Diese Testmethode wird in der DIN EN 31092 (02/94) bzw. ISO 11092 (1993) beschrieben.

Wasserdampfdurchlässigkeit des erfindungsgemäßen Schuhbodenaufbau

Bei einer Ausführungsform erfindungsgemäßen Schuhwerks mit einem Schuhbodenaufbau, der den Schuhsohlenverbund und die darüber befindliche Schaftbodenfunktionsschicht oder das Schaftbodenfunktionsschichtlaminat umfasst, weist der Schuhbodenaufbau eine Wasserdampfdurchlässigkeit (MVTR von Moisture Vapor Transmission Rate) im Bereich von 0,4 g/h bis 3 g/h auf, der im Bereich von 0,8 g/h bis 1,5 g/h liegen kann und bei einer praktischen Ausführungsform 1 g/h ist.

Das Maß der Wasserdampfdurchlässigkeit des Schuhbodenaufbaus kann mit der in dem Dokument EP 0396716 B1 angegebenen Messmethode ermittelt werden, die zur Messung der Wasserdampfdurchlässigkeit eines gesamten Schuhs konzipiert worden ist. Zur Messung der Wasserdampfdurchlässigkeit nur des Schuhbodenaufbaus eines Schuhs kann die Messmethode gemäß EP 0 396 716 B1 ebenfalls eingesetzt werden, indem mit dem in Fig. 1 der EP 0 396 716 B1 gezeigten Messaufbau in zwei aufeinanderfolgenden Messszenarien gemessen wird, nämlich einmal der Schuh mit einem wasserdampfdurchlässigen Schuhbodenaufbau und ein anderes Mal der ansonsten identische Schuh mit einem wasserdampfundurchlässigen Schuhbodenaufbau. Aus der Differenz zwischen den beiden Messwerten kann dann der Anteil der Wasserdampfdurchlässigkeit ermittelt werden, welcher auf die Wasserdampfdurchlässigkeit des wasserdampfdurchlässigen Schuhbodenaufbaus zurück geht.

Bei jedem Messszenario wird unter Verwendung der Messmethode gemäß EP 0 396 716 B1 vorgegangen, nämlich mit folgender Schrittfolge:

a) Konditionierung des Schuhs dadurch, dass dieser in einem klimatisierten Raum (23°C, 50% relative Luftfeuchtigkeit) für mindestens 12 Stunden belassen wird.
b) Entfernung der Einlegesohle (Fußbett).
c) Auskleidung des Schuhs mit an den Schuhinnenraum angepasstem wasserdichten, wasserdampfdurchlässigen Auskleidungsmaterial, welches im Bereich der Fußeinschlüpföffnung des Schuhs mit einem wasserdichten, wasserdampfundurchlässigen Dichtungsstopfen (beispielsweise aus Plexiglas und mit einer aufblasbaren Manschette) wasserdicht und wasserdampfdicht verschließbar ist.
d) Einfüllen von Wasser in das Auskleidungsmaterial und Verschließen der Fußeinschlüpföffnung des Schuhs mit dem Dichtungsstopfen.
e) Vorkonditionierung des mit Wasser gefüllten Schuhs dadurch, dass dieser während einer vorbestimmten Zeitspanne (3 Stunden) ruhen gelassen wird, wobei die Temperatur des Wassers konstant auf 35°C gehalten wird. Das Klima des umgebenden Raums wird ebenfalls konstant gehalten bei 23 °C und 50% relativer Luftfeuchtigkeit. Der Schuh wird während des Tests frontal von einem Ventilator angeblasen mit im Mittel mindestens 2 m/s bis 3 m/s Windgeschwindigkeit (zur Zerstörung einer sich um den stehenden Schuh herum bildenden ruhenden Luftschicht, welche einen erheblichen Widerstand gegen den Wasserdampfdurchlass verursachen würde).
f) erneutes Wiegen des mit dem Dichtungsstopfen abgedichteten, mit Wasser gefüllten Schuhs nach der Vorkonditionierung (ergibt Gewicht m2 [g]).
g) erneutes ruhen Lassen und eigentliche Testphase von 3 Stunden unter den gleichen Bedingungen wie bei Schritt e).
h) erneutes Wiegen des abgedichteten, mit Wasser gefüllten Schuhs (ergibt Gewicht m3 [g]) nach der Testphase von 3 Stunden.
i) Bestimmung der Wasserdampfdurchlässigkeit des Schuhs aus der während der Testzeit von 3 h durch den Schuh entwichenen Wasserdampfmenge (m2-m3) [g] gemäß der Beziehung M = (m2-m3) [g]/3[h].

Nachdem beide Messszenarien durchgeführt worden sind, bei denen man die Wasserdampfdurchlässigkeitswerte einerseits für den gesamten Schuh mit wasserdampfdurchlässigem Schuhbodenaufbau (Wert A) und andererseits für den gesamten Schuh mit wasserdampfundurchlässigem Schuhbodenaufbau (Wert B) gemessen hat, kann der Wasserdampfdurchlässigkeitswert für den wasserdampfdurchlässigen Schuhbodenaufbau alleine aus der Differenz A-B ermittelt werden.

Wichtig ist es, während der Messung der Wasserdampfdurchlässigkeit des Schuhs mit dem wasserdampfdurchlässigen Schuhbodenaufbaus zu vermeiden, dass der Schuh bzw. dessen Sohle direkt auf einer geschlossenen Unterlage steht. Dies kann man durch Anheben des Schuhs oder durch Abstellen des Schuhs auf einer Gitterkonstruktion erreichen, sodass dafür gesorgt ist, dass der Ventilationsluftstrom auch oder besser unterhalb der Laufsohle entlang strömen kann.

Es ist sinnvoll, bei jedem Testaufbau für einen bestimmten Schuh Wiederholungsmessungen durchzuführen und Mittelwerte daraus zu betrachten, um die Messstreuung besser einschätzen zu können. Es sollten mit dem Messaufbau für jeden Schuh mindestens zwei Messungen durchgeführt werden. Bei allen Messungen sollte von einer natürlichen Schwankung der Messergebnisse von $\pm$ 0,2 g/h um den tatsächlichen Wert z.B. 1 g/h ausgegangen werden. Für dieses Beispiel könnten somit für den identischen Schuh Messwerte zwischen 0,8 g/h und 1,2 g/h erhalten werden. Einflussfaktoren für diese Schwankungen könnten beispielsweise von der den Test durchführenden Person oder von der Abdichtungsgüte am oberen Schaftrand kommen. Durch Mitteilung mehrerer Einzelmesswerte für den selben Schuh kann ein exakteres Bild des tatsächlichen Wertes gewonnen werden.

Alle Werte für die Wasserdampfdurchlässigkeit des Schuhbodenaufbaus basieren auf einem normal geschnürten Herrenhalbschuh der Größe 43 (französische Maß), wobei diese Größengebung nicht genormt ist und Schuhe unterschiedlicher Hersteller verschieden ausfallen können.

Für die Messszenarien gibt es grundsätzlich zwei Möglichkeiten:

1. Messung von Schuhen mit wasserdampfdurchlässigem Schaft, aufweisend

    1.1 einen wasserdampfdurchlässigen Schuhbodenaufbau;
    1.2. einen wasserdampfundurchlässigen Schuhbodenaufbau;

2. Messung von Schuhen mit wasserdampfundurchlässigem Schaft, aufweisend

    2.1 einen wasserdampfdurchlässigen Schuhbodenaufbau;
    2.2. einen wasserdampfundurchlässigen Schuhbodenaufbau.

Dehnung und Reißfestigkeit

Ein Dehnungs- und Reißfestigkeitstest wurde nach DIN EN ISO 13934-1 von 04/1999 durchgeführt. Es wurden dabei 3 anstatt 5 Proben je Richtung genommen. Der Abstand der Klemmbacken betrug 100 mm bei allen Proben.

Abrasion

Hinsichtlich der Abriebfestigkeit für die Abrasionsmessungen zum Erhalt der Abrasionswerte in der Vergleichstabelle sind zwei Messmethoden angewendet worden. Zum einen wurde mit einem Martindale-Abrasionstester getestet (in der Tabelle "Abrasion Carbon"), bei welchem gemäß der Norm DIN EN ISO 124947 -1; -2; (04/1999) die zu testende Probe gegen Sandpapier gescheuert wird. Dabei sind drei Abweichungen von der Norm vorgenommen worden: Erstens wurde im Probenhalter Sandpapier der Körnung 180 plus Standardschaumstoff eingespannt. Zweitens wurde im Probentisch Standardfilz plus die Prüfprobe eingespannt. Drittens wurde die Probe all 700 Touren inspiziert und das Sandpapier ausgewechselt. Zum anderen wurde die Abriebfestigkeit bei nassen Proben getestet (in der Tabelle "Abrasion nass") nach DIN EN ISO 12947 -1; -2; -4; mit der Abweichung von der Norm, dass der Probentisch mit Standardfilz und Standardwolle alle 12.800 Touren mit destilliertem Wasser gesättigt wurden.

Bei den Abrasionstests werden Reibbewegungen entsprechend von Lissajous-Figuren durchgeführt. Lissajous-Figuren stellen ein sich bei entsprechender Wahl des Verhältnisses der beteiligten Frequenzen periodisch wiederholendes Gesamtbild dar, das sich aus relativ zueinander versetzten Einzelfiguren zusammensetzt. Der Durchlauf durch eine dieser Einzelfiguren wird im Zusammenhang mit dem Abrasionstest als eine Tour bezeichnet. Bei allen Materialien 1 bis 5 ist gemessen worden, nach wie vielen Touren in dem jeweiligen Material erste Löcher aufgetreten sind, das jeweilige Material also durchgescheuert war. In der Vergleichstabelle finden sich für jedes der Materialien zwei Tourenwerte, die aus je zwei Abrasionstests mit dem jeweils gleichen Material entstanden sind.

<u>Härte</u>

Härteprüfung nach Shore A und Shore D (DIN 53505, ISO 7619-1, DIN EN ISO 868)

<u>Prinzip:</u>

Unter der Härte nach Shore wird der Widerstand gegen das Eindringen eines Körpers bestimmter Form unter definierter Federkraft verstanden. Die Shore-Härte ist die Differenz zwischen dem Zahlenwert 100 und der durch den Skalenwert 0,025 mm dividierten Eindringtiefe des Eindringkörpers in mm unter Wirkung der Prüfkraft.

Bei der Prüfung nach Shore A wird als Eindringkörper ein Kegelstumpf mit einem Öffnungswinkel von 35° und bei Shore D ein Kegel mit einem Öffnungswinkel von 30° und einem Spitzenradius von 0,1 mm verwendet. Die Eindringkörper bestehen aus poliertem, gehärtetem Stahl.

Messgleichung:

$$HS = 100 - \frac{h}{0,025}$$

$$F = 550 + 75 HSA$$

$$F = 445 HSD$$

h in mm, F in mN

Anwendungsbereich:

Wegen der unterschiedlichen Auflösung der beiden Shore-Härte-Verfahren in verschiedenen Härtebereichen sind Werkstoffe mit einer Shore A-Härte > 80 zweckmäßigerweise nach Shore D und Werkstoffe mit einer Shore D-Härte < 30 nach Shore A zu prüfen.

| Härteskala | Anwendung |
|---|---|
| Shore A | Weicher Gummi, sehr weiche Kunststoffe |
| Shore D | Harter Gummi, weiche Thermoplaste |

**Definitionen**

<u>Schuhstabilisierungsmaterial:</u>

Material, welches dem Schuh bzw. den im Schuh vorhandenen Teilen/Materialien, wie Obermaterial, Sohle, Membrane, mechanischen Schutz und Widerstand gegenüber Verformung als auch gegen das Hindurchdringen von äußeren Gegenständen/Fremdkörpern/Objekten z.B. durch die Sohle ermöglicht unter Beibehaltung eines hohen Wasserdampftransports, d.h. eines hohen Klimakomforts im Schuh. Der mechanische Schutz und Widerstand gegenüber Verformung beruht hauptsächlich auf der geringen Dehnung des Schuhstabilisierungsmaterials.

<u>Faserverbund:</u>

Oberbegriff für einen Verbund von Fasern jeglicher Art. Darunter soll fallen Leder, aus Metallfasern bestehende Vliese oder Gewirke, unter Umständen auch in Mischung mit textilen Fasern, ebenfalls Garne und aus Garnen hergestellte Textilien (Flächengebilde).

Der Faserverbund muss mindestens zwei Faserkomponenten aufweisen. Bei diesen Komponenten kann es sich um Fasern (z.B. Stapelfasern), Filamente, Faserelemente, Garne, Litzen u.ä. handeln. Jede Faserkomponente besteht entweder aus einem Material oder enthält mindestens zwei unterschiedliche Materialanteile, wobei der eine Faseranteil bei einer niedrigeren Temperatur erweicht/schmilzt als der andere Faseranteil (Bico). Derartige Bico-Fasern können eine Kern-Mantel Struktur - hier wird ein Kernfaseranteil mit einem Mantelfaseranteil ummantelt -, eine Seite an Seite Struktur oder eine Inseln-im-Meer Struktur aufweisen. Derartige Prozesse und Maschinen hierfür sind erhältlich von Rieter Ingolstadt, Deutschland und/oder Schalfhorst in Mönchengladbach, Deutschland.

Die Fasern können einfach gesponnen, multifilamentär oder mehrere gerissene Fasern mit miteinander verschlungenen ausgefransten Enden sein.

Die Faserkomponenten können gleichmäßig oder ungleichmäßig im Faserverbund verteilt sein.

Der gesamte Faserverbund muss vorzugsweise temperaturstabil bei mindestens 180°C sein.

Eine einheitliche und glatte Oberfläche auf mindestens einer Seite des Faserverbundes wird mittels Drucks und Temperatur erreicht. Diese geglättete Oberfläche zeigt nach "unten" zum Untergrund/Boden, damit wird erreicht, dass an der glatten Oberfläche Partikel/Fremdkörper besser abprallen oder einfacher abgewiesen werden.

Die Eigenschaften der Oberfläche bzw der Gesamtstruktur des Faserverbundes bzw Stabilisierungsmaterials sind abhängig von den gewählten Fasern, der Temperatur, dem Druck und dem Zeitraum, über welchen der Faserverbund mit Temperatur und Druck beaufschlagt wurde.

Vlies:

Hier werden die Fasern auf ein Förderband abgelegt und verwirrt.

Gelege:

Eine Fischnetz- oder Sieb-Konstruktion der Fasern. Siehe EP 1 294 656 von Dupont.

Filz:

Wollfasern, die sich durch mechanische Einwirkungen öffnen und verhaken.

Gewebe:

Mit Kett- und Schussfäden hergestellte Flächengebilde.

Gewebe und Gestricke:

ein durch Maschen gebildetes Flächengebilde.

Schmelztemperatur:

Die Schmelztemperatur ist die Temperatur, bei welcher die Faserkomponente oder der Faseranteil flüssig wird. Unter der Schmelztemperatur versteht man auf dem Gebiet der Polymer- bzw. Faserstrukturen einen schmalen Temperaturbereich, in dem die kristallinen Bereiche der Polymer- bzw. Faserstruktur aufschmelzen und das Polymer in den flüssigen Zustand übergeht. Er liegt über dem Erweichungstemperaturbereich und ist eine wesentliche Kenngröße für teilkristalline Polymere. Geschmolzen bedeutet die Änderung des Aggregatzustandes der Faser bzw. Teile der Faser bei einer charakteristischen Temperatur von fest zu viskos/fließfähig.

Erweichungstemperaturbereich:

Die zweite Faserkomponente bzw. der zweite Faseranteil muss nur weich/plastisch, nicht aber flüssig werden. D.h. die verwendete Erweichungstemperatur liegt unterhalb der Schmelztemperatur, bei welchem die Komponente/der Anteil zerfließt. Vorzugsweise ist die Faserkomponente oder sind Teile davon derart erweicht, dass die temperaturstabilere Komponente in den erweichten Teilen eingebettet bzw. eingebunden ist.

Der erste Erweichungstemperaturbereich der ersten Faserkomponente liegt höher als der zweite Erweichungstemperaturbereich der zweiten Faserkomponente bzw. des zweiten Faseranteils der zweiten Faserkomponente. Die untere Grenze des ersten Erweichungsbereiches kann unterhalb der oberen Grenze des zweiten Erweichungsbereiches liegen.

Klebeerweichungstemperatur:

Temperatur bei welcher es zu einer Erweichung der zweiten Faserkomponente oder des zweiten Faseranteils kommt, bei welcher deren Material Klebewirkung entfaltet, derart, dass mindestens ein Teil der Fasern der zweiten Faserkomponente miteinander soweit durch Verklebung thermisch verfestigt wird, dass es zu einer Verfestigungsstabilisierung des Faserverbundes kommt, die über derjenigen Verfestigung liegt, die man bei einem Faserverbund mit den gleichen Materialien für die beiden Faserkomponenten durch eine rein mechanische Verfestigung, beispielsweise durch Vernadelungsverfestigung des Faserverbundes, erhält. Die Klebeerweichungstemperatur kann auch so gewählt werden, dass eine Erweichung der Fasern der zweiten Faserkomponente in solchem Maße erfolgt, dass eine Verklebung nicht nur von Fasern der zweiten Faserkomponente miteinander sondern zusätzlich ein teilweises oder gänzliches Ummanteln von einzelnen Stellen der Fasern des ersten Faserverbundes mit erweichtem Material der Fasern des zweiten Faserverbundes entsteht, also eine teilweise oder gänzliche Einbettung solcher Stellen von Fasern des ersten Faserverbundes in Material von Fasern der zweiten Faserkomponente, dass eine entsprechend erhöhte Stabilisierungsverfestigung des Faserverbundes entsteht.

Temperaturstabilität:

Falls die Stabilisierungseinrichtung angespritzt wird, muss das Schuhstabilisierungsmaterial temperaturstabil sein für das Anspritzen. Gleiches gilt für ein Anspritzen (ca. 170°C - 180°C) bzw. Vulkanisieren der Schuhsohle. Falls die Stabilisierungseinrichtung angespritzt werden soll, muss das Schuhstabilisierungsmaterial eine derartige Struktur besitzen, dass die Stabilisierungseinrichtung in die Struktur des Schuhstabilisierungsmaterials zumindest eindringen bzw gegebenenfalls diese durchdringen kann.

Funktionsschicht/Membran:

Die Schaftbodenfunktionsschicht und gegebenenfalls die Schaftfunktionsschicht können durch eine wasserdichte, wasserdampfdurchlässige Beschichtung oder durch eine wasserdichte, wasserdampfdurchlässige Membran gebildet sein, bei der es sich entweder um eine mikroporöse Membran oder um eine keine Poren aufweisende Membran handeln kann. Bei einer Ausführungsform der Erfindung weist die Membran gerecktes Polytetrafluorethylen (ePTFE) auf.

Geeignete Materialien für die wasserdichte, wasserdampfdurchlässige Funktionsschicht sind insbesondere Polyurethan, Polypropylen und Polyester, einschließlich Polyetherester und deren Laminate, wie sie in den Druckschriften US-A-4,725,418 und US-A-4,493,870 beschrieben sind. Besonders bevorzugt wird jedoch gerecktes mikroporöses Polytetrafluorethylen (ePTFE), wie es beispielsweise in den Druckschriften US-A-3,953,566 sowie US-A-4,187,390 beschrieben ist, und gerecktes Polytetrafluorethylen, welches mit hydrophilen Imprägniermitteln und/oder hydrophilen Schichten versehen ist; siehe beispielsweise die Druckschrift US-A-4,194,041. Unter einer mikroporösen Funktionsschicht wird eine Funktionsschicht verstanden, deren durchschnittliche Porengröße zwischen etwa 0,2 $\mu$m und etwa 0,3 $\mu$m liegt.

Die Porengröße kann mit dem Coulter Porometer (Markenname) gemessen werden, das von der Coulter Electronics, Inc., Hialeath, Florida, USA, hergestellt wird.

Barriereeinheit:

Die Barriereeinheit wird durch das Schuhstabilisierungsmaterial und gegebenenfalls durch die Stabilisierungseinrichtung in Form von mindestens einem Steg und/oder einem Rahmen gebildet. Die Barriereeinheit kann in Form eines vorgefertigten Bauteils vorliegen.

Schuhsohlenverbund:

Der Schuhsohlenverbund besteht aus Schuhstabilisierungsmaterial und mindestens einer Stabilisierungseinrichtung und/oder mindestens einer Laufsohle sowie gegebenenfalls weiteren Sohlenlagen, wobei das Schuhstabilisierungsmaterial die mindestens eine sich durch die Schuhsohlenverbunddicke hindurch erstreckende Durchbrechung verschließt.

Durchbrechung:

Eine Durchbrechung ist der Bereich des Schuhsohlenverbundes, durch den Wasserdampftransport möglich ist. Die Laufsohle und die Stabilisierungseinrichtung weisen je Durchgangsöffnungen auf, die insgesamt eine Durchbrechung durch die Gesamtdicke des Schuhsohlenverbundes bilden. Die Durchbrechung wird somit durch die Schnittfläche der beiden Durchgangsöffnungen gebildet. Möglicherweise vorhandene Stege sind innerhalb des Umfangsrandes der jeweiligen Durchbrechung angeordnet und bilden keine Begrenzung der Durchbrechung. Die Fläche einer Durchbrechung wird abzüglich der Fläche aller sie überquerenden Stege ermittelt, da diese Stegfläche den Wasserdampftransport blockiert und somit keine Durchbrechungsfläche darstellt.

Stabilisierungseinrichtung:

Die Stabilisierungseinrichtung wirkt als zusätzliche Stabilisierung des Schuhstabilisierungsmaterials, ist derart geformt und an dem Schuhstabilisierungsmaterial angebracht, dass die Wasserdampfdurchlässigkeit des Schuhstabilisierungsmaterials, wenn überhaupt dann nur geringfügig beeinflusst ist. Das wird dadurch erreicht, dass nur wenig Fläche des Schuhstabilisierungsmaterials von der Stabilisierungseinrichtung bedeckt ist. Vorzugsweise ist die Stabilisierungseinrichtung nach unten zum Boden gerichtet. In erster Linie geht es bei der Stabilisierungseinrichtung nicht um eine Schutzfunktion, sondern darum, als Stabilisierung zu dienen.

Öffnung der Stabilisierungseinrichtung:

Die mindestens eine Öffnung der Stabilisierungseinrichtung wird begrenzt durch deren mindestens einen Rahmen. Die Fläche einer Öffnung wird abzüglich der Fläche aller sie überquerenden Stege ermittelt.

Schuh:

Fußbekleidung bestehend aus einem Schuhsohlenverbund und einem geschlossenen Oberteil (Schaft).

Schuhboden:

Der Schuhboden umfaßt alle Schichten unterhalb des Fußes.

Thermische Aktivierung:

Die thermische Aktivierung erfolgt durch Beaufschlagung des Faserverbundes mit Energie, welche zur Erhöhung der Temperatur des Materials führt bis zum Erweichungstemperaturbereich.

Wasserdurchlässiger Schuhsohlenverbund:

Getestet wird ein Schuhsohlenverbund gemäß Zentrifugenanordnung der in der US-A-5 329 807 beschriebenen Art. Vor dem Testen muß sichergestellt werden, daß eine eventuell vorhandene Schaftbodenfunktionsschicht wasserdurchlässig gemacht wird. Von einem wasserdurchlässigen Schuhsohlenverbund geht man aus, wenn dieser Test nicht bestanden ist. Gegebenenfalls wird der Test mit gefärbter Flüssigkeit durchgeführt, um den Weg der Flüssigkeit durch den Schuhsohlenverbund kenntlich zu machen.

Laminat:

Laminat ist ein Verbund bestehend aus einer wasserdichten, wasserdampfdurchlässigen Funktionsschicht mit mindestens einer textilen Lage. Die mindestens eine textile Lage, auch Abseite genannt, dient hauptsächlich dem Schutz der Funktionsschicht während deren Verarbeitung. Man spricht hier von einem 2-Lagen Laminat. Ein 3-Lagen Laminat besteht aus einer wasserdichten, wasserdampfdurchlässigen Funktionsschicht, die eingebettet ist zwischen zwei textile Lagen, wobei zwischen diesen Lagen ein punktförmiger Klebstoff aufgebracht sein kann.

Wasserdichte Funktionsschicht / Barriereeinheit:

Als "wasserdicht" wird eine Funktionsschicht angesehen, gegebenenfalls einschließlich an der Funktionsschicht vorgesehener Nähte, wenn sie einen Wassereingangsdruck von mindestens $1 \times 10^4$ Pa gewährleistet.

Oberseite des Schuhsolenverbundes:

Unter der Oberseite des Schuhsohlenverbundes ist die Oberfläche des Schuhsohlenverbundes zu verstehen, welcher dem Schaftboden gegenüber liegt.

Laufsohle:

Unter Laufsohle ist der Teil des Schuhsohlenverbundes zu verstehen, der den Boden / Untergrund berührt bzw. den hauptsächlichen Kontakt zum Boden / Untergrund herstellt:

Bezugszeichenliste

| 1 | Faserverbund |
|---|---|
| 2 | erste Faserkomponente |
| 3 | zweite Faserkomponente |
| 4 | Kern |
| 5 | Mantel |
| 6 | Verbindung |
| 21 | Schuhsohlenverbund |
| 23 | Laufsohle |
| 25 | Schuhstabilisierungseinrichtung |
| 27 | Öffnung Laufsohle |
| 29 | Öffnung Schuhstabilisierungseinrichtung |
| 31 | Durchbrechung |
| 33 | Schuhstabilisierungsmaterial |
| | 33a Schuhstabilisierungsmaterial |
| | 33b Schuhstabilisierungsmaterial. |
| | 33c Schuhstabilisierungsmaterial |
| | 33d Schuhstabilisierungsmaterial |
| 35 | Barriereeinheit |
| 37 | Stabilisierungssteg |
| | 37a Einzelsteg |
| | 37b Einzelsteg |
| | 37c Einzelsteg |
| | 37d Stabilisierungsgitter |
| 39 | Klebstoff |
| 43 | Kreisfläche |
| 101 | Schuh |
| 103 | Schaft |
| 105 | Schuhsohlenverbund |
| 107 | Vorderfußbereich |
| 109 | Mittelfußbereich |
| 111 | Fersenbereich |
| 113 | Fußeinschlupföffnung |
| 115 | Schaftboden |
| 117 | mehrteilige Laufsohle |
| | 117a mehrteilige Laufsohle Fersenbereich |
| | 117b mehrteilige Laufsohle Fußballenbereich |
| | 117c mehrteilige Laufsohle Zehenbereich |
| 119 | Stabilisierungseinrichtung |
| | 119a Fersenbereich |
| | 119b Mittelfußbereich |
| | 119c Vorderfußbereich |
| 121 | Dämpfungssohlenteil |
| | 121a Dämpfungssohlenteil Fersenbereich |
| | 121b Dämpfungssohlenteil Mittelfußbereich |

Öffnungen Laufsohle:

123a    Fersenbereich
123b    Mittelfußbereich
123c    Vorderfußbereich

125    Durchgangsöffnung im Fersenbereich119a der Stabilisierungseinrichtung Öffnungen Dämpfungssohlenteil:
127a Fersenbereich
127b Mittelfußbereich
127c Vorderfußbereich

Begrenzungsrand der Schuhstabilisierungseinrichtung:

129a    Mittelfußbereich

129b    Vorderfußbereich

129c    Vorderfußbereich

131    Vorsprünge

133    Vertiefungen Öffnungen Stabilisierungseinrichtung:

135a    Mittelfußbereich

135b    Vorderfußbereich

135c    Vorderfußbereich

135d    Vorderfußbereich

Stabilisierungsgitter:

137a    Mittelfußbereich

137b    Vorderfußbereich

137c    Vorderfußbereich

137d    Vorderfußbereich

139    Verbindungselement
141    Seitenflügel
143    Flügelteile Stabilisierungseinrichtung
145    Stabilisierungsrippe
147    Rahmen der Stabilisierungseinrichtung
150    Auflagevorsprung
151    Abstützelement
153    Lauffläche
211    Obermateriallage
213    Futterlage
214    textile Lage
215    Schaftfunktionsschichtlage
216    Schaftfunktionsschichtlaminat
217    Oberes Schaftende
219    Sohlenseitiger Schaftendberich
221    Schaftboden
233    Schaftmontagesohle
235    Strobelnaht
237    Schaftbodenfunktionsschichtlaminat

| 238 | Sohlenseitiges Ende der Obermateriallage |
| 239 | Sohlenseitiges Ende der Schaftfunktionsschichtlage |
| 241 | Nahtband |
| 243 | erste Naht |
| 244 | textile Lage |
| 245 | Umfangsbereich |
| 246 | textile Abseite |
| 247 | Membrane |
| 248 | Dichtungsmaterial |
| 249 | Zwickklebstoff |
| 250 | Befestigungsklebstoff |
| 260 | Sohlenspritzmaterial |

**VERGLEICHSTABELLE**

| Materialart | Sohlensplitleder | Vlies nur nadelverfestigt | Vlies nur nadelverfestigt | Vlies nadelverfestigt und thermisch verfestigt | **Vlies nadelverfestigt, thermisch verfestigt; thermische Oberflächenverpressung mit 3,3 N/cm$^2$/230 °C/10 s** |
|---|---|---|---|---|---|
| Materialnummer | Material 1 | Material 2 | Material 3 | Material 4 | **Material 5** |
| Material | 100 % Leder | 100 % PES | 100 % PES | PES + Bico-PES insgesamt 100 % PES | **PES + Bico-PES insgesamt 100 % PES** |
| Flächengewicht |g/m$^2$| | 2.383 | 206 | 125 | 398 | **397** |
| Dicke [mm] | 3,36 | 2,96 | 2,35 | 1,71 | **1,46** |
| MVTR [g/m$^2$ 24h] (1) | 3.323 | 8.086 | 9.568 | 9.459 | **9.881** |
| Längsdehnung bei 50 N [%] | 1 | 34 | 55 | 0 | **0** |
| Längsdehnung bei 100 N [%] | 2 | 48 | 79 | 1 | **0** |
| Längsdehnung bei 150 N [%] | 2 | 59 | 104 | 1 | **0** |
| Reißlängskraft [N] | 3.106 | 324 | 152 | 641 | **821** |
| Reißlängsdehnung [%] | 40 | 94 | 107 | 26 | **27** |
| Querdehnung bei 50 N [%] | 0 | 32 | 46 | 0 | **0** |
| Querdehnung bei 100 N [%] | 1 | 43 | 63 | 1 | **0** |
| Querdehnung bei 150 N [%] | 1 | 52 | 75 | 1 | **0** |
| Reißquerkraft [N] | 4.841 | 410 | 252 | 884 | **742** |
| Reißquerdehnung [%] | 43 | 92 | 99 | 35 | **32** |
| Durchstichfestigkeit [N] | 857 | 5 | 6 | 317 | **291** |
| Abrasion nass [Touren] (2) | 25.600/30.100 | 20.600/20.600 | 24.700/16.500 | 70.200/70.200 | **614.000/704.000** |
| Abrasion Carbon [Touren] (2) | ca. 35.000 | 1.570/1.600 | 452/452 | 7.700/7.700 | **14.000/15.400** |
| (1) DIN EN ISO 15496 (09/2004) (2) DIN EN ISO 12947-1;-2 (04/1999) | | | | | |

EP 1 991 728 B1

33

**Herren Halbschuh Gr. 42/43 (franz)**
Testdauer : 3 Stunden
Alle Schälte identisch aufgebaut, d.h. Streunung nur durch natürliche Streuung der Materiallen (Leder, textil etc.)
Schaft kann wasserdicht ausgebildet sein
Konslante Wassermenge in allen Schuhen
Einlegesohlen für den lost entfernt
Schuhbodenaufbau bei Nr 2 und 3 vergleichbar - Bei Nr 1 ist lediglich die Laufsohle geschlossen, d.h. sie weist keine Öffnungen auf

| Schuh-Nr. | Wiederholungsmessungen | Sohle wasserdampf-durchlässig JA / NEIN | Luftstrom über dem Schaft und unter der Sohle | Gewicht m2 [g] vor Testbeginn | Gewicht m3 [g] nach Testende | Gesamtschuhwasserdampf-durchlässigkeit MVTR = (m2 - m3)/Testdauer [g/h] | Mittelwert der Wiederholungsmessungen pro Schuhnummer MVTR [g/h] | Wasserdampfdurchlässigkeit des Schuhbodenaufbaus [g/h] |
|---|---|---|---|---|---|---|---|---|
| 1 | 1 | Nein | Ja | 1106,66 | 1097,55 | 3,0 | | |
| 1 | 2 | Nein | Ja | 1103,58 | 1095,03 | 2,8 | | |
| 1 | 3 | Nein | Ja | 1102,98 | 1094,63 | 2,8 | | |
| 1 | 4 | Nein | Ja | 1112,44 | 11102,54 | 3,3 | | |
| 1 | 5 | Nein | Ja | 1143,9 | 1133,75 | 3,4 | 3,1 | 0 |
| 1 | 6 | Nein | Ja | 1108,56 | 1098,42 | 3,4 | | |
| 1 | 7 | Nein | Ja | 1102,62 | 1094,15 | 2,8 | | |
| 1 | 8 | Nein | Ja | 1101,78 | 1093,16 | 2.9 | | |
| 1 | 9 | Nein | Ja | 1117,55 | 1107,66 | 3,2 | | |
| 2 | 1 | Ja | Ja | 1179,2 | 1167,06 | 4,0 | | |
| 2 | 2 | Ja | Ja | 1156,7 | 1144,85 | 4,0 | | |
| 2 | 3 | Ja | Ja | 1144,65 | 1132,97 | 3,9 | | |
| 2 | 4 | Ja | Ja | 1159,46 | 1148,3 | 3,7 | 4,0 | 4,0-3,1 = 0,9 |
| 2 | 5 | Ja | Ja | 1153,56 | 1142,5 | 3,7 | | |
| 2 | 6 | Ja | Ja | 1175,88 | 1163,36 | 4,2 | | |
| 2 | 7 | Ja | Ja | 1173,78 | 1160,84 | 4,3 | | |
| 2 | 8 | Ja | Ja | 1165,54 | 1153,05 | 4,2 | | |
| 3 | 1 | Ja | Ja | 1153 | 1140 | 4,3 | | |
| 3 | 2 | Ja | Ja | 1168,42 | 1156,17 | 4,1 | 4,3 | 4,3 - 3,1 = 1,2 |
| 3 | 3 | Ja | Ja | 1160,6 | 1146,98 | 4,5 | | |
| 3 | 4 | Ja | Ja | 1183,8 | 1170,5 | 4,4 | | |

**Patentansprüche**

1. Wasserdampfdurchlässige Barriereneinheit (35), aufgebaut mit mindestens einem Stück eines Schuhstabilisierungsmaterials (33), wobei das Schuhstabilisierungsmaterial einen Faserverbund (1) mit einer ersten Faserkomponente (2) und einer zwei Faseranteile (4, 5) aufweisenden zweiten Faserkomponente (3) aufweist, wobei:

   die erste Faserkomponente (2) eine erste Schmelztemperatur und einen darunter liegenden ersten Erweichungstemperaturbereich aufweist und ein zweiter Faseranteil (5) der zweiten Faserkomponente (3) eine zweite Schmelztemperatur und einen darunter liegenden zweiten Erweichungstemperaturbereich aufweist;
   die erste Schmelztemperatur und der erste Erweichungstemperaturbereich höher sind als die zweite Schmelztemperatur und der zweite Erweichungstemperaturbereich;
   der erste Faseranteil (4) der zweiten Faserkomponente (3) eine höhere Schmelztemperatur und eine höhere darunter liegende Erweichungstemperatur als der zweite Faseranteil (5) aufweist;
   und der Faserverbund (1) infolge thermischer Aktivierung des zweiten Faseranteils (5) der zweiten Faserkomponente (3) mit einer im zweiten Erweichungstemperaturbereich liegenden Klebeerweichungstemperatur thermisch verfestigt ist unter Aufrechterhaltung von Wasserdampfdurchlässigkeit im thermisch verfestigten Bereich; und wobei die Barriereneinheit (35) ausgebildet ist mindestens als Teil eines wasserdampfdurchlässigen Schuhsohlenverbundes (105) mit mindestens einer sich durch die Schuhsohlenverbunddicke hindurch erstreckenden Durchbrechung (31) und die Barriereeinheit (35) derart ausgebildet ist, dass deren Schuhstabilisierungsmaterial (33) nach Erstellung des Schuhsohlenverbundes (105) dessen mindestens eine Durchbrechung (31) als Barriere gegen ein Hindurchdrücken von Fremdkörpern durch die mindestens eine Durchbrechung (31) und somit durch den Schuhsohlenverbund (105) verschließt.

2. Barriereneinheit (35) nach Anspruch 1, wobei der Faserverbund (1) ein mechanisch verfestigtes Vlies ist.

3. Barriereneinheit (35) nach Anspruch 1 oder 2, wobei mindestens die zweite Faserkomponente (3) eine Kern-Mantel-Struktur aufweist und der zweite Faseranteil den Mantel (5) bildet.

4. Barriereneinheit (35) nach einem der Ansprüche 1 bis 3, deren Schuhstabilisierungsmaterial über mindestens einen Teil seiner Dicke thermisch verfestigt ist.

5. Barriereneinheit (35) nach nach einem der Ansprüche 1 bis 4, deren Schuhstabilisierungsmaterial über mindestens einen Teil seiner Dicke thermisch verfestigt ist und an mindestens einer Oberfläche mittels Drucks und Temperatur oberflächenglättend verpresst ist.

6. Barriereneinheit (35) nach einem der Ansprüche 1 bis 5, aufweisend einen Faserverbund (1) mit zwei Faserkomponenten, wobei:

   die erste Faserkomponente (2) und die beiden Faseranteile der zweiten Faserkomponente aus Polyester bestehen;
   die zweite Faserkomponente (3) entsprechend Anspruch 3 eine Kem-Mantel-Struktur aufweist, deren Kern (4) durch den ersten Faseranteil und deren Mantel (5) durch den zweiten Faseranteil gebildet ist;
   und der Faserverbund (1) ein vemadeltes Vlies ist, das an mindestens einer seiner Oberflächen mittels Drucks und Temperatur verpresst ist.

7. Barriereeinheit (35) nach einem der Ansprüche 1 bis 6, wobei mindestens eine Stabilisierungseinrichtung (119) dem mindestens einen Stück des Schuhstabilisierungsmaterials (33) zugeordnet ist.

8. Barriereneinheit (35) nach Anspruch 7, deren Stabilisierungseinrichtung (119) mit mindestens einem Stabilisierungssteg (37) aufgebaut ist, der auf mindestens einer Oberfläche des Schuhstabilisierungsmaterials (33) ängeordnet ist und die Fläche der Öffnung (135) mindestens teilweise überquert.

9. Wasserdampfdurchlässiger Schuhsohlenverbund (105), ausgebildet für Schuhwerk, mit mindestens einer sich durch die Schuhsohlenverbunddicke hindurch erstreckenden Durchbrechung (31), die mittels Schuhstabilisierungsmaterials (33) verschlossen ist, das einen Faserverbund (1) mit einer ersten Faserkomponente (2) und einer zwei Faseranteile (4, 5) aufweisenden zweiten Faserkomponente (3) aufweist, wobei:

die erste Faserkomponente (2) eine erste Schmelztemperatur und einen darunter liegenden ersten Erweichungstemperaturbereich aufweist und ein zweiter Faseranteil (5) der zweiten Faserkomponente (3) eine zweite Schmelztemperatur und einen darunter liegenden zweiten Erweichungstemperaturbereich aufweist;
die erste Schmelztemperatur und der erste Erweichungstemperaturbereich höher sind als die zweite Schmelztemperatur und der zweite Erweichungstemperaturbereich;
der erste Faseranteil (4) der zweiten Faserkomponente (3) eine höhere Schmelztemperatur und eine höhere darunter liegende Erweichungstemperatur als der zweite Faseranteil (5) aufweist;
und der Faserverbund (1) infolge thermischer Aktivierung des zweiten Faseranteils (5) der zweiten Faserkomponente (3) mit einer im zweiten Erweichungstemperaturbereich liegenden Klebeerweichungstemperatur thermisch verfestigt ist unter Aufrechterhaltung von Wasserdampfdurchlässigkeit im thermisch verfestigten Bereich.

10. Schuhsohlenverbund (105) nach Anspruch 9, dessen Barriereeinheit (35) gemäß einem der Ansprüche 1 bis 8 ausgebildet ist.

11. Schuhsohlenverbund (105) nach Anspruch 9 oder 10, mit einer Lauffläche (153),
wobei dem Schuhstabilisierungsmaterial (33) in der Durchbrechung bzw. in mindestens einer der Durchbrechungen (33a, 33b, 33c) wenigstens ein Abstützelement (151) zugeordnet ist, das sich von der laufflächenzugewandten Seite des Schuhstabilisierungsmaterials (33) aus bis zum Niveau der Lauffläche (153) erstreckt, derart, dass sich das Schuhstabilisierungsmaterial (33) beim Laufen über das Abstützelement (151) auf dem begangenen Boden abstützt.

12. Schuhwerk mit einem Schuhsohlenverbund (105) nach einem der Ansprüche 9 bis 11,
aufweisend einen Schaft (103), der an einem sohlenseitigen Schaftendbereich (219) mit einer wasserdichten und wasserdampfdurchlässigen Schaftbodenfunktionsschicht (247) versehen ist, wobei der Schuhsohlenverbund (105) mit dem mit der Schaftbodenfunktionsschicht (247) versehenen Schaftendbereich (219) derart verbunden ist, dass die Schaftbodenfunktionsschicht (247) wenigstens im Bereich der mindestens einen Durchbrechung (31) mit dem Schuhstabilisierungsmaterial (33) unverbunden ist.

13. Schuhwerk nach Anspruch 12, bei welchem der Schaft (103) mit mindestens einem Schaftmaterial aufgebaut ist, wobei das Schaftmaterial wenigstens im Bereich des sohlenseitigen Schaftendbereichs (219) eine wasserdichte Schaftfunktionsschicht (215) aufweist und wobei zwischen der Schaftfunktionsschicht (215) und der Schaftbodenfunktionsschicht (247) eine wasserdichte Abdichtung (248) besteht.

14. Verfahren zur Herstellung von Schuhwerk mit einem wasserdampfdurchlässigen Schuhsohlenverbund (105) nach einem der Ansprüche 9 bis 11 und einem Schaft (103), der an einem sohlenseitigen Schaftendbereich (219) mit einer wasserdichten und wasserdampfdurchlässigen Schaftbodenfunktionsschicht (247) versehen ist, mit folgenden Verfahrensschritten:

a) es werden der Schuhsohlenverbund (105) und der Schaft (103) bereitgestellt;
b) der Schaft (103) wird an dem sohlenseitigen Schaftendbereich (219) mit einer wasserdichten und wasserdampfdurchlässigen Schaftbodenfunktionsschicht (247) versehen;
c) der Schuhsohlenverbund (105) und der mit der Schaftbodenfunktionsschicht (247) versehene sohlenseitigen Schaftendbereich (219) werden miteinander derart verbunden, dass die Schaftbodenfunktionsschicht (247) wenigstens im Bereich der mindestens einen Durchbrechung (31) mit dem Schuhstabilisierungsmaterial (33) unverbunden bleibt.

15. Verfahren nach Anspruch 14, zur Herstellung von Schuhwerk, dessen Schaft (103) mit einer Schaftfunktionsschicht (215) versehen ist,
wobei zwischen der Schaftfunktionsschicht (215) und der Schaftbodenfunktionsschicht (247) eine wasserdichte Verbindung hergestellt wird.

**Claims**

1. A water-vapor-permeable barrier unit (35),
constructed with at least one piece of a shoe-reinforcement material (33), in which the shoe-reinforcement material has a fiber composite with a first fiber component (2) and a second fiber component (3) comprising two fiber parts (4, 5), in which:

the first fiber component (2) has a first melting point and a first softening-temperature range lying beneath it, and a second fiber part (5) of the second fiber component (3) has a second melting point and a second softening-temperature range lying beneath it;

the first melting point and the first softening-temperature range are higher than the second melting point and the second softening-temperature range;

the first fiber part (4) of the second fiber component (3) has a higher melting point and a higher softening-temperature range lying beneath it, than the second fiber part (5);

the fiber composite (1) is thermally bonded, while maintaining water-vapor permeability in the thermally bonded area, as a result of thermal activation of the second fiber part (5) of the second fiber component (3), with an adhesive softening temperature lying in the second softening-temperature range;

and the barrier unit (35) is designed as at least part of a water-vapor-permeable composite shoe sole (105) with at least one through hole (31) extending through the thickness of the composite shoe sole, and the barrier unit (35) is designed in such a way that its shoe-reinforcement material (33),

after preparation of the composite shoe sole (105), closes off its at least one through hole (31) as a barrier against penetration of foreign objects through the at least one through hole (31) and therefore through the composite shoe sole (105).

2. A barrier unit (35) according to claim 1,
in which the fiber composite (1) is a mechanically bonded non-woven material.

3. A barrier unit (35) according to claim 1 or 2,
in which at least the second fiber component (3) has a core-shell structure, and the second fiber part forms the shell (5).

4. A barrier unit (35) according to one of claims 1 through 3,
the shoe-reinforcement material of which is thermally bonded over at least part of its thickness.

5. A barrier unit (35) according to one of claims 1 through 4,
the shoe-reinforcement material of which is thermally bonded over at least part of its thickness and compressed for surface smoothing on at least one surface by means of pressure and temperature.

6. A barrier unit (35) according to one of claims 1 through 5, having a fiber composite (1) with two fiber components, in which:

the first fiber component (2) and the two fiber parts of the second fiber component consist of polyester;
the second fiber component (3), according to claim 3, has a core-shell structure the core (4) of which is formed by the first fiber part and the shell (5) of which is formed by the second fiber part;
and the fiber component (1) is a needled felt that is compressed on at least one of its surfaces by pressure and temperature.

7. A barrier unit (35) according to one of claims 1 through 6,
in which at least one reinforcement device (119) is assigned to the at least one piece of the shoe reinforcement material (33).

8. A barrier unit (35) according to claim 7,
in which the reinforcement device (119) is constructed with at least one reinforcement bar (37), which is arranged on at least one surface of the shoe-reinforcement material (33) and at least partly bridges the area of the opening (135).

9. A water vapor-permeable composite shoe sole (105) designed for footwear with at least one through hole (31) extending through the thickness of the composite shoe sole, which is closed by means of a shoe-reinforcement material (33) that has a fiber composite (1) with a first fiber component (2) and a second fiber component (3) comprising two fiber parts (4, 5), in which:

the first fiber component (2) has a first melting point and a first softening-temperature range lying below it, and a second fiber part (5) of the second fiber component (3) has a second melting point and a second melting-temperature range lying below it;

the first melting point and the first softening-temperature range are higher than the second melting point and the second softening-temperature range;

the first fiber part (4) of the second fiber component (3) has a higher melting point and a higher softening-temperature range lying beneath it, than the second fiber part (5);

and the fiber composite (1) is thermally bonded, while retaining water-vapor permeability in the thermally bonded area, as a result of thermal activation of the second fiber part (5) of the second fiber component (3) with an adhesive softening temperature in the second softening-temperature range.

10. A composite shoe sole (105) according to claim 9, whose shoe-reinforcement material is designed according to one of claims 1 through 8.

11. A composite shoe sole (105) according to claim 9 or 10, with a tread (153), in which at least one support element (151) is assigned to the shoe-reinforcement material (33) in the through hole or in at least one of the through holes (33a, 33b, 33c) that extends from the side of the shoe-reinforcement material (33) facing the tread to the level of the tread (153), so that the shoe-reinforcement material (33), during walking, is supported by the support element (151) on the floor traversed.

12. Footwear with a composite shoe sole (105) according to one of claims 9 through 11, having a shaft (103), which is provided on a shaft end area (219) on the sole side with a waterproof and water-vapor-permeable shaft-bottom functional layer (247), in which the composite shoe sole (105) is connected to the shaft end area (219) provided with the shaft-bottom functional layer (247), so that the shaft bottom functional layer (247) is not connected to the shoe-reinforcement material (33), at least in the area of the at least one through hole (31).

13. Footwear according to claim 12, in which the shaft (103) is constructed with at least one shaft material, in which the shaft material has a waterproof shaft functional layer (215) at least in the area of the shaft-end area (219) on the sole side, and in which between the shaft functional layer (215) and the shaft-bottom functional layer (247), a waterproof seal (248) exists.

14. A method for production of footwear with a water-vapor-permeable composite shoe sole (105) according to one of claims 9 through 11 and a shaft (103) that is provided on a shaft-end area (219) on the sole side with a waterproof and water-vapor-permeable shaft-bottom functional layer (247), with the following process steps:

a) the composite shoe sole (105) and shaft (103) are provided;
b) the shaft (103) is provided on the shaft-end area (219) on the sole side with a waterproof and water-vapor-permeable shaft-bottom functional layer (247);
c) the composite shoe sole (105) and the shaft end area (219) on the sole side provided with the shaft bottom functional layer (247) are joined to each other in such a way that the shaft-bottom functional layer (247) remains unconnected to the shaft-reinforcement material (33), at least in the area of the at least one through hole (31).

15. A method according to claim 14, for production of footwear, whose shaft (103) is provided with a shaft functional layer (215), in which a waterproof connection is produced between the shaft functional layer (215) and the shaft-bottom functional layer (247).

**Revendications**

1. Unité barrière perméable à la vapeur d'eau (35),
composée d'au moins une pièce d'une matière stabilisante pour chaussures (33), la matière stabilisante pour chaussures comprenant un composite à base de fibres (1) constitué d'un premier type de fibre (2) et d'un second type de fibre (3) présentant deux parties de fibres (4, 5) :

le premier type de fibre (2) présentant une première température de fusion et une première plage de températures d'amollissement inférieure à cette première température de fusion et une seconde partie de fibre (5) du second type de fibre (3) présentant une seconde température de fusion et une seconde plage de températures d'amollissement inférieure à cette seconde température de fusion ;
la première température de fusion et la première plage de températures d'amollissement étant supérieures à la seconde température de fusion et à la seconde plage de températures d'amollissement ;
la première partie de fibre (4) du second type de fibre (3) présentant une température de fusion et une plage de températures d'amollissement inférieure à cette température de fusion supérieures à celles de la seconde partie de fibre (5) ;

et le composite à base de fibres (1) se solidifiant thermiquement sous l'effet d'une activation thermique de la seconde partie de fibre (5) du second type de fibre (3) à une température d'amollissement favorisant l'adhésion située dans la seconde plage de températures d'amollissement, la perméabilité à la vapeur d'eau étant conservée dans la région solidifiée thermiquement ;

et l'unité barrière (35) étant réalisée au moins comme une partie d'une semelle composite perméable à la vapeur d'eau (105) dotée d'au moins une perforation (31) s'étendant à travers l'épaisseur de la semelle composite et l'unité barrière (35) étant réalisée de telle sorte que sa matière stabilisante pour chaussures (33), après l'élaboration de la semelle composite (105), ferme son au moins une perforation (31) pour former une barrière empêchant des corps étrangers de pénétrer à travers la au moins une perforation (31) et donc à travers la semelle composite (105).

2. Unité barrière (35) selon la revendication 1, le composite à base de fibres (1) étant un non-tissé solidifié mécaniquement.

3. Unité barrière (35) selon la revendication 1 ou 2,
au moins le second type de fibre (3) comprenant une structure à noyau et enveloppe et la seconde partie de fibre formant l'enveloppe (5).

4. Unité barrière (35) selon l'une quelconque des revendications 1 à 3,
dont la matière stabilisante pour chaussures est solidifiée thermiquement sur au moins une partie de son épaisseur.

5. Unité barrière (35) selon l'une quelconque des revendications 1 à 4,
dont la matière stabilisante pour chaussures est solidifiée thermiquement sur au moins une partie de son épaisseur et comprimée sur au moins une surface sous l'effet d'une pression et d'une température de manière à présenter une surface lisse.

6. Unité barrière (35) selon l'une quelconque des revendications 1 à 5, comprenant un composite à base de fibres (1) pourvu de deux types de fibre :

le premier type de fibre (2) et les deux parties de fibre du second type de fibre étant constitués de polyester ;
le second type de fibre (3) selon la revendication 3 présentant une structure à noyau et enveloppe dont le noyau (4) est formé par la première partie de fibre et dont l'enveloppe (5) est formée par la seconde partie de fibre ;
et le composite à base de fibres (1) étant un non-tissé aiguilleté comprimé sur au moins une de ses surfaces sous l'effet d'une pression et d'une température.

7. Unité barrière (35) selon l'une quelconque des revendications 1 à 6,
au moins un dispositif de stabilisation (119) étant associé à la pièce ou aux pièces de la matière stabilisante pour chaussures (33).

8. Unité barrière (35) selon la revendication 7, dont le dispositif de stabilisation (119) est composé d'au moins une nervure de stabilisation (37) disposée sur au moins une surface de la matière stabilisante pour chaussures (33) et traversant au moins en partie la surface de l'ouverture (135).

9. Semelle composite perméable à la vapeur d'eau (105), conçue pour une chaussure, comprenant au moins une perforation (31) s'étendant à travers l'épaisseur de la semelle composite et fermée au moyen de la matière stabilisante pour chaussures (33), ladite matière stabilisante pour chaussures comprenant un composite à base de fibres (1) constitué d'un premier type de fibre (2) et d'un second type de fibre (3) présentant deux parties de fibres (4, 5) :

le premier type de fibre (2) présentant une première température de fusion et une première plage de températures d'amollissement inférieure à cette première température de fusion et une seconde partie de fibre (5) du second type de fibre (3) présentant une seconde température de fusion et une seconde plage de températures d'amollissement inférieure à cette seconde température de fusion ;
la première température de fusion et la première plage de températures d'amollissement étant supérieures à la seconde température de fusion et à la seconde plage de températures d'amollissement ;
la première partie de fibre (4) du second type de fibre (3) présentant une température de fusion et une plage de températures d'amollissement inférieure à cette température de fusion supérieures à celles de la seconde partie de fibre (5) ;
et le composite à base de fibres (1) se solidifiant thermiquement sous l'effet d'une activation thermique de la seconde partie de fibre (5) du second type de fibre (3) à une température d'amollissement favorisant l'adhésion située dans la seconde plage de températures d'amollissement, la perméabilité à la vapeur d'eau étant conservée dans la région solidifiée thermiquement.

10. Semelle composite (105) selon la revendication 9, dont l'unité barrière (35) est réalisée conformément à l'une des revendications 1 à 8.

11. Semelle composite (105) selon la revendication 9 ou 10, comprenant une surface de marche (153),
au moins un élément d'appui (151), s'étendant de la face de la matière stabilisante pour chaussures (33) tournée vers la surface de marche jusqu'au niveau de la surface de marche (153), étant associé à la matière stabilisante pour chaussures (33) dans la perforation ou dans au moins une des perforations (33a, 33b, 33c), de telle sorte que la matière stabilisante pour chaussures (33) soit en appui sur le sol parcouru en marchant par l'intermédiaire de l'élément d'appui (151).

12. Chaussure comprenant une semelle composite (105) selon l'une quelconque des revendications 9 à 11, comprenant une tige (103) pourvue sur une zone d'extrémité de tige côté semelle (219) d'une couche fonctionnelle de base de tige étanche à l'eau et perméable à la vapeur (247), la semelle composite (105) étant reliée à la zone d'extrémité de tige (219) pourvue de la couche fonctionnelle de base de tige (219), de telle sorte que la couche fonctionnelle de base de tige (247) ne soit pas reliée à la matière stabilisante pour chaussures (33) au moins dans la zone de la au moins une perforation (31).

13. Chaussure selon la revendication 12, dans laquelle la tige (103) est composée d'au moins une matière de tige, la matière de tige comprenant au moins dans la région de la zone d'extrémité de tige côté semelle (219) une couche fonctionnelle de tige étanche à l'eau (215) et un joint étanche à l'eau (248) étant présent entre la couche fonctionnelle de tige (215) et la couche fonctionnelle de base de tige (247).

14. Procédé de fabrication d'une chaussure comprenant une semelle composite perméable à la vapeur d'eau (105) selon l'une quelconque des revendications 9 à 11 et une tige (103) pourvue sur une zone d'extrémité de base de tige côté semelle (219) d'une couche fonctionnelle de base de tige (247) étanche à l'eau et perméable à la vapeur d'eau, comprenant les étapes suivantes :

a) la semelle composite (105) et la tige (103) sont fournies ;
b) la tige (103) est pourvue sur la zone d'extrémité de tige côté semelle (219) d'une couche fonctionnelle de base de tige (247) étanche à l'eau et perméable à la vapeur d'eau ;
c) la semelle composite (105) et la zone d'extrémité de tige côté semelle (219) pourvue de la couche fonctionnelle de base de tige (247) sont reliées ensemble, de telle sorte que la couche fonctionnelle de base de tige (247) demeure non reliée à la matière stabilisante pour chaussures (33) au moins dans la zone de la ou des perforations (31).

15. Procédé selon la revendication 14, destiné à fabriquer une chaussure dont la tige (103) est pourvue d'une couche fonctionnelle de tige (215), une liaison étanche à l'eau étant établie entre la couche fonctionnelle de tige (215) et la couche fonctionnelle de base de tige (247).

Fig. 1

Fig. 2

Fig. 2a

Fig. 2b

Fig. 3

IIa

Fig. 4

29    21
25
27    31    23

Fig. 5

35    25
33
147

Fig. 6

35
33    25

Fig. 7

33    35
25
37    37

Fig. 8

35    33
25
37    37    37

Fig. 9

33    35
29
25

Fig. 10

21    29    33
25
35
27    31    23

## Fig. 11

37b
43
37a
33
37c

## Fig. 12

43
33
37d

Fig. 13

Fig. 14a

**_Fig. 14·b_**

EP 1 991 728 B1

Fig. 14c

Fig. 15

EP 1 991 728 B1

*Fig. 16*

121

121a

121b

127a

119

125

127b

33a

127c

33b

33c

119a

33d

117

133

129a

133

119b

129c  129b

119c

123a

117a

133

133

105

133

123b

133

133

117b

133

117c  123c  133

50

*Fig. 17*

121b

127c

127b

127a

131 135d
135c 119c
131 135b
137d 139 119b 33a
33d 135a
137c 139
33c 137b 33b 137a

121a

119a
131

123c

117c 123b

131 125 131

117b

105

117a

123a

Fig. 18

Fig. 19

EP 1 991 728 B1

*Fig. 20*

*Fig. 21*

*Fig. 22*

EP 1 991 728 B1

**Fig. 23**

Fig. 24

EP 1 991 728 B1

*Fig. 25*

EP 1 991 728 B1

Fig. 26

EP 1 991 728 B1

Fig. 27

EP 1 991 728 B1

Fig. 28

Fig. 29

EP 1 991 728 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0275644 A2
- EP 0382904 A2
- EP 150672369 A2
- EP 0858270 B1
- DE 10036100 C1
- EP 959704 B1
- WO 2004028284 A1
- DE 20200408539 U1
- WO 2005065479 A1
- EP 1506723 A2
- WO 2005063069 A2
- DE 2279138

- EP 0754414 A2
- US 6723428 B
- US 4725418 A
- US 4493870 A
- US 3953566 A
- US 4187390 A
- US 4194041 A
- EP 0298360 B1
- US 5329807 A
- EP 0396716 B1
- EP 1294656 A